# EUROPEAN PATENT APPLICATION

(11) **EP 4 848 632 A1**
(43) Date of publication of application: **02.12.2026**
(21) Application number: 25767239.4
(22) Date of filing: 26.02.2025
(51) Int. Cl.: H04L 1/00

(54) **DATA PROCESSING METHOD AND TRANSMISSION DEVICE**

(30) Priority: 08.03.2024 CN 202410269781
(71) Applicant: Huawei Technologies Co., Ltd., Shenzhen, Guangdong 518129 (CN)
(72) Inventor: HUANG, Kechao, Shenzhen, Guangdong 518129 (CN); YANG, Xiaoling, Shenzhen, Guangdong 518129 (CN); MA, Huixiao, Shenzhen, Guangdong 518129 (CN)
(74) Representative: Huawei European IPR
(86) International application number: PCT/CN2025/079152
(87) International publication number: WO 2025/185499

(57) **Abstract**

Embodiments of this application disclose a data processing method that can be applied to a high-speed optical transport network. The method includes the following steps: obtaining second bit data based on first bit data having a bit quantity of dᵢₙ, where the second bit data includes dᵢₙ bits in the first bit data, d_{CRC} check bits, and/or d_{PAD} padding bits; scrambling the second bit data to obtain third bit data, where a bit quantity of the third bit data is d_{scr} = dᵢₙ + d_{CP}, and d_{CP} = d_{CRC} + d_{PAD}; then performing probabilistic constellation shaping PCS processing on a first bit subset in a first bit set having a bit quantity of m to obtain a second bit subset, where the first bit set is obtained from the third bit data; and performing FEC encoding and interleaving processing on the second bit subset and a third bit subset in the first bit set other than the first bit subset to obtain a second bit set. This application provides different values of dᵢₙ, m, and d_{CP}, is compatible with an existing 400G network, and has good performance and low costs.

## Description

This application claims priority to Chinese Patent Application No. 202410269781.8, filed with the China National Intellectual Property Administration on March 8, 2024 and entitled "DATA PROCESSING METHOD AND TRANSMISSION APPARATUS", which is incorporated herein by reference in its entirety.

### TECHNICAL FIELD

This application relates to the field of communication technologies, and in particular, to a data processing method and a transmission apparatus.

### BACKGROUND

Driven by continuous advancement in 5G, cloud computing, big data, artificial intelligence, and other technologies, high-speed optical transport networks are evolving toward large capacity, packetization, and intelligence. Coherent optical communication systems use the amplitude, phase, polarization, and frequency of optical waves to carry information. To counter optical signal distortion caused by dispersion, polarization-dependent impairments, noise, nonlinear effects, and other factors during transmission, and to maintain long-haul transmission, the coherent optical communication systems usually need to use efficient forward error correction (Forward Error Correction, FEC) codes to mitigate optical impairments during optical transmission to ensure a low bit error rate during long-haul transmission. For example, the open FEC (OpenFEC) code currently adopted by 400ZR+ and 800ZR is referred to as an OFEC code for short, and an overhead (overhead, OH) of the OFEC code is 15.3%. With soft decision decoding, its pre-FEC performance is approximately 2.0E-2.

To improve spectral efficiency, multi-level quadrature amplitude modulation (Quadrature Amplitude Modulation, QAM), such as 16QAM, 32QAM, 64QAM, or even higher-order QAM, is usually used. In conventional QAM modulation, constellation points (constellation points) on a signal constellation diagram appear with equal probability. Probabilistic constellation shaping (Probabilistic Constellation Shaping, PCS) processing technologies change the occurrence probabilities of constellation points without changing their positions, resulting in a non-uniform distribution that improves system transmission performance. As a type of modulation format optimization technology, PCS offers advantages such as approaching the Shannon limit and being flexible and variable, and has been widely studied and applied.

For an existing 400G long-haul transmission solution using OFEC encoding, quadrature phase shift keying (Quadrature phase shift keying, QPSK) modulation is usually used, and devices that support a baud rate of 120 GBaud to 140 GBaud are needed. For example, in an optical transport network (optical transport network, OTN) that transmits data at 400 gigabits per second (referred to as FlexO-4 for short) in a flexible optical transport network (Flexible Optical Transport Network, FlexO), a corresponding baud rate is approximately 124.102 GBaud; and in FlexO-4e data transmission with an Ethernet service payload, a corresponding baud rate is approximately 118.203 GBaud. In this case, a channel spacing (channel spacing, also referred to as grid spacing, grid spacing) is usually 150 GHz. However, in 400G data center and metropolitan coherent transmission solutions used in existing networks, a channel spacing used is approximately 75 GHz, 100 GHz, or 112.5 GHz. In other words, the 400G long-haul transmission solution using OFEC encoding and QPSK modulation is difficult to achieve compatibility with existing 400G data center and metropolitan area networks, which is an urgent problem to be resolved.

### SUMMARY

Embodiments of this application provide a data processing method, apparatus, and system. By combining FEC encoding with PCS technology, longer transmission distances can be achieved, so that overall data processing operations are simpler, complexity is lower, and power consumption is lower. In addition, compatibility with existing 400G data centers and metropolitan area networks can be ensured while overall performance is ensured.

According to a first aspect, this application provides a data processing method. The data processing method includes the following steps: obtaining second bit data based on first bit data having a bit quantity of dᵢₙ, where the second bit data includes dᵢₙ bits in the first bit data, d_{CRC} check bits, and/or d_{PAD} padding bits, d_{CRC} is an integer greater than or equal to 0, and d_{PAD} is an integer greater than or equal to 0; scrambling the second bit data to obtain third bit data, where a bit quantity of the third bit data is d_{scr} = dᵢₙ + d_{CP}, and d_{CP} = d_{CRC} + d_{PAD}; performing probabilistic constellation shaping PCS processing on a first bit subset in a first bit set having a bit quantity of m to obtain a second bit subset, where the first bit set is obtained from the third bit data, m is an integer greater than 1, and d_{scr} is an integer multiple of m; and performing forward error correction FEC encoding and interleaving processing on the second bit subset and a third bit subset in the first bit set other than the first bit subset to obtain a second bit set, where values of dᵢₙ, m, and d_{CP} are any group in the following table:

| dᵢₙ | m | d_{CP} |
|---|---|---|
| 1186312 | 3536 | 1784 |
| 1184256 | 3536 | 3840 |
| 1182200 | 3520 | 520 |
| 1180144 | 3520 | 2576 |
| 1176032 | 3504 | 1312 |
| 1173976 | 3504 | 3368 |
| 1171920 | 3488 | 48 |
| 1169864 | 3488 | 2104 |
| 1165752 | 3472 | 840 |
| 1163696 | 3472 | 2896 |
| 1159584 | 3456 | 1632 |
| 1157528 | 3456 | 3688 |
| 1155472 | 3440 | 368 |
| 1153416 | 3440 | 2424 |
| 1149304 | 3424 | 1160 |
| 1147248 | 3424 | 3216 |
| 1143136 | 3408 | 1952 |
| 1141080 | 3408 | 4008 |
| 1139024 | 3392 | 688 |
| 1136968 | 3392 | 2744 |
| 1132856 | 3376 | 1480 |
| 1130800 | 3376 | 3536 |
| 1128744 | 3360 | 216 |
| 1122576 | 3344 | 1008 |
| 1120520 | 3344 | 3064 |
| 1116408 | 3328 | 1800 |
| 1114352 | 3328 | 3856 |
| 1112296 | 3312 | 536 |
| 1110240 | 3312 | 2592 |
| 1106128 | 3296 | 1328 |
| 1104072 | 3296 | 3384 |
| 1102016 | 3280 | 64 |
| 1099960 | 3280 | 2120 |
| 1095848 | 3264 | 856 |
| 1093792 | 3264 | 2912 |
| 1089680 | 3248 | 1648 |
| 1087624 | 3248 | 3704 |
| 1085568 | 3232 | 384 |
| 1083512 | 3232 | 2440 |
| 1079400 | 3216 | 1176 |
| 1077344 | 3216 | 3232 |
| 1071176 | 3200 | 4024 |
| 1069120 | 3184 | 704 |
| 1067064 | 3184 | 2760 |
| 1062952 | 3168 | 1496 |
| 1060896 | 3168 | 3552 |
| 1058840 | 3152 | 232 |
| 1056784 | 3152 | 2288 |
| 1052672 | 3136 | 1024 |
| 1050616 | 3136 | 3080 |
| 1046504 | 3120 | 1816 |
| 1044448 | 3120 | 3872 |
| 1042392 | 3104 | 552 |
| 1040336 | 3104 | 2608 |
| 1036224 | 3088 | 1344 |
| 1034168 | 3088 | 3400 |
| 1032112 | 3072 | 80 |
| 1030056 | 3072 | 2136 |
| 1025944 | 3056 | 872 |
| 1023888 | 3056 | 2928 |
| 1019776 | 3040 | 1664 |
| 1017720 | 3040 | 3720 |
| 1015664 | 3024 | 400 |
| 1013608 | 3024 | 2456 |
| 1009496 | 3008 | 1192 |
| 1007440 | 3008 | 3248 |
| 1003328 | 2992 | 1984 |
| 1001272 | 2992 | 4040 |
| 999216 | 2976 | 720 |
| 997160 | 2976 | 2776 |
| 993048 | 2960 | 1512 |
| 990992 | 2960 | 3568 |
| 988936 | 2944 | 248 |
| 986880 | 2944 | 2304 |
| 982768 | 2928 | 1040 |
| 980712 | 2928 | 3096 |
| 976600 | 2912 | 1832 |
| 974544 | 2912 | 3888 |
| 972488 | 2896 | 568 |
| 970432 | 2896 | 2624 |
| 966320 | 2880 | 1360 |
| 964264 | 2880 | 3416 |
| 962208 | 2864 | 96 |
| 960152 | 2864 | 2152 |
| 956040 | 2848 | 888 |
| 953984 | 2848 | 2944 |
| 949872 | 2832 | 1680 |
| 947816 | 2832 | 3736 |
| 945760 | 2816 | 416 |
| 943704 | 2816 | 2472 |
| 939592 | 2800 | 1208 |
| 937536 | 2800 | 3264 |
| 933424 | 2784 | 2000 |
| 931368 | 2784 | 4056 |
| 929312 | 2768 | 736 |
| 927256 | 2768 | 2792 |
| 923144 | 2752 | 1528 |
| 921088 | 2752 | 3584 |
| 919032 | 2736 | 264 |
| 916976 | 2736 | 2320 |
| 912864 | 2720 | 1056 |
| 910808 | 2720 | 3112 |
| 906696 | 2704 | 1848 |
| 904640 | 2704 | 3904 |
| 902584 | 2688 | 584 |
| 900528 | 2688 | 2640 |
| 896416 | 2672 | 1376 |
| 894360 | 2672 | 3432 |
| 892304 | 2656 | 112 |
| 886136 | 2640 | 904 |
| 884080 | 2640 | 2960 |
| 879968 | 2624 | 1696 |
| 877912 | 2624 | 3752 |
| 875856 | 2608 | 432 |
| 873800 | 2608 | 2488 |
| 869688 | 2592 | 1224 |
| 867632 | 2592 | 3280 |
| 863520 | 2576 | 2016 |
| 861464 | 2576 | 4072 |
| 859408 | 2560 | 752 |
| 857352 | 2560 | 2808 |
| 853240 | 2544 | 1544 |
| 851184 | 2544 | 3600 |
| 849128 | 2528 | 280 |
| 847072 | 2528 | 2336 |
| 842960 | 2512 | 1072 |
| 840904 | 2512 | 3128 |
| 836792 | 2496 | 1864 |
| 834736 | 2496 | 3920 |
| 832680 | 2480 | 600 |
| 830624 | 2480 | 2656 |
| 826512 | 2464 | 1392 |
| 824456 | 2464 | 3448 |
| 822400 | 2448 | 128 |
| 820344 | 2448 | 2184 |
| 816232 | 2432 | 920 |
| 814176 | 2432 | 2976 |
| 810064 | 2416 | 1712 |
| 808008 | 2416 | 3768 |
| 805952 | 2400 | 448 |
| 803896 | 2400 | 2504 |
| 799784 | 2384 | 1240 |
| 797728 | 2384 | 3296 |
| 793616 | 2368 | 2032 |
| 791560 | 2368 | 4088 |
| 789504 | 2352 | 768 |
| 787448 | 2352 | 2824 |
| 783336 | 2336 | 1560 |
| 781280 | 2336 | 3616 |
| 779224 | 2320 | 296 |
| 777168 | 2320 | 2352 |
| 773056 | 2304 | 1088 |
| 771000 | 2304 | 3144 |
| 766888 | 2288 | 1880 |
| 764832 | 2288 | 3936 |
| 762776 | 2272 | 616 |
| 760720 | 2272 | 2672 |
| 756608 | 2256 | 1408 |
| 754552 | 2256 | 3464 |
| 752496 | 2240 | 144 |
| 750440 | 2240 | 2200 |
| 746328 | 2224 | 936 |
| 744272 | 2224 | 2992 |
| 740160 | 2208 | 1728 |
| 738104 | 2208 | 3784 |
| 736048 | 2192 | 464 |
| 733992 | 2192 | 2520 |
| 729880 | 2176 | 1256 |
| 727824 | 2176 | 3312 |
| 723712 | 2160 | 2048 |
| 721656 | 2160 | 4104 |
| 719600 | 2144 | 784 |

In this embodiment, for future metropolitan telecommunication transmission and metropolitan DCI interconnection scenarios, FEC encoding is to be used in combination with a PCS technology to achieve longer transmission distances. The introduction of the PCS processing makes a data processing granularity for "PCS processing and FEC encoding" (namely, first sub-processing in the specification) no longer 3552, but a smaller value m. In this case, a quantity of rows from which data is obtained from a data frame, a quantity of times of CRC check, and a quantity of padding bits to be inserted need to be redesigned, so that overall data processing operations are simpler, complexity is lower, and power consumption is lower. In addition, when the first bit data is FlexO-4e or 400G-ZR frame data, a corresponding baud rate is less than 100 GBaud, which can be better compatible with solutions of existing 400G data centers and metropolitan area networks.

In some possible implementation, d_{scr} = 336 × m. In this embodiment of this application, after data processing (including "first data processing" and "second data processing" in the specification) is performed on the first bit data having the bit quantity of dᵢₙ, a DSP frame is exactly obtained. In this case, it may be learned that d_{scr} = dᵢₙ + d_{CP} = L × m = 336 × m, so that the proposed data processing method has low implementation complexity and lower power consumption.

In some possible implementations, a bit quantity of the first bit subset is an integer multiple of 16 or 32, the second bit subset includes 2048 bits, the third bit subset includes 1504 bits, and the second bit set includes 4096 bits.

In some possible implementations, the first bit data includes r rows and q columns of bits, dᵢₙ=r×q, r is an integer greater than 1, and q=2056 or 10280.

In some possible implementations, obtaining the second bit data based on the first bit data having the bit quantity of dᵢₙ specifically includes: performing cyclic redundancy check CRC and/or inserting padding bits on the first bit data to obtain the second bit data, where performing the CRC on the first bit data includes: performing a CRC-32 check on a total of r/p×q bits in every r/p rows of the first bit data, and adding 32 check bits, where d_{CRC} = 32 × p, r is divisible by p, and p is an integer greater than 1; or
performing a CRC-32 check on a total of q × r₀ bits in every r₀ rows in first r₀ × (p - 1) rows of the first bit data to add 32 check bits, and performing a CRC-32 check on a total of q × r₁ bits in last r₁ rows of the first bit data to add 32 check bits, where d_{CRC} = 32 × p, r is not divisible by p, p is an integer greater than 1, r₀ × (p - 1) + r₁ = r, and the integer r₀ is greater than the integer r₁.

In some possible implementations, q=2056, and values of r, m, d_{CP}, p, and r₁ are any group in the following table:

| r | m | d_{CP} | p | r₁ |
|---|---|---|---|---|
| 577 | 3536 | 1784 | 29 | 17 |
| 576 | 3536 | 3840 | 29 | 16 |
| 574 | 3520 | 2576 | 29 | 14 |
| 572 | 3504 | 1312 | 29 | 12 |
| 571 | 3504 | 3368 | 29 | 11 |
| 569 | 3488 | 2104 | 29 | 9 |
| 566 | 3472 | 2896 | 29 | 6 |
| 564 | 3456 | 1632 | 29 | 4 |
| 563 | 3456 | 3688 | 29 | 3 |
| 561 | 3440 | 2424 | 29 | 1 |
| 559 | 3424 | 1160 | 28 | 19 |
| 558 | 3424 | 3216 | 28 | 18 |
| 556 | 3408 | 1952 | 28 | 16 |
| *555* | 3408 | 4008 | 28 | 15 |
| 553 | 3392 | 2744 | 28 | 13 |
| *551* | 3376 | 1480 | 28 | 11 |
| *550* | 3376 | 3536 | 28 | 10 |
| 546 | 3344 | 1008 | 28 | 6 |
| 545 | 3344 | 3064 | 28 | 5 |
| 543 | 3328 | 1800 | 28 | 3 |
| 542 | 3328 | 3856 | 28 | 2 |
| 540 | 3312 | 2592 | 27 | |
| 538 | 3296 | 1328 | 27 | 18 |
| 537 | 3296 | 3384 | 27 | 17 |
| 535 | 3280 | 2120 | 27 | 15 |
| 532 | 3264 | 2912 | 27 | 12 |
| 530 | 3248 | 1648 | 27 | 10 |
| 529 | 3248 | 3704 | 27 | 9 |
| 527 | 3232 | 2440 | 27 | 7 |
| 525 | 3216 | 1176 | 27 | 5 |
| 524 | 3216 | 3232 | 27 | 4 |
| 521 | 3200 | 4024 | 27 | 1 |
| 519 | 3184 | 2760 | 26 | 19 |
| 517 | 3168 | 1496 | 26 | 17 |
| 516 | 3168 | 3552 | 26 | 16 |
| 514 | 3152 | 2288 | 26 | 14 |
| 512 | 3136 | 1024 | 26 | 12 |
| 511 | 3136 | 3080 | 26 | 11 |
| 509 | 3120 | 1816 | 26 | 9 |
| 508 | 3120 | 3872 | 26 | 8 |
| 506 | 3104 | 2608 | 26 | 6 |
| 504 | 3088 | 1344 | 26 | 4 |
| 503 | 3088 | 3400 | 26 | 3 |
| 501 | 3072 | 2136 | 26 | 1 |
| 499 | 3056 | 872 | 25 | 19 |
| 498 | 3056 | 2928 | 25 | 18 |
| 496 | 3040 | 1664 | 25 | 16 |
| 495 | 3040 | 3720 | 25 | 15 |
| 493 | 3024 | 2456 | 25 | 13 |
| 491 | 3008 | 1192 | 25 | 11 |
| 490 | 3008 | 3248 | 25 | 10 |
| 488 | 2992 | 1984 | 25 | 8 |
| 487 | 2992 | 4040 | 25 | 7 |
| 485 | 2976 | 2776 | 25 | 5 |
| 483 | 2960 | 1512 | 25 | 3 |
| 482 | 2960 | 3568 | 25 | 2 |
| 480 | 2944 | 2304 | 24 | |
| 478 | 2928 | 1040 | 24 | 18 |
| 477 | 2928 | 3096 | 24 | 17 |
| 475 | 2912 | 1832 | 24 | 15 |
| 474 | 2912 | 3888 | 24 | 14 |
| 472 | 2896 | 2624 | 24 | 12 |
| 470 | 2880 | 1360 | 24 | 10 |
| 469 | 2880 | 3416 | 24 | 9 |
| 467 | 2864 | 2152 | 24 | 7 |
| 465 | 2848 | 888 | 24 | 5 |
| 464 | 2848 | 2944 | 24 | 4 |
| 462 | 2832 | 1680 | 24 | 2 |
| 461 | 2832 | 3736 | 24 | 1 |
| 459 | 2816 | 2472 | 23 | 19 |
| 457 | 2800 | 1208 | 23 | 17 |
| 456 | 2800 | 3264 | 23 | 16 |
| 454 | 2784 | 2000 | 23 | 14 |
| 453 | 2784 | 4056 | 23 | 13 |
| 452 | 2768 | 736 | 23 | 12 |
| 451 | 2768 | 2792 | 23 | 11 |
| 449 | 2752 | 1528 | 23 | 9 |
| 448 | 2752 | 3584 | 23 | 8 |
| 446 | 2736 | 2320 | 23 | 6 |
| 444 | 2720 | 1056 | 23 | 4 |
| 443 | 2720 | 3112 | 23 | 3 |
| 441 | 2704 | 1848 | 23 | 1 |
| 440 | 2704 | 3904 | 22 | |
| 438 | 2688 | 2640 | 22 | 18 |
| 436 | 2672 | 1376 | 22 | 16 |
| 435 | 2672 | 3432 | 22 | 15 |
| 431 | 2640 | 904 | 22 | 11 |
| 430 | 2640 | 2960 | 22 | 10 |
| 428 | 2624 | 1696 | 22 | 8 |
| 427 | 2624 | 3752 | 22 | 7 |
| 425 | 2608 | 2488 | 22 | 5 |
| 423 | 2592 | 1224 | 22 | 3 |
| 422 | 2592 | 3280 | 22 | 2 |
| 420 | 2576 | 2016 | 21 | |
| 419 | 2576 | 4072 | 21 | 19 |
| 418 | 2560 | 752 | 21 | 18 |
| 417 | 2560 | 2808 | 21 | 17 |
| 415 | 2544 | 1544 | 21 | 15 |
| 414 | 2544 | 3600 | 21 | 14 |
| 412 | 2528 | 2336 | 21 | 12 |
| 410 | 2512 | 1072 | 21 | 10 |
| 409 | 2512 | 3128 | 21 | 9 |
| 407 | 2496 | 1864 | 21 | 7 |
| 406 | 2496 | 3920 | 21 | 6 |
| 404 | 2480 | 2656 | 21 | 4 |
| 402 | 2464 | 1392 | 21 | 2 |
| 401 | 2464 | 3448 | 21 | 1 |
| 399 | 2448 | 2184 | 20 | 19 |
| 397 | 2432 | 920 | 20 | 17 |
| 396 | 2432 | 2976 | 20 | 16 |
| 394 | 2416 | 1712 | 20 | 14 |
| 393 | 2416 | 3768 | 20 | 13 |
| 391 | 2400 | 2504 | 20 | 11 |
| 389 | 2384 | 1240 | 20 | 9 |
| 388 | 2384 | 3296 | 20 | 8 |
| 386 | 2368 | 2032 | 20 | 6 |
| 385 | 2368 | 4088 | 20 | 5 |
| 384 | 2352 | 768 | 20 | 4 |
| 383 | 2352 | 2824 | 20 | 3 |
| 381 | 2336 | 1560 | 20 | 1 |
| 380 | 2336 | 3616 | 19 | |
| 378 | 2320 | 2352 | 19 | 18 |
| 376 | 2304 | 1088 | 19 | 16 |
| 375 | 2304 | 3144 | 19 | 15 |
| 373 | 2288 | 1880 | 19 | 13 |
| 372 | 2288 | 3936 | 19 | 12 |
| 371 | 2272 | 616 | 19 | 11 |
| 370 | 2272 | 2672 | 19 | 10 |
| 368 | 2256 | 1408 | 19 | 8 |
| 367 | 2256 | 3464 | 19 | 7 |
| 365 | 2240 | 2200 | 19 | 5 |
| 363 | 2224 | 936 | 19 | 3 |
| 362 | 2224 | 2992 | 19 | 2 |
| 360 | 2208 | 1728 | 18 | |
| 359 | 2208 | 3784 | 18 | 19 |
| 357 | 2192 | 2520 | 18 | 17 |
| 355 | 2176 | 1256 | 18 | 15 |
| 354 | 2176 | 3312 | 18 | 14 |
| 352 | 2160 | 2048 | 18 | 12 |
| 351 | 2160 | 4104 | 18 | 11 |
| 350 | 2144 | 784 | 18 | 10 |

According to the data processing method provided in this embodiment, CRC check needs to be performed, data error detection can be performed, and an existing 800G-ZR CRC technology can be reused, which is easy to implement. Further, when the first bit data is FlexO-4e or 400G-ZR frame data, it can be ensured that a corresponding baud rate is less than 100 GBaud, which can be better compatible with solutions of existing 400G data centers and metropolitan area networks.

In some possible implementations, m is an integer multiple of 32, q=2056, and values of r, m, d_{CP}, p, and r₁ are any group in the following table:

| r | m | d_{CP} | p | r₁ |
|---|---|---|---|---|
| 574 | 3520 | 2576 | 29 | 14 |
| 569 | 3488 | 2104 | 29 | 9 |
| 564 | 3456 | 1632 | 29 | 4 |
| 563 | 3456 | 3688 | 29 | 3 |
| 559 | 3424 | 1160 | 28 | 19 |
| 558 | 3424 | 3216 | 28 | 18 |
| 553 | 3392 | 2744 | 28 | 13 |
| 543 | 3328 | 1800 | 28 | 3 |
| 542 | 3328 | 3856 | 28 | 2 |
| 538 | 3296 | 1328 | 27 | 18 |
| 537 | 3296 | 3384 | 27 | 17 |
| 532 | 3264 | 2912 | 27 | 12 |
| 527 | 3232 | 2440 | 27 | 7 |
| 521 | 3200 | 4024 | 27 | 1 |
| 517 | 3168 | 1496 | 26 | 17 |
| 516 | 3168 | 3552 | 26 | 16 |
| 512 | 3136 | 1024 | 26 | 12 |
| 511 | 3136 | 3080 | 26 | 11 |
| 506 | 3104 | 2608 | 26 | 6 |
| 501 | 3072 | 2136 | 26 | 1 |
| 496 | 3040 | 1664 | 25 | 16 |
| 495 | 3040 | 3720 | 25 | 15 |
| 491 | 3008 | 1192 | 25 | 11 |
| 490 | 3008 | 3248 | 25 | 10 |
| 485 | 2976 | 2776 | 25 | 5 |
| 480 | 2944 | 2304 | 24 | |
| 475 | 2912 | 1832 | 24 | 15 |
| 474 | 2912 | 3888 | 24 | 14 |
| 470 | 2880 | 1360 | 24 | 10 |
| 469 | 2880 | 3416 | 24 | 9 |
| 465 | 2848 | 888 | 24 | 5 |
| 464 | 2848 | 2944 | 24 | 4 |
| 459 | 2816 | 2472 | 23 | 19 |
| 454 | 2784 | 2000 | 23 | 14 |
| 453 | 2784 | 4056 | 23 | 13 |
| 449 | 2752 | 1528 | 23 | 9 |
| 448 | 2752 | 3584 | 23 | 8 |
| 444 | 2720 | 1056 | 23 | 4 |
| 443 | 2720 | 3112 | 23 | 3 |
| 438 | 2688 | 2640 | 22 | 18 |
| 428 | 2624 | 1696 | 22 | 8 |
| 427 | 2624 | 3752 | 22 | 7 |
| 423 | 2592 | 1224 | 22 | 3 |
| 422 | 2592 | 3280 | 22 | 2 |
| 418 | 2560 | 752 | 21 | 18 |
| 417 | 2560 | 2808 | 21 | 17 |
| 412 | 2528 | 2336 | 21 | 12 |
| 407 | 2496 | 1864 | 21 | 7 |
| 406 | 2496 | 3920 | 21 | 6 |
| 402 | 2464 | 1392 | 21 | 2 |
| 401 | 2464 | 3448 | 21 | 1 |
| 397 | 2432 | 920 | 20 | 17 |
| 396 | 2432 | 2976 | 20 | 16 |
| 391 | 2400 | 2504 | 20 | 11 |
| 386 | 2368 | 2032 | 20 | 6 |
| 385 | 2368 | 4088 | 20 | 5 |
| 381 | 2336 | 1560 | 20 | 1 |
| 380 | 2336 | 3616 | 19 | |
| 376 | 2304 | 1088 | 19 | 16 |
| 375 | 2304 | 3144 | 19 | 15 |
| 371 | 2272 | 616 | 19 | 11 |
| 370 | 2272 | 2672 | 19 | 10 |
| 365 | 2240 | 2200 | 19 | 5 |
| 360 | 2208 | 1728 | 18 | |
| 359 | 2208 | 3784 | 18 | 19 |
| 355 | 2176 | 1256 | 18 | 15 |
| 354 | 2176 | 3312 | 18 | 14 |
| 350 | 2144 | 784 | 18 | 10 |

The parameters provided in this embodiment of this application can ensure FEC performance, and hardware implementation is simple and complexity is lower.

In some possible implementations, q=10280, and values of r, m, d_{CP}, p, and r₁ are any group in the following table:

| r | m | d_{CP} | p | r₁ |
|---|---|---|---|---|
| 113 | 3472 | 4952 | 29 | 1 |
| 112 | 3440 | 4480 | 28 | |
| 111 | 3408 | 4008 | 28 | 3 |
| 110 | 3376 | 3536 | 28 | 2 |
| 109 | 3344 | 3064 | 28 | 1 |
| 108 | 3312 | 2592 | 27 | |
| 107 | 3280 | 2120 | 27 | 3 |
| 106 | 3248 | 1648 | 27 | 2 |
| 105 | 3216 | 1176 | 27 | 1 |
| 102 | 3136 | 5136 | 26 | 2 |
| 101 | 3104 | 4664 | 26 | 1 |
| 100 | 3072 | 4192 | 25 | |
| 99 | 3040 | 3720 | 25 | 3 |
| 98 | 3008 | 3248 | 25 | 2 |
| 97 | 2976 | 2776 | 25 | 1 |
| 96 | 2944 | 2304 | 24 | |
| 95 | 2912 | 1832 | 24 | 3 |
| 94 | 2880 | 1360 | 24 | 2 |
| 93 | 2848 | 888 | 24 | 1 |
| 90 | 2768 | 4848 | 23 | 2 |
| 89 | 2736 | 4376 | 23 | 1 |
| 88 | 2704 | 3904 | 22 | |
| 87 | 2672 | 3432 | 22 | 3 |
| 86 | 2640 | 2960 | 22 | 2 |
| 85 | 2608 | 2488 | 22 | 1 |
| 84 | 2576 | 2016 | 21 | |
| 83 | 2544 | 1544 | 21 | 3 |
| 82 | 2512 | 1072 | 21 | 2 |
| 79 | 2432 | 5032 | 20 | 3 |
| 78 | 2400 | 4560 | 20 | 2 |
| 77 | 2368 | 4088 | 20 | 1 |
| 76 | 2336 | 3616 | 19 | |
| 75 | 2304 | 3144 | 19 | 3 |
| 74 | 2272 | 2672 | 19 | 2 |
| 73 | 2240 | 2200 | 19 | 1 |
| 72 | 2208 | 1728 | 18 | |
| 71 | 2176 | 1256 | 18 | 3 |
| 70 | 2144 | 784 | 18 | 2 |

According to the data processing method provided in this embodiment, CRC check needs to be performed, data error detection can be performed, and an existing 800G-ZR CRC technology can be reused, which is easy to implement. Further, when the first bit data is FlexO-4e or 400G-ZR frame data, it can be ensured that a corresponding baud rate is less than 100 GBaud, which can be better compatible with solutions of existing 400G data centers and metropolitan area networks.

In some possible implementations, m is an integer multiple of 32, q=10280, and values of r, m, d_{CP}, p, and r₁ are any group in the following table:

| r | m | d_{CP} | p | r₁ |
|---|---|---|---|---|
| 102 | 3136 | 5136 | 26 | 2 |
| 101 | 3104 | 4664 | 26 | 1 |
| 100 | 3072 | 4192 | 25 | |
| 99 | 3040 | 3720 | 25 | 3 |
| 98 | 3008 | 3248 | 25 | 2 |
| 97 | 2976 | 2776 | 25 | 1 |
| 96 | 2944 | 2304 | 24 | |
| 95 | 2912 | 1832 | 24 | 3 |
| 94 | 2880 | 1360 | 24 | 2 |
| 93 | 2848 | 888 | 24 | 1 |
| 79 | 2432 | 5032 | 20 | 3 |
| 78 | 2400 | 4560 | 20 | 2 |
| 77 | 2368 | 4088 | 20 | 1 |
| 76 | 2336 | 3616 | 19 | |
| 75 | 2304 | 3144 | 19 | 3 |
| 74 | 2272 | 2672 | 19 | 2 |
| 73 | 2240 | 2200 | 19 | 1 |
| 72 | 2208 | 1728 | 18 | |
| 71 | 2176 | 1256 | 18 | 3 |
| 70 | 2144 | 784 | 18 | 2 |

The parameters provided in this embodiment of this application can ensure FEC performance, and hardware implementation is simple and complexity is lower.

In some possible implementations, the third bit subset includes 1504 bits, the first bit subset includes m-1504 bits, and performing the probabilistic constellation shaping PCS processing on the first bit subset in the first bit set having the bit quantity of m to obtain the second bit subset includes: dividing the first bit subset into 16 sequences, where each sequence includes (m-1504)/16 bits; and performing PCS sub-processing on the 16 sequences respectively to obtain 16 output sequences corresponding to the 16 sequences, where each output sequence includes 128 bits, and the 16 output sequences form the second bit subset.

In some possible implementations, the third bit subset includes 1504 bits, the first bit subset includes m-1504 bits, and performing the probabilistic constellation shaping PCS processing on the first bit subset in the first bit set having the bit quantity of m to obtain the second bit subset includes: dividing the first bit subset into 32 sequences, where each sequence includes (m-1504)/32 bits; and performing PCS sub-processing on the 32 sequences respectively to obtain 32 output sequences corresponding to the 32 sequences, where each output sequence includes 64 bits, and the 32 output sequences form the second bit subset.

In some possible implementations, after obtaining the second bit set, the method further includes: performing symbol mapping and polarization distribution on fourth bit data to obtain a dual-polarization symbol sequence, where the symbol mapping and the polarization distribution map 8 bits to one dual-polarization DP-16QAM symbol, and the fourth bit data includes a plurality of second bit sets; and performing digital signal processing DSP framing on the dual-polarization symbol sequence to obtain a DSP frame (also referred to as a super-frame).

In some possible implementations, performing the DSP framing on the dual-polarization symbol sequence includes: performing DSP framing processing on every 172032 dual-polarization DP-16QAM symbols to obtain a DSP frame.

According to a second aspect, this application provides a data processing apparatus, including a first processing unit, a scrambling unit, a probabilistic constellation shaping PCS unit, and a forward error correction FEC encoding and interleaving unit. The first processing unit is configured to obtain second bit data based on first bit data having a bit quantity of dᵢₙ, where the second bit data includes dᵢₙ bits in the first bit data, d_{CRC} check bits, and/or d_{PAD} padding bits, d_{CRC} is an integer greater than or equal to 0, and d_{PAD} is an integer greater than or equal to 0. The scrambling unit is configured to scramble the second bit data to obtain third bit data, where a bit quantity of the third bit data is d_{scr} = r × q + d_{CP}, and d_{CP} = d_{CRC} + d_{PAD}. The PCS unit is configured to perform probabilistic constellation shaping PCS processing on a first bit subset in a first bit set having a bit quantity of m to obtain a second bit subset, where the first bit set is obtained from the third bit data, m is an integer greater than 1, and d_{scr} is an integer multiple of m. The FEC encoding and interleaving unit is configured to perform FEC encoding and interleaving processing on the second bit subset and a third bit subset in the first bit set other than the first bit subset to obtain a second bit set, where values of dᵢₙ, m, and d_{CP} are any group in the following table:

| dᵢₙ | m | d_{CP} |
|---|---|---|
| 1186312 | 3536 | 1784 |
| 1184256 | 3536 | 3840 |
| 1182200 | 3520 | 520 |
| 1180144 | 3520 | 2576 |
| 1176032 | 3504 | 1312 |
| 1173976 | 3504 | 3368 |
| 1171920 | 3488 | 48 |
| 1169864 | 3488 | 2104 |
| 1165752 | 3472 | 840 |
| 1163696 | 3472 | 2896 |
| 1159584 | 3456 | 1632 |
| 1157528 | 3456 | 3688 |
| 1155472 | 3440 | 368 |
| 1153416 | 3440 | 2424 |
| 1149304 | 3424 | 1160 |
| 1147248 | 3424 | 3216 |
| 1143136 | 3408 | 1952 |
| 1141080 | 3408 | 4008 |
| 1139024 | 3392 | 688 |
| 1136968 | 3392 | 2744 |
| 1132856 | 3376 | 1480 |
| 1130800 | 3376 | 3536 |
| 1128744 | 3360 | 216 |
| 1122576 | 3344 | 1008 |
| 1120520 | 3344 | 3064 |
| 1116408 | 3328 | 1800 |
| 1114352 | 3328 | 3856 |
| 1112296 | 3312 | 536 |
| 1110240 | 3312 | 2592 |
| 1106128 | 3296 | 1328 |
| 1104072 | 3296 | 3384 |
| 1102016 | 3280 | 64 |
| 1099960 | 3280 | 2120 |
| 1095848 | 3264 | 856 |
| 1093792 | 3264 | 2912 |
| 1089680 | 3248 | 1648 |
| 1087624 | 3248 | 3704 |
| 1085568 | 3232 | 384 |
| 1083512 | 3232 | 2440 |
| 1079400 | 3216 | 1176 |
| 1077344 | 3216 | 3232 |
| 1071176 | 3200 | 4024 |
| 1069120 | 3184 | 704 |
| 1067064 | 3184 | 2760 |
| 1062952 | 3168 | 1496 |
| 1060896 | 3168 | 3552 |
| 1058840 | 3152 | 232 |
| 1056784 | 3152 | 2288 |
| 1052672 | 3136 | 1024 |
| 1050616 | 3136 | 3080 |
| 1046504 | 3120 | 1816 |
| 1044448 | 3120 | 3872 |
| 1042392 | 3104 | 552 |
| 1040336 | 3104 | 2608 |
| 1036224 | 3088 | 1344 |
| 1034168 | 3088 | 3400 |
| 1032112 | 3072 | 80 |
| 1030056 | 3072 | 2136 |
| 1025944 | 3056 | 872 |
| 1023888 | 3056 | 2928 |
| 1019776 | 3040 | 1664 |
| 1017720 | 3040 | 3720 |
| 1015664 | 3024 | 400 |
| 1013608 | 3024 | 2456 |
| 1009496 | 3008 | 1192 |
| 1007440 | 3008 | 3248 |
| 1003328 | 2992 | 1984 |
| 1001272 | 2992 | 4040 |
| 999216 | 2976 | 720 |
| 997160 | 2976 | 2776 |
| 993048 | 2960 | 1512 |
| 990992 | 2960 | 3568 |
| 988936 | 2944 | 248 |
| 986880 | 2944 | 2304 |
| 982768 | 2928 | 1040 |
| 980712 | 2928 | 3096 |
| 976600 | 2912 | 1832 |
| 974544 | 2912 | 3888 |
| 972488 | 2896 | 568 |
| 970432 | 2896 | 2624 |
| 966320 | 2880 | 1360 |
| 964264 | 2880 | 3416 |
| 962208 | 2864 | 96 |
| 960152 | 2864 | 2152 |
| 956040 | 2848 | 888 |
| 953984 | 2848 | 2944 |
| 949872 | 2832 | 1680 |
| 947816 | 2832 | 3736 |
| 945760 | 2816 | 416 |
| 943704 | 2816 | 2472 |
| 939592 | 2800 | 1208 |
| 937536 | 2800 | 3264 |
| 933424 | 2784 | 2000 |
| 931368 | 2784 | 4056 |
| 929312 | 2768 | 736 |
| 927256 | 2768 | 2792 |
| 923144 | 2752 | 1528 |
| 921088 | 2752 | 3584 |
| 919032 | 2736 | 264 |
| 916976 | 2736 | 2320 |
| 912864 | 2720 | 1056 |
| 910808 | 2720 | 3112 |
| 906696 | 2704 | 1848 |
| 904640 | 2704 | 3904 |
| 902584 | 2688 | 584 |
| 900528 | 2688 | 2640 |
| 896416 | 2672 | 1376 |
| 894360 | 2672 | 3432 |
| 892304 | 2656 | 112 |
| 886136 | 2640 | 904 |
| 884080 | 2640 | 2960 |
| 879968 | 2624 | 1696 |
| 877912 | 2624 | 3752 |
| 875856 | 2608 | 432 |
| 873800 | 2608 | 2488 |
| 869688 | 2592 | 1224 |
| 867632 | 2592 | 3280 |
| 863520 | 2576 | 2016 |
| 861464 | 2576 | 4072 |
| 859408 | 2560 | 752 |
| 857352 | 2560 | 2808 |
| 853240 | 2544 | 1544 |
| 851184 | 2544 | 3600 |
| 849128 | 2528 | 280 |
| 847072 | 2528 | 2336 |
| 842960 | 2512 | 1072 |
| 840904 | 2512 | 3128 |
| 836792 | 2496 | 1864 |
| 834736 | 2496 | 3920 |
| 832680 | 2480 | 600 |
| 830624 | 2480 | 2656 |
| 826512 | 2464 | 1392 |
| 824456 | 2464 | 3448 |
| 822400 | 2448 | 128 |
| 820344 | 2448 | 2184 |
| 816232 | 2432 | 920 |
| 814176 | 2432 | 2976 |
| 810064 | 2416 | 1712 |
| 808008 | 2416 | 3768 |
| 805952 | 2400 | 448 |
| 803896 | 2400 | 2504 |
| 799784 | 2384 | 1240 |
| 797728 | 2384 | 3296 |
| 793616 | 2368 | 2032 |
| 791560 | 2368 | 4088 |
| 789504 | 2352 | 768 |
| 787448 | 2352 | 2824 |
| 783336 | 2336 | 1560 |
| 781280 | 2336 | 3616 |
| 779224 | 2320 | 296 |
| 777168 | 2320 | 2352 |
| 773056 | 2304 | 1088 |
| 771000 | 2304 | 3144 |
| 766888 | 2288 | 1880 |
| 764832 | 2288 | 3936 |
| 762776 | 2272 | 616 |
| 760720 | 2272 | 2672 |
| 756608 | 2256 | 1408 |
| 754552 | 2256 | 3464 |
| 752496 | 2240 | 144 |
| 750440 | 2240 | 2200 |
| 746328 | 2224 | 936 |
| 744272 | 2224 | 2992 |
| 740160 | 2208 | 1728 |
| 738104 | 2208 | 3784 |
| 736048 | 2192 | 464 |
| 733992 | 2192 | 2520 |
| 729880 | 2176 | 1256 |
| 727824 | 2176 | 3312 |
| 723712 | 2160 | 2048 |
| 721656 | 2160 | 4104 |
| 719600 | 2144 | 784 |

In this embodiment, for future metropolitan telecommunication transmission and metropolitan DCI interconnection scenarios, FEC encoding is to be used in combination with a PCS technology to achieve longer transmission distances. The introduction of the PCS processing makes a data processing granularity for "PCS processing and FEC encoding" (namely, first sub-processing in the specification) no longer 3552, but a smaller value m. In this case, a quantity of rows from which data is obtained from a data frame, a quantity of times of CRC check, and a quantity of padding bits to be inserted need to be redesigned, so that overall data processing operations are simpler, complexity is lower, and power consumption is lower. In addition, when the first bit data is FlexO-4e or 400G-ZR frame data, a corresponding baud rate is less than 100 GBaud, which can be better compatible with solutions of existing 400G data centers and metropolitan area networks.

In some possible implementation, d_{scr} = 336 × m. In this embodiment of this application, after data processing (including "first data processing" and "second data processing" in the specification) is performed on the first bit data having the bit quantity of dᵢₙ, a DSP frame is exactly obtained. In this case, it may be learned that d_{scr} = dᵢₙ + d_{CP} = L × m = 336 × m , so that the proposed data processing method has low implementation complexity and lower power consumption.

In some possible implementations, a bit quantity of the first bit subset is an integer multiple of 16 or 32, the second bit subset includes 2048 bits, the third bit subset includes 1504 bits, and the second bit set includes 4096 bits.

In some possible implementations, the first bit data includes r rows and q columns of bits, dᵢₙ=r×q, r is an integer greater than 1, and q=2056 or 10280.

In some possible implementations, the processing unit is specifically configured to: perform a CRC-32 check on a total of r/p×q bits in every r/p rows of the first bit data, and add 32 check bits, where d_{CRC} = 32 × p, r is divisible by p, and p is an integer greater than 1; or $perform a CRC -32 check on a total of q \times {r}_{0} bits in every {r}_{0} rows in first {r}_{0} \times \left(p-1\right)$ rows of the first bit data to add 32 check bits, and perform a CRC-32 check on a total of q × r₁ bits in last r₁ rows of the first bit data to add 32 check bits, where d_{CRC} = 32 × p, r is not divisible by p, p is an integer greater than 1, r₀ × (p - 1) + r₁ = r, and the integer r₀ is greater than the integer r₁.

In some possible implementations, q=2056, and values of r, m, d_{CP}, p, and r₁ are any group in the following table:

| r | m | d_{CP} | p | r₁ |
|---|---|---|---|---|
| 577 | 3536 | 1784 | 29 | 17 |
| 576 | 3536 | 3840 | 29 | 16 |
| 574 | 3520 | 2576 | 29 | 14 |
| 572 | 3504 | 1312 | 29 | 12 |
| 571 | 3504 | 3368 | 29 | 11 |
| 569 | 3488 | 2104 | 29 | 9 |
| 566 | 3472 | 2896 | 29 | 6 |
| 564 | 3456 | 1632 | 29 | 4 |
| 563 | 3456 | 3688 | 29 | 3 |
| 561 | 3440 | 2424 | 29 | 1 |
| 559 | 3424 | 1160 | 28 | 19 |
| 558 | 3424 | 3216 | 28 | 18 |
| 556 | 3408 | 1952 | 28 | 16 |
| 555 | 3408 | 4008 | 28 | 15 |
| 553 | 3392 | 2744 | 28 | 13 |
| 551 | 3376 | 1480 | 28 | 11 |
| 550 | 3376 | 3536 | 28 | 10 |
| 546 | 3344 | 1008 | 28 | 6 |
| 545 | 3344 | 3064 | 28 | 5 |
| 543 | 3328 | 1800 | 28 | 3 |
| 542 | 3328 | 3856 | 28 | 2 |
| 540 | 3312 | 2592 | 27 | |
| 538 | 3296 | 1328 | 27 | 18 |
| 537 | 3296 | 3384 | 27 | 17 |
| 535 | 3280 | 2120 | 27 | 15 |
| 532 | 3264 | 2912 | 27 | 12 |
| 530 | 3248 | 1648 | 27 | 10 |
| 529 | 3248 | 3704 | 27 | 9 |
| 527 | 3232 | 2440 | 27 | 7 |
| 525 | 3216 | 1176 | 27 | 5 |
| 524 | 3216 | 3232 | 27 | 4 |
| 521 | 3200 | 4024 | 27 | 1 |
| 519 | 3184 | 2760 | 26 | 19 |
| 517 | 3168 | 1496 | 26 | 17 |
| 516 | 3168 | 3552 | 26 | 16 |
| 514 | 3152 | 2288 | 26 | 14 |
| 512 | 3136 | 1024 | 26 | 12 |
| 511 | 3136 | 3080 | 26 | 11 |
| 509 | 3120 | 1816 | 26 | 9 |
| 508 | 3120 | 3872 | 26 | 8 |
| 506 | 3104 | 2608 | 26 | 6 |
| 504 | 3088 | 1344 | 26 | 4 |
| 503 | 3088 | 3400 | 26 | 3 |
| 501 | 3072 | 2136 | 26 | 1 |
| 499 | 3056 | 872 | 25 | 19 |
| 498 | 3056 | 2928 | 25 | 18 |
| 496 | 3040 | 1664 | 25 | 16 |
| 495 | 3040 | 3720 | 25 | 15 |
| 493 | 3024 | 2456 | 25 | 13 |
| 491 | 3008 | 1192 | 25 | 11 |
| 490 | 3008 | 3248 | 25 | 10 |
| 488 | 2992 | 1984 | 25 | 8 |
| 487 | 2992 | 4040 | 25 | 7 |
| 485 | 2976 | 2776 | 25 | 5 |
| 483 | 2960 | 1512 | 25 | 3 |
| 482 | 2960 | 3568 | 25 | 2 |
| 480 | 2944 | 2304 | 24 | |
| 478 | 2928 | 1040 | 24 | 18 |
| 477 | 2928 | 3096 | 24 | 17 |
| 475 | 2912 | 1832 | 24 | 15 |
| 474 | 2912 | 3888 | 24 | 14 |
| 472 | 2896 | 2624 | 24 | 12 |
| 470 | 2880 | 1360 | 24 | 10 |
| 469 | 2880 | 3416 | 24 | 9 |
| 467 | 2864 | 2152 | 24 | 7 |
| 465 | 2848 | 888 | 24 | 5 |
| 464 | 2848 | 2944 | 24 | 4 |
| 462 | 2832 | 1680 | 24 | 2 |
| 461 | 2832 | 3736 | 24 | 1 |
| 459 | 2816 | 2472 | 23 | 19 |
| 457 | 2800 | 1208 | 23 | 17 |
| 456 | 2800 | 3264 | 23 | 16 |
| 454 | 2784 | 2000 | 23 | 14 |
| 453 | 2784 | 4056 | 23 | 13 |
| 452 | 2768 | 736 | 23 | 12 |
| 451 | 2768 | 2792 | 23 | 11 |
| 449 | 2752 | 1528 | 23 | 9 |
| 448 | 2752 | 3584 | 23 | 8 |
| 446 | 2736 | 2320 | 23 | 6 |
| 444 | 2720 | 1056 | 23 | 4 |
| 443 | 2720 | 3112 | 23 | 3 |
| 441 | 2704 | 1848 | 23 | 1 |
| 440 | 2704 | 3904 | 22 | |
| 438 | 2688 | 2640 | 22 | 18 |
| 436 | 2672 | 1376 | 22 | 16 |
| 435 | 2672 | 3432 | 22 | 15 |
| 431 | 2640 | 904 | 22 | 11 |
| 430 | 2640 | 2960 | 22 | 10 |
| 428 | 2624 | 1696 | 22 | 8 |
| 427 | 2624 | 3752 | 22 | 7 |
| 425 | 2608 | 2488 | 22 | 5 |
| 423 | 2592 | 1224 | 22 | 3 |
| 422 | 2592 | 3280 | 22 | 2 |
| 420 | 2576 | 2016 | 21 | |
| 419 | 2576 | 4072 | 21 | 19 |
| 418 | 2560 | 752 | 21 | 18 |
| 417 | 2560 | 2808 | 21 | 17 |
| 415 | 2544 | 1544 | 21 | 15 |
| 414 | 2544 | 3600 | 21 | 14 |
| 412 | 2528 | 2336 | 21 | 12 |
| 410 | 2512 | 1072 | 21 | 10 |
| 409 | 2512 | 3128 | 21 | 9 |
| 407 | 2496 | 1864 | 21 | 7 |
| 406 | 2496 | 3920 | 21 | 6 |
| 404 | 2480 | 2656 | 21 | 4 |
| 402 | 2464 | 1392 | 21 | 2 |
| 401 | 2464 | 3448 | 21 | 1 |
| 399 | 2448 | 2184 | 20 | 19 |
| 397 | 2432 | 920 | 20 | 17 |
| 396 | 2432 | 2976 | 20 | 16 |
| 394 | 2416 | 1712 | 20 | 14 |
| 393 | 2416 | 3768 | 20 | 13 |
| 391 | 2400 | 2504 | 20 | 11 |
| 389 | 2384 | 1240 | 20 | 9 |
| 388 | 2384 | 3296 | 20 | 8 |
| 386 | 2368 | 2032 | 20 | 6 |
| 385 | 2368 | 4088 | 20 | 5 |
| 384 | 2352 | 768 | 20 | 4 |
| 383 | 2352 | 2824 | 20 | 3 |
| 381 | 2336 | 1560 | 20 | 1 |
| 380 | 2336 | 3616 | 19 | |
| 378 | 2320 | 2352 | 19 | 18 |
| 376 | 2304 | 1088 | 19 | 16 |
| 375 | 2304 | 3144 | 19 | 15 |
| 373 | 2288 | 1880 | 19 | 13 |
| 372 | 2288 | 3936 | 19 | 12 |
| 371 | 2272 | 616 | 19 | 11 |
| 370 | 2272 | 2672 | 19 | 10 |
| 368 | 2256 | 1408 | 19 | 8 |
| 367 | 2256 | 3464 | 19 | 7 |
| 365 | 2240 | 2200 | 19 | 5 |
| 363 | 2224 | 936 | 19 | 3 |
| 362 | 2224 | 2992 | 19 | 2 |
| 360 | 2208 | 1728 | 18 | |
| 359 | 2208 | 3784 | 18 | 19 |
| 357 | 2192 | 2520 | 18 | 17 |
| 355 | 2176 | 1256 | 18 | 15 |
| 354 | 2176 | 3312 | 18 | 14 |
| 352 | 2160 | 2048 | 18 | 12 |
| 351 | 2160 | 4104 | 18 | 11 |
| 350 | 2144 | 784 | 18 | 10 |

According to the data processing method provided in this embodiment, CRC check needs to be performed, data error detection can be performed, and an existing 800G-ZR CRC technology can be reused, which is easy to implement. Further, when the first bit data is FlexO-4e or 400G-ZR frame data, it can be ensured that a corresponding baud rate is less than 100 GBaud, which can be better compatible with solutions of existing 400G data centers and metropolitan area networks.

In some possible implementations, m is an integer multiple of 32, q=2056, and values of r, m, d_{CP}, p, and r₁ are any group in the following table:

| r | m | d_{CP} | p | r₁ |
|---|---|---|---|---|
| 574 | 3520 | 2576 | 29 | 14 |
| 569 | 3488 | 2104 | 29 | 9 |
| 564 | 3456 | 1632 | 29 | 4 |
| 563 | 3456 | 3688 | 29 | 3 |
| 559 | 3424 | 1160 | 28 | 19 |
| 558 | 3424 | 3216 | 28 | 18 |
| 553 | 3392 | 2744 | 28 | 13 |
| 543 | 3328 | 1800 | 28 | 3 |
| 542 | 3328 | 3856 | 28 | 2 |
| 538 | 3296 | 1328 | 27 | 18 |
| 537 | 3296 | 3384 | 27 | 17 |
| 532 | 3264 | 2912 | 27 | 12 |
| 527 | 3232 | 2440 | 27 | 7 |
| 521 | 3200 | 4024 | 27 | 1 |
| 517 | 3168 | 1496 | 26 | 17 |
| 516 | 3168 | 3552 | 26 | 16 |
| 512 | 3136 | 1024 | 26 | 12 |
| 511 | 3136 | 3080 | 26 | 11 |
| 506 | 3104 | 2608 | 26 | 6 |
| 501 | 3072 | 2136 | 26 | 1 |
| 496 | 3040 | 1664 | 25 | 16 |
| 495 | 3040 | 3720 | 25 | 15 |
| 491 | 3008 | 1192 | 25 | 11 |
| 490 | 3008 | 3248 | 25 | 10 |
| 485 | 2976 | 2776 | 25 | 5 |
| 480 | 2944 | 2304 | 24 | |
| 475 | 2912 | 1832 | 24 | 15 |
| 474 | 2912 | 3888 | 24 | 14 |
| 470 | 2880 | 1360 | 24 | 10 |
| 469 | 2880 | 3416 | 24 | 9 |
| 465 | 2848 | 888 | 24 | 5 |
| 464 | 2848 | 2944 | 24 | 4 |
| 459 | 2816 | 2472 | 23 | 19 |
| 454 | 2784 | 2000 | 23 | 14 |
| 453 | 2784 | 4056 | 23 | 13 |
| 449 | 2752 | 1528 | 23 | 9 |
| 448 | 2752 | 3584 | 23 | 8 |
| 444 | 2720 | 1056 | 23 | 4 |
| 443 | 2720 | 3112 | 23 | 3 |
| 438 | 2688 | 2640 | 22 | 18 |
| 428 | 2624 | 1696 | 22 | 8 |
| 427 | 2624 | 3752 | 22 | 7 |
| 423 | 2592 | 1224 | 22 | 3 |
| 422 | 2592 | 3280 | 22 | 2 |
| 418 | 2560 | 752 | 21 | 18 |
| 417 | 2560 | 2808 | 21 | 17 |
| 412 | 2528 | 2336 | 21 | 12 |
| 407 | 2496 | 1864 | 21 | 7 |
| 406 | 2496 | 3920 | 21 | 6 |
| 402 | 2464 | 1392 | 21 | 2 |
| 401 | 2464 | 3448 | 21 | 1 |
| 397 | 2432 | 920 | 20 | 17 |
| 396 | 2432 | 2976 | 20 | 16 |
| 391 | 2400 | 2504 | 20 | 11 |
| 386 | 2368 | 2032 | 20 | 6 |
| 385 | 2368 | 4088 | 20 | 5 |
| 381 | 2336 | 1560 | 20 | 1 |
| 380 | 2336 | 3616 | 19 | |
| 376 | 2304 | 1088 | 19 | 16 |
| 375 | 2304 | 3144 | 19 | 15 |
| 371 | 2272 | 616 | 19 | 11 |
| 370 | 2272 | 2672 | 19 | 10 |
| 365 | 2240 | 2200 | 19 | 5 |
| 360 | 2208 | 1728 | 18 | |
| 359 | 2208 | 3784 | 18 | 19 |
| 355 | 2176 | 1256 | 18 | 15 |
| 354 | 2176 | 3312 | 18 | 14 |
| 350 | 2144 | 784 | 18 | 10 |

The parameters provided in this embodiment of this application can ensure FEC performance, and hardware implementation is simple and complexity is lower.

In some possible implementations, q=10280, and values of r, m, d_{CP}, p, and r₁ are any group in the following table:

| r | m | d_{CP} | p | r₁ |
|---|---|---|---|---|
| 113 | 3472 | 4952 | 29 | 1 |
| 112 | 3440 | 4480 | 28 | |
| 111 | 3408 | 4008 | 28 | 3 |
| 110 | 3376 | 3536 | 28 | 2 |
| 109 | 3344 | 3064 | 28 | 1 |
| 108 | 3312 | 2592 | 27 | |
| 107 | 3280 | 2120 | 27 | 3 |
| 106 | 3248 | 1648 | 27 | 2 |
| 105 | 3216 | 1176 | 27 | 1 |
| 102 | 3136 | 5136 | 26 | 2 |
| 101 | 3104 | 4664 | 26 | 1 |
| 100 | 3072 | 4192 | 25 | |
| 99 | 3040 | 3720 | 25 | 3 |
| 98 | 3008 | 3248 | 25 | 2 |
| 97 | 2976 | 2776 | 25 | 1 |
| 96 | 2944 | 2304 | 24 | |
| 95 | 2912 | 1832 | 24 | 3 |
| 94 | 2880 | 1360 | 24 | 2 |
| 93 | 2848 | 888 | 24 | 1 |
| 90 | 2768 | 4848 | 23 | 2 |
| 89 | 2736 | 4376 | 23 | 1 |
| 88 | 2704 | 3904 | 22 | |
| 87 | 2672 | 3432 | 22 | 3 |
| 86 | 2640 | 2960 | 22 | 2 |
| 85 | 2608 | 2488 | 22 | 1 |
| 84 | 2576 | 2016 | 21 | |
| 83 | 2544 | 1544 | 21 | 3 |
| 82 | 2512 | 1072 | 21 | 2 |
| 79 | 2432 | 5032 | 20 | 3 |
| 78 | 2400 | 4560 | 20 | 2 |
| 77 | 2368 | 4088 | 20 | 1 |
| 76 | 2336 | 3616 | 19 | |
| 75 | 2304 | 3144 | 19 | 3 |
| 74 | 2272 | 2672 | 19 | 2 |
| 73 | 2240 | 2200 | 19 | 1 |
| 72 | 2208 | 1728 | 18 | |
| 71 | 2176 | 1256 | 18 | 3 |
| 70 | 2144 | 784 | 18 | 2 |

According to the data processing method provided in this embodiment, CRC check needs to be performed, data error detection can be performed, and an existing 800G-ZR CRC technology can be reused, which is easy to implement. Further, when the first bit data is FlexO-4e or 400G-ZR frame data, it can be ensured that a corresponding baud rate is less than 100 GBaud, which can be better compatible with solutions of existing 400G data centers and metropolitan area networks.

In some possible implementations, m is an integer multiple of 32, q=10280, and values of r, m, d_{CP}, p, and r₁ are any group in the following table:

| r | m | d_{CP} | p | r₁ |
|---|---|---|---|---|
| 102 | 3136 | 5136 | 26 | 2 |
| 101 | 3104 | 4664 | 26 | 1 |
| 100 | 3072 | 4192 | 25 | |
| 99 | 3040 | 3720 | 25 | 3 |
| 98 | 3008 | 3248 | 25 | 2 |
| 97 | 2976 | 2776 | 25 | 1 |
| 96 | 2944 | 2304 | 24 | |
| 95 | 2912 | 1832 | 24 | 3 |
| 94 | 2880 | 1360 | 24 | 2 |
| 93 | 2848 | 888 | 24 | 1 |
| 79 | 2432 | 5032 | 20 | 3 |
| 78 | 2400 | 4560 | 20 | 2 |
| 77 | 2368 | 4088 | 20 | 1 |
| 76 | 2336 | 3616 | 19 | |
| 75 | 2304 | 3144 | 19 | 3 |
| 74 | 2272 | 2672 | 19 | 2 |
| 73 | 2240 | 2200 | 19 | 1 |
| 72 | 2208 | 1728 | 18 | |
| 71 | 2176 | 1256 | 18 | 3 |
| 70 | 2144 | 784 | 18 | 2 |

The parameters provided in this embodiment of this application can ensure FEC performance, and hardware implementation is simple and complexity is lower.

In some possible implementations, the third bit subset includes 1504 bits, the first bit subset includes m-1504 bits, and the PCS unit is configured to: divide the first bit subset into 16 sequences, where each sequence includes (m-1504)/16 bits; and perform PCS sub-processing on the 16 sequences respectively to obtain 16 output sequences corresponding to the 16 sequences, where each output sequence includes 128 bits, and the 16 output sequences form the second bit subset.

In some possible implementations, the third bit subset includes 1504 bits, the first bit subset includes m-1504 bits, and performing the probabilistic constellation shaping PCS processing on the first bit subset in the first bit set having the bit quantity of m to obtain the second bit subset includes: dividing the first bit subset into 32 sequences, where each sequence includes (m-1504)/32 bits; and performing PCS sub-processing on the 32 sequences respectively to obtain 32 output sequences corresponding to the 32 sequences, where each output sequence includes 64 bits, and the 32 output sequences form the second bit subset.

In some possible implementations, the data processing apparatus further includes a second processing unit and a digital signal processing DSP framing unit. The second processing unit is configured to perform symbol mapping and polarization distribution on fourth bit data to obtain a dual-polarization symbol sequence, where the symbol mapping and the polarization distribution map 8 bits to one dual-polarization DP-16QAM symbol, and the fourth bit data includes a plurality of second bit sets. The DSP framing unit is configured to perform DSP framing on the dual-polarization symbol sequence to obtain a DSP frame (also referred to as a super-frame).

In some possible implementations, the DSP framing unit is configured to perform framing processing on every 172032 dual-polarization DP-16QAM symbols to obtain a DSP frame.

According to a third aspect, this application provides a chip, where the chip includes a processor, and the processor is configured to perform the method described in any implementation of the first aspect.

According to a fourth aspect, an embodiment of this application provides an optical module. The optical module includes a processor and an interface. The processor is configured to: perform the method described in any implementation of the first aspect, and send a signal through the interface. For example, the interface is configured to: send a signal from the processor or transmit a received signal to the processor.

In some possible implementations, the interface is specifically an electrical interface, and the processor is configured to send an electrical signal through the interface. For example, the processor performs the method described in any implementation of the first aspect, performs data processing on a second bit set to obtain a DSP frame, and sends the DSP frame through the interface. The data processing herein includes symbol mapping, polarization distribution, and DSP framing.

In some possible implementations, the interface is specifically an optical interface, and the optical module further includes a modulator. For example, the processor performs the method described in any implementation of the first aspect, and performs data processing on a second bit set to obtain a DSP frame. Further, the modulator performs signal processing such as electrical-to-optical conversion based on the DSP frame to obtain an optical signal, and then sends the optical signal through the interface. The data processing herein includes symbol mapping, polarization distribution, and DSP framing.

According to a fifth aspect, an embodiment of this application provides a sending device. The sending device includes a host side device and the optical module described in any implementation of the fourth aspect, and the optical module is configured to: generate an optical signal based on data from the host side device, and send the optical signal.

According to a sixth aspect, an embodiment of this application provides a communication system. The communication system includes the sending device described in the fifth aspect and a receiving device. The sending device is configured to send an optical signal to the receiving device.

According to a seventh aspect, this application provides a computer-readable storage medium. The computer-readable storage medium stores instructions, and when the instructions are executed by a computer, the method described in any implementation of the first aspect is implemented.

According to an eighth aspect, this application provides a computer program product. The computer program product includes program instructions, and when the computer program product is executed, the method described in any implementation of the first aspect is implemented.

### BRIEF DESCRIPTION OF DRAWINGS

FIG. 1 is a diagram of a communication system to which an embodiment of this application is applied;
FIG. 2 is a diagram of a structure of a data frame;
FIG. 3 is a diagram of an embodiment of data processing according to an embodiment of this application;
FIG. 4 is a diagram of an embodiment of first sub-processing according to an embodiment of this application;
FIG. 5a is a diagram of an embodiment of second sub-processing according to an embodiment of this application;
FIG. 5b is a diagram of another embodiment of second sub-processing according to an embodiment of this application;
FIG. 5c is a diagram of still another embodiment of second sub-processing according to an embodiment of this application;
FIG. 6 is a diagram of an implementation of performing CRC on data according to an embodiment of this application;
FIG. 7 is a diagram of another implementation of performing CRC on data according to an embodiment of this application;
FIG. 8 is a diagram of another implementation of performing CRC on data according to an embodiment of this application;
FIG. 9 is a diagram of a structure of a data processing apparatus according to an embodiment of this application;
FIG. 10 is a diagram of another structure of a data processing apparatus according to an embodiment of this application;
FIG. 11 is a diagram of a structure of an optical module according to an embodiment of this application; and
FIG. 12 is a diagram of a structure of a sending device according to an embodiment of this application.

### DESCRIPTION OF EMBODIMENTS

Embodiments of this application provide a data processing method and a data processing apparatus. FEC encoding is used in combination with a PCS technology to reduce a baud rate needed in a solution, so that overall data processing operations are simpler, complexity is lower, and power consumption is lower, to adapt to long-haul transmission scenarios.

It should be noted that in the specification, claims, and the foregoing accompanying drawings of this application, the terms "first", "second", and the like are intended to distinguish between similar objects but do not limit a specific order or sequence. It should be understood that the foregoing terms may be interchanged in proper cases, so that embodiments described in this application can be implemented in an order other than the content described in this application. In addition, the terms "include", "have", and any other variant thereof are intended to cover a non-exclusive inclusion. For example, a process, method, system, product, or device that includes a list of steps or units is not necessarily limited to those expressly enumerated steps or units, but may include other steps or units not expressly enumerated or inherent to such a process, method, product, or device.

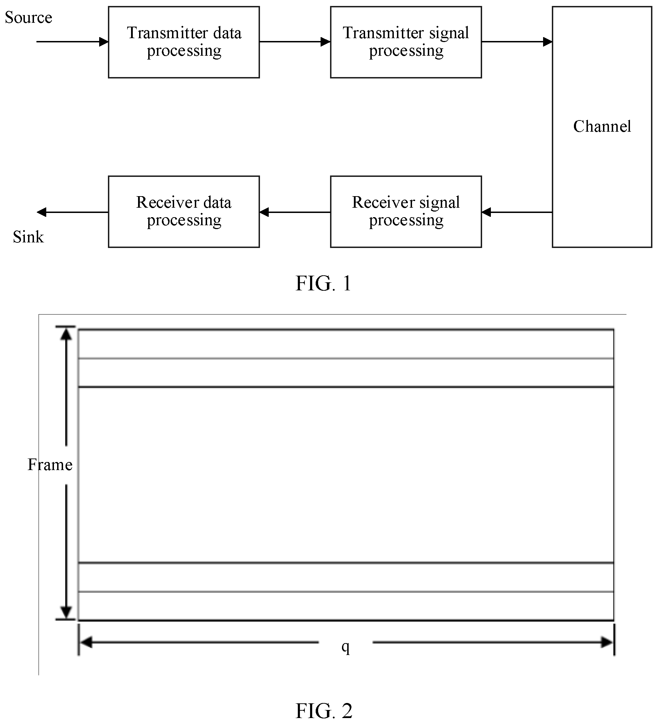

FIG. 1 is a diagram of a communication system to which an embodiment of this application is applied. As shown in FIG. 1, at a transmitter, a source provides a to-be-sent data stream, and a transmitter data processor receives the data stream. The transmitter data processor first performs, on the data stream, data processing including PCS processing, encoding, interleaving, symbol mapping, and DSP framing to obtain a symbol data stream, and then sends the symbol data stream to a transmitter signal processor for signal processing. Then, the symbol data stream is transmitted to a receiving device through a channel. After receiving a distorted signal caused by noise or other impairments on the channel, the receiving device sends the signal to a receiver signal processor for operations such as dispersion compensation, synchronization, and phase recovery. Then, the signal is sent to a receiver data processor for operations including demodulation, de-interleaving, decoding, and the like, to recover original data, and the recovered data is sent to a sink. In some specific applications, the transmitter data processor may be implemented in an optical module (optical module). For example, the optical module may be a 400G long-haul (Long-Haul, LH) module (400G-LH module, a coherent optical module).

It should be noted that in some operation symbols in formulas in embodiments of this application: An operation $\left⌊a\right⌋$ in embodiments of this application indicates performing a floor operation on a. For example, $\left⌊1.5\right⌋ = 1$, and $\left⌊-1.5\right⌋ = - 2$. An operation b%c in embodiments of this application indicates that a modulo operation of b mod c is performed. When b is a non-negative number, a remainder obtained by dividing b by c is used as a value of b%c. For example, 8%3=2 and 2%3=2. When b is a negative number, a value of b%c is obtained by performing a modulo operation on a positive integer obtained by adding an integer multiple of c to b. For example, - 9%16=7 and -10%3=2.

It should be noted that a bit set and a bit subset in the specification and the claims of this application are merely concepts introduced for ease of description. In actual application, the data stream is a whole and there is no division, and each bit set and each bit subset may be considered as one or more bits in the data stream. It should be understood that the bit set and the bit subset may alternatively be presented in the form of a matrix, an array, a sequence, or the like. This is not specifically limited herein.

FIG. 2 is a diagram of a structure of a data frame (frame). As shown in FIG. 2, the data frame includes a plurality of rows of bits, and each row includes q bits. It should be understood that a specific type of the data frame is not limited in this application. In an example, a 400G frame includes 256 rows, and each row includes 10280 bits. In another example, to better adapt to PCS processing, a 400G frame includes 1280 rows, and each row includes 2056 bits. In some specific applications, the integer q is an integer multiple of 257. Typically, q is 10280, 8224, 5140, 4112, 2056, or the like.

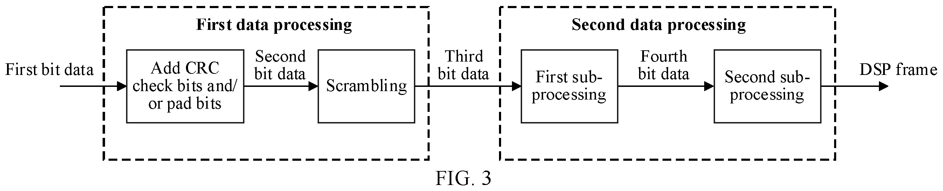

It should be noted that the data processing method provided in this application may be divided into two parts, which are respectively denoted as "first data processing" and "second data processing", as shown in FIG. 3. The following separately describes in detail the "first data processing" and the "second data processing".

### (1) First data processing

As shown in FIG. 3, the first data processing includes adding cyclic redundancy check (Cyclic Redundancy Check, CRC) bits and/or padding (Padding) bits, and scrambling (scrambling). In actual application, at least one operation of adding a CRC and inserting padding bits may be performed.

In an example, first bit data has a total of dᵢₙ = q × r bits. Then, a manner of obtaining second bit data based on the first bit data having the bit quantity of dᵢₙ may be: adding CRC check bits and/or padding bits to the first bit data to obtain the second bit data. d_{CRC} CRC check bits are added in the CRC operation, and d_{PAD} padding (Padding) bits are inserted in the padding bit addition operation. Further, the second bit data including d_{scr} = q × r + d_{CRC} + d_{PAD} bits is scrambled to obtain third bit data having a bit quantity of d_{scr}, where d_{CRC} is an integer greater than or equal to 0, d_{PAD} is an integer greater than or equal to 0, and d_{CP} = d_{CRC} + d_{PAD} may be denoted. In this case, d_{scr} = q × r + d_{CP}. In this case, an overhead corresponding to the CRC check and the padding bit insertion is OH_{CP} = d_{scr}/dᵢₙ - 1 = (d_{CRC} + d_{PAD})/(q × r). It should be noted that, in some specific applications, the padding (Padding) bits are all 0 bits.

In an example, when d_{PAD} = 0, no padding bit is added to CRC-checked q × r + d_{CRC} bits, but scrambling is directly performed. In another example, to achieve a lower delay and lower complexity, the CRC check bits are bypassed (bypassed) and replaced by padding bits. That is, in this case, d_{CRC} = 0.

It should be noted that, in some specific application scenarios, CRC-32 is used for the CRC check. In an example, CRC-32 operations are performed for a total of p times on the first bit data, where p is an integer greater than 1, and the integer r is divisible by p, that is, r/p is an integer. In this case, d_{CRC} = 32 × p. More specifically, for r rows of data obtained from a data frame, a CRC-32 operation is performed on a total of q × r/p bits in every r/p rows, to add 32 check bits, and CRC-32 operations are repeatedly performed p times to add CRC-32 check bits with a total of d_{CRC} = 32 × p bits. It should be noted that, in some specific implementations, q × r/p =41120 is selected. In this case, CRC-32 encoding and a corresponding CRC detection operation may directly adopt a CRC-32 operation in the existing 800G-ZR, where a CRC-32 operation is performed on data with a total of 4 × 10280 =41120 bits in 4 rows and 10280 columns in existing 800G-ZR. In some specific implementations, q = 2056, and r/p = 20 are selected.

It should be noted that, in some other specific application scenarios, CRC-32 operations are performed for a total of p times on the first bit data, where the quantity p of times of CRC-32 operations is an integer greater than 1, but the integer r is not divisible by p, that is, r/p is not an integer. In this case, it is considered that r₀ × (p - 1) + r₁ = r, where the integer r₀ is greater than the integer r₁. In some specific implementations, the integer ${r}_{0} = \left⌊r/p\right⌋ + 1$, the integer r₁ = r - r₀ × (p - 1), and r₀ > r₁. The following provides a specific implementation. For r rows of data obtained from a data frame, a CRC-32 check is performed on a total of q × r₀ bits in every r₀ rows in first r₀ × (p - 1) rows of the r rows of data, and 32 check bits are added to obtain a total of 32 × (p - 1) CRC check bits; and a CRC-32 operation is performed once on a total of q × r₁ bits in last r₁ rows, and 32 check bits are added to obtain a total of d_{CRC} = 32 × (p - 1) + 32 = 32 × p CRC-32 check bits. It should be noted that, in some specific implementations, q × r₀ =41120 is selected. In this case, CRC-32 encoding and a corresponding CRC detection operation may directly adopt a CRC-32 operation in the existing 800G-ZR, where a CRC-32 operation is performed on data with a total of 4 × 10280 =41120 bits in 4 rows and 10280 columns in existing 800G-ZR. In some specific implementations, q = 2056, and r₀ = 20 are selected.

### (2) Second data processing

As shown in FIG. 3, the second data processing includes first sub-processing and second sub-processing. The third bit data output from the first data processing includes L first bit sets, and a bit quantity of each first bit set is m. In this case, d_{scr} = q × r + d_{CP} = L × m. In the first sub-processing in the second data processing, processing including PCS, interleaving, and encoding is performed on each of the L first bit sets to obtain a second bit set, and a total of L second bit sets are obtained. In the second sub-processing in the second data processing, data processing including symbol mapping (Symbol Mapping), polarization distribution (Polarization Distribution), and DSP framing (framing) is performed on fourth bit data including the L second bit sets to obtain a DSP frame (which may also be referred to as a DSP super-frame). In this case, after the first data processing and the second data processing are performed on the first bit data with a total of dᵢₙ = q × r bits, a DSP frame is exactly obtained, so that the proposed data processing method has low implementation complexity and lower power consumption.

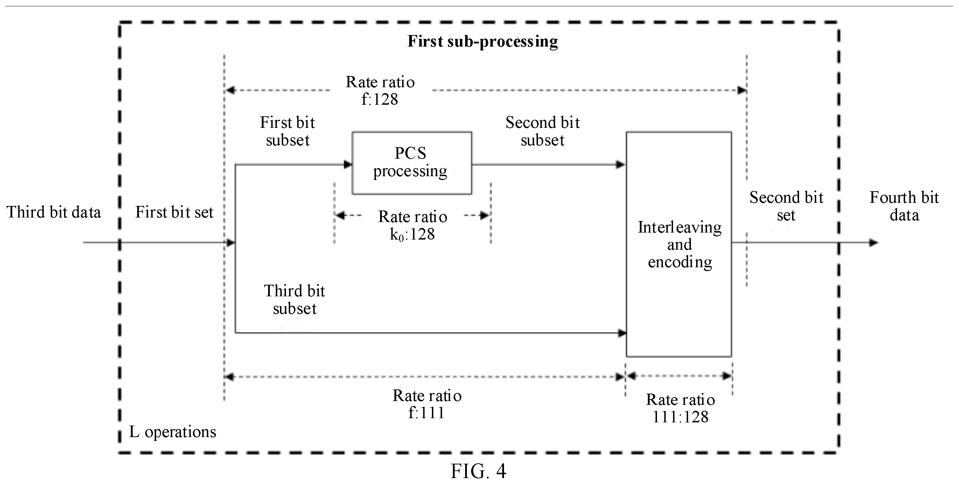

The following describes detailed operations of the first sub-processing in the second data processing. As shown in FIG. 4, the first bit set includes a first bit subset and a third bit subset; probabilistic constellation shaping PCS processing is performed on the first bit subset to obtain a second bit subset; and processing including interleaving and FEC encoding is performed on the second bit subset and the third bit subset to obtain the second bit set.

It should be noted that, in an embodiment of this application, it is considered that a bit quantity of the second bit set is 4096 bits, a bit quantity of the second bit subset is 2048 bits, a bit quantity of the third bit subset is 1504 bits, and a bit quantity of the first bit subset is v =m-1504 bits. During the encoding, a total of 2048+1504=3552 bits in the third bit subset and the second bit subset are encoded to add check bits to obtain 4096 encoded bits. More specifically, the 3552 bits are represented by using a bit matrix with 32 rows and 111 columns, which is also referred to as an information bit matrix. During the encoding, 111 bits in each row are encoded to add 17 bits to obtain a total of 4096 encoded bits in 32 rows and 128 columns. A bit matrix with 32 rows and 128 columns is also referred to as a codeword bit matrix. The encoding is spatial coupling encoding. To be specific, when 3552 bits are encoded at a current moment to obtain 4096 encoded bits, 4096 encoded bits obtained through encoding at a previous moment are further used. For example, the encoding is OFEC encoding. This is not specifically limited herein. It should be understood herein that m<3552.

It should be noted that, before the FEC encoding is performed, pre-FEC interleaving may be further performed on the 3552 bits. The pre-FEC interleaving is also referred to as block mapping (Block Map), may be referred to as pre-FEC interleaving (pre-FEC interleaver), or may be referred to as pre-FEC permutation (pre-FEC Permutation). After the FEC encoding is performed, post-FEC interleaving may further be performed on the 4096 encoded bits. Herein, the pre-FEC interleaving and the post-FEC interleaving are collectively referred to as interleaving, and are not specifically limited. It should be noted that, the L second bit sets obtained through the first sub-processing may be further interleaved and then the second sub-processing is performed. This is not specifically limited herein.

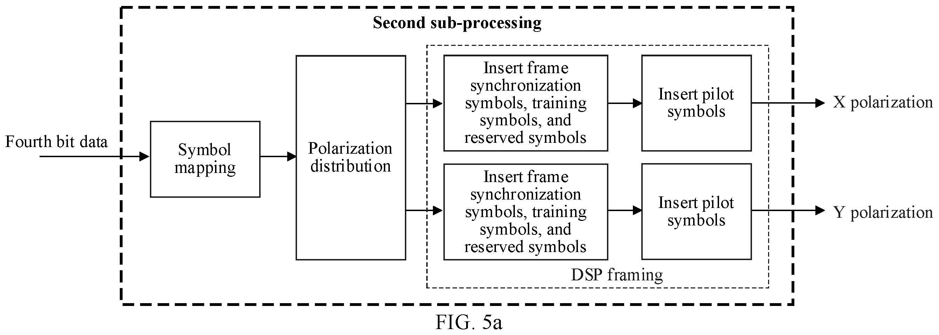

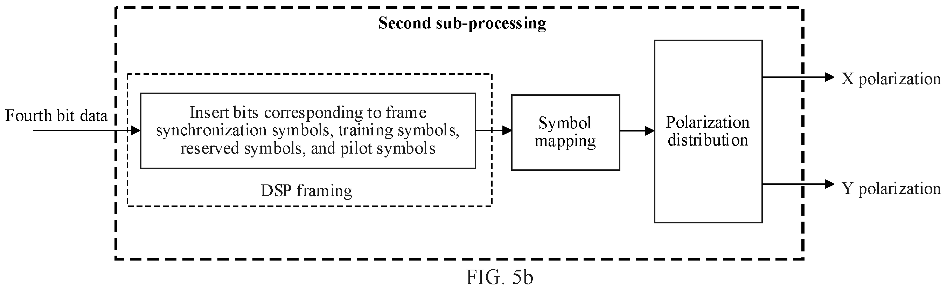

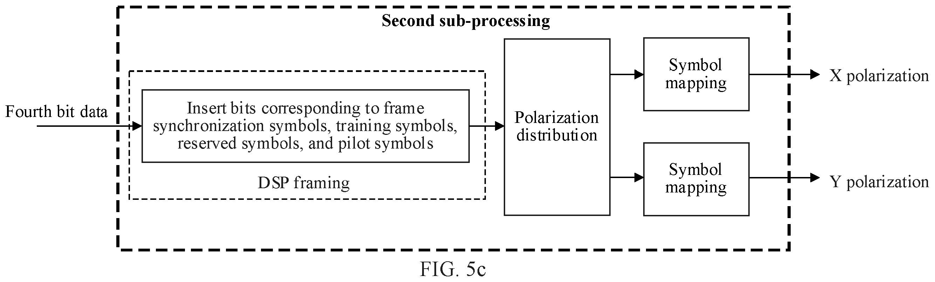

The following describes detailed operations of the second sub-processing in the second data processing. The second sub-processing includes symbol mapping (Symbol Mapping), polarization distribution (Polarization Distribution), and DSP framing (framing). For understanding, refer to FIG. 5a, FIG. 5b, or FIG. 5c.

As shown in FIG. 5a, a dual-polarization symbol sequence is obtained by performing the symbol mapping (Symbol Mapping) and the polarization distribution (Polarization Distribution) on the fourth bit data. The dual-polarization symbol sequence is also referred to as a pre-framing symbol sequence. It should be noted that the symbol mapping and the polarization distribution may also be referred to as dual-polarization (Dual-polarization, DP for short) symbol mapping for short. For example, 16QAM symbol mapping and polarization distribution may be referred to as DP-16QAM symbol mapping or DP-16QAM mapping for short. The symbol mapping maps every 4 bits in the fourth bit data to one symbol. The symbol mapping and polarization distribution (that is, the dual-polarization symbol mapping) map every 8 bits in the fourth bit data to one dual-polarization symbol, where one dual-polarization symbol includes one symbol in an X polarization (X polarization) direction and one symbol in a Y polarization (Y polarization) direction. Then, in the second sub-processing, the DSP framing (framing) operation is performed on the dual-polarization symbol sequence (pre-framing symbol sequence). Specifically, at least one of a frame alignment word sequence (Frame Alignment Word Sequence, FAW Sequence for short), a training symbol sequence (Training symbol Sequence), a reserved symbol (Reserved symbol) sequence, and a pilot symbol sequence (Pilot symbol Sequence) is inserted in the X polarization direction and the Y polarization direction respectively to obtain the to-be-sent dual-polarization symbol sequence, which is also referred to as a DSP frame. For example, in the DSP framing operation, DSP framing processing is performed on every 172032 dual-polarization symbols to obtain a DSP frame.

In some specific applications, in the DSP framing operation, DSP framing processing is performed on every 172032 dual-polarization symbols (pre-framing symbols) to obtain a DSP frame including 178176 dual-polarization symbols, and an overhead of the DSP framing is *h*_{DSP} = 178176/172032 - 1 = 1/28 ≈ 3.57%. In some other specific applications, in the DSP framing operation, DSP framing processing is performed on every 172032 dual-polarization symbols (pre-framing symbols) to obtain a DSP frame including 175104 dual-polarization symbols, and an overhead of the DSP framing is *h*_{DSP} = 175104/172032 - 1 = 1/56 ≈ 1.79% . In some embodiments, in the X polarization direction or the Y polarization direction, one symbol at a fixed position in every *N*_{G} symbols of the DSP frame is a pilot symbol. In an example, a 1^{st} symbol in every *N*_{G} symbols is a pilot symbol. Typically, *N*_{G} = 32, 64, 96, 128, or the like. In some specific applications, the symbol mapping is referred to as 16QAM mapping.

It should be noted that frame synchronization symbols are used for frame synchronization and alignment, training symbols are used for link training, pilot symbols are used for carrier phase recovery, and reserved symbols are used for future use and innovation. A value of the reserved symbol may be known and unchanged, or may be randomized (randomized). The value of the reserved symbol may also be referred to as a pattern (pattern). In some specific embodiments, the DSP frame includes a plurality of subframes (subframes), and the DSP frame may be referred to as a super-frame (super-frame). In some other specific embodiments, the DSP frame may also be referred to as a multi-frame (multi-frame), the reserved symbol may also be referred to as a fixed stuff (fixed stuff, FS), and the frame synchronization symbol may also be referred to as a multi-frame alignment signal (multi-frame alignment signal, MFAS).

It should be noted that the DSP framing operation shown in FIG. 5a is performed on symbols (symbols). That is, the DSP framing is performed after the symbol mapping operation. The DSP framing operation may alternatively be performed on bits (bits), as shown in FIG. 5b and FIG. 5c. The DSP framing is performed before the symbol mapping operation. FIG. 5b is a diagram of another embodiment of second sub-processing according to an embodiment of this application. As shown in FIG. 5b, in the DSP framing operation, before the symbol mapping, bits corresponding to a frame alignment word sequence, a training symbol sequence, a reserved symbol sequence, and a pilot symbol sequence are inserted into the fourth bit data. Then, the symbol mapping and the polarization distribution are performed to obtain a DSP frame (also referred to as a super-frame) that is the same as that in the operation in FIG. 5a. FIG. 5c is a diagram of still another embodiment of second sub-processing according to an embodiment of this application. As shown in FIG. 5c, in the DSP framing operation, before symbol mapping, bits corresponding to a frame alignment word sequence, a training symbol sequence, a reserved symbol sequence, and a pilot symbol sequence are inserted into the fourth bit data. Then, the polarization distribution and the symbol mapping are performed to obtain a DSP frame (also referred to as a super-frame) that is the same as that in the operation in FIG. 5a. It should be understood that there may be another framing operation. Details are not described in this application.

In this application, considering that in the DSP framing operation, DSP framing processing is performed on every 172032 dual-polarization DP-16QAM symbols (pre-framing symbols) to obtain a DSP frame (also referred to as a super-frame), a bit quantity of the fourth bit data including the L second bit sets is 172032 × 8 = 1376256. Considering that the bit quantity of the second bit set is 4096 bits, L = 1376256/4096 = 336. In this case, d_{scr} = q × r + d_{CP} = L × m = 336 × m.

It should be noted that in the PCS processing, input bits are processed, so that occurrence probabilities of 0 and 1 in output bits are different. In some specific applications, the PCS processing may also be referred to as processing performed by using a distribution matcher (Distribution Matcher, DM). The PCS processing may be implemented by using a plurality of specific manners, for example, arithmetic coding (arithmetic coding), lookup tables (lookup tables, LUTs), or trellis coding (trellis coding).

To simplify implementation of the PCS processing, a plurality of PCS sub-processing operations are usually used to implement effects of the PCS processing. In each PCS sub-processing operation, PCS sub-processing is performed on k₀ input bits to obtain n₀ output bits, where n₀ > k₀. It should be noted that a larger value of n₀ indicates better PCS processing performance but higher complexity. In actual application, a compromise between performance and complexity needs to be made. Typically, it is considered that n₀ = 128 or 64. In some specific applications, the PCS processing may be implemented by using a plurality of lookup tables (lookup tables, LUTs), that is, each PCS sub-processing operation is implemented by using lookup table LUT processing. For each lookup table, LUT mapping is performed on the k₀ input bits to obtain the n₀ output bits, where n₀ > k₀. In this case, the PCS processing may also be referred to as PCS LUT processing.

In some specific applications, the lookup table LUT processing may alternatively be implemented by using a plurality of lookup sub-tables, to reduce complexity. In some specific implementations, quantities of input bits of the plurality of lookup sub-tables may be different, and quantities of output bits may also be different. For example, for each lookup table, LUT mapping is performed on the k₀ input bits to obtain the n₀ = 128 output bits. The lookup table includes 12 lookup sub-tables, where a quantity of output bits of four lookup sub-tables is 10, a quantity of output bits of eight lookup sub-tables is 11, and a total of 4 × 10 + 8 × 11 = 128 output bits of the 12 lookup sub-tables is used as the n₀ = 128 output bits of the lookup table.

In an embodiment, the PCS processing is performed on the first bit subset including v = m - 1504 bits to obtain the second bit subset including 2048 bits. In this embodiment of this application, considering that a specific value of n₀ is 128, 64, 32, or 16, specific implementation of the PCS processing can be facilitated, and complexity is low. In other words, v = m - 1504 is an integer multiple of 2048/128=16, 2048/64=32, 2048/32=64, or 2048/16=128. Herein, considering that v = m - 1504 is an integer multiple of 2048/128=16, and m < 3552, m is also an integer multiple of 16.

In some specific applications, performing the probabilistic constellation shaping PCS processing on the first bit subset in the first bit set having the bit quantity of m to obtain the second bit subset including 2048 bits includes: dividing the first bit subset into 16 sequences, where each sequence includes (m-1504)/16 bits; and performing PCS sub-processing on the 16 sequences respectively to obtain 16 output sequences corresponding to the 16 sequences, where each output sequence includes 128 bits, and the 16 output sequences form the second bit subset with 128×16=2048 bits.

In some other specific applications, performing the probabilistic constellation shaping PCS processing on the first bit subset in the first bit set having the bit quantity of m to obtain the second bit subset including 2048 bits includes: dividing the first bit subset into 32 sequences, where each sequence includes (m-1504)/32 bits; and performing PCS sub-processing on the 32 sequences respectively to obtain 32 output sequences corresponding to the 32 sequences, where each output sequence includes 64 bits, and the 32 output sequences form the second bit subset with 64×32=2048 bits.

The first bit data includes bits in r rows and q columns, with a total of dᵢₙ = q × r bits. The following separately describes two cases in which q = 2056 and q = 10280.

**According to a first aspect, a case in which q = 2056 is considered.**

The bit quantity of the third bit data is d_{scr} = q × r + d_{CP} = L × m = 336 × m. It should be understood that a larger quantity d_{CP} of bits of added CRC check bits and/or padding bits indicates a greater introduced overhead OH_{CP} = d_{CP}/(q × r). For transmission effectiveness, herein, considering that 0 ≤ d_{CP} < 2 × q = 4112, transmission performance can be ensured and an overhead can be low. The following Table 1 shows a corresponding parameter combination {dᵢₙ, r, m, d_{CP}}.

**Table 1**

| dᵢₙ | r | m | d_{CP} | v/16 |
|---|---|---|---|---|
| 1186312 | 577 | 3536 | 1784 | 127 |
| 1184256 | 576 | 3536 | 3840 | 127 |
| 1182200 | 575 | 3520 | 520 | 126 |
| 1180144 | 574 | 3520 | 2576 | 126 |
| 1176032 | 572 | 3504 | 1312 | 125 |
| 1173976 | 571 | 3504 | 3368 | 125 |
| 1171920 | 570 | 3488 | 48 | 124 |
| 1169864 | 569 | 3488 | 2104 | 124 |
| 1165752 | 567 | 3472 | 840 | 123 |
| 1163696 | 566 | 3472 | 2896 | 123 |
| 1159584 | 564 | 3456 | 1632 | 122 |
| 1157528 | 563 | 3456 | 3688 | 122 |
| 1155472 | 562 | 3440 | 368 | 121 |
| 1153416 | 561 | 3440 | 2424 | 121 |
| 1149304 | 559 | 3424 | 1160 | 120 |
| 1147248 | 558 | 3424 | 3216 | 120 |
| 1143136 | 556 | 3408 | 1952 | 119 |
| 1141080 | 555 | 3408 | 4008 | 119 |
| 1139024 | 554 | 3392 | 688 | 118 |
| 1136968 | 553 | 3392 | 2744 | 118 |
| 1132856 | 551 | 3376 | 1480 | 117 |
| 1130800 | 550 | 3376 | 3536 | 117 |
| 1128744 | 549 | 3360 | 216 | 116 |
| 1122576 | 546 | 3344 | 1008 | 115 |
| 1120520 | 545 | 3344 | 3064 | 115 |
| 1116408 | 543 | 3328 | 1800 | 114 |
| 1114352 | 542 | 3328 | 3856 | 114 |
| 1112296 | 541 | 3312 | 536 | 113 |
| 1110240 | 540 | 3312 | 2592 | 113 |
| 1106128 | 538 | 3296 | 1328 | 112 |
| 1104072 | 537 | 3296 | 3384 | 112 |
| 1102016 | 536 | 3280 | 64 | 111 |
| 1099960 | 535 | 3280 | 2120 | 111 |
| 1095848 | 533 | 3264 | 856 | 110 |
| 1093792 | 532 | 3264 | 2912 | 110 |
| 1089680 | 530 | 3248 | 1648 | 109 |
| 1087624 | 529 | 3248 | 3704 | 109 |
| 1085568 | 528 | 3232 | 384 | 108 |
| 1083512 | 527 | 3232 | 2440 | 108 |
| 1079400 | 525 | 3216 | 1176 | 107 |
| 1077344 | 524 | 3216 | 3232 | 107 |
| 1071176 | 521 | 3200 | 4024 | 106 |
| 1069120 | 520 | 3184 | 704 | 105 |
| 1067064 | 519 | 3184 | 2760 | 105 |
| 1062952 | 517 | 3168 | 1496 | 104 |
| 1060896 | 516 | 3168 | 3552 | 104 |
| 1058840 | 515 | 3152 | 232 | 103 |
| 1056784 | 514 | 3152 | 2288 | 103 |
| 1052672 | 512 | 3136 | 1024 | 102 |
| 1050616 | 511 | 3136 | 3080 | 102 |
| 1046504 | 509 | 3120 | 1816 | 101 |
| 1044448 | 508 | 3120 | 3872 | 101 |
| 1042392 | 507 | 3104 | 552 | 100 |
| 1040336 | 506 | 3104 | 2608 | 100 |
| 1036224 | 504 | 3088 | 1344 | 99 |
| 1034168 | 503 | 3088 | 3400 | 99 |
| 1032112 | 502 | 3072 | 80 | 98 |
| 1030056 | 501 | 3072 | 2136 | 98 |
| 1025944 | 499 | 3056 | 872 | 97 |
| 1023888 | 498 | 3056 | 2928 | 97 |
| 1019776 | 496 | 3040 | 1664 | 96 |
| 1017720 | 495 | 3040 | 3720 | 96 |
| 1015664 | 494 | 3024 | 400 | 95 |
| 1013608 | 493 | 3024 | 2456 | 95 |
| 1009496 | 491 | 3008 | 1192 | 94 |
| 1007440 | 490 | 3008 | 3248 | 94 |
| 1003328 | 488 | 2992 | 1984 | 93 |
| 1001272 | 487 | 2992 | 4040 | 93 |
| 999216 | 486 | 2976 | 720 | 92 |
| 997160 | 485 | 2976 | 2776 | 92 |
| 993048 | 483 | 2960 | 1512 | 91 |
| 990992 | 482 | 2960 | 3568 | 91 |
| 988936 | 481 | 2944 | 248 | 90 |
| 986880 | 480 | 2944 | 2304 | 90 |
| 982768 | 478 | 2928 | 1040 | 89 |
| 980712 | 477 | 2928 | 3096 | 89 |
| 976600 | 475 | 2912 | 1832 | 88 |
| 974544 | 474 | 2912 | 3888 | 88 |
| 972488 | 473 | 2896 | 568 | 87 |
| 970432 | 472 | 2896 | 2624 | 87 |
| 966320 | 470 | 2880 | 1360 | 86 |
| 964264 | 469 | 2880 | 3416 | 86 |
| 962208 | 468 | 2864 | 96 | 85 |
| 960152 | 467 | 2864 | 2152 | 85 |
| 956040 | 465 | 2848 | 888 | 84 |
| 953984 | 464 | 2848 | 2944 | 84 |
| 949872 | 462 | 2832 | 1680 | 83 |
| 947816 | 461 | 2832 | 3736 | 83 |
| 945760 | 460 | 2816 | 416 | 82 |
| 943704 | 459 | 2816 | 2472 | 82 |
| 939592 | 457 | 2800 | 1208 | 81 |
| 937536 | 456 | 2800 | 3264 | 81 |
| 933424 | 454 | 2784 | 2000 | 80 |
| 931368 | 453 | 2784 | 4056 | 80 |
| 929312 | 452 | 2768 | 736 | 79 |
| 927256 | 451 | 2768 | 2792 | 79 |
| 923144 | 449 | 2752 | 1528 | 78 |
| 921088 | 448 | 2752 | 3584 | 78 |
| 919032 | 447 | 2736 | 264 | 77 |
| 916976 | 446 | 2736 | 2320 | 77 |
| 912864 | 444 | 2720 | 1056 | 76 |
| 910808 | 443 | 2720 | 3112 | 76 |
| 906696 | 441 | 2704 | 1848 | 75 |
| 904640 | 440 | 2704 | 3904 | 75 |
| 902584 | 439 | 2688 | 584 | 74 |
| 900528 | 438 | 2688 | 2640 | 74 |
| 896416 | 436 | 2672 | 1376 | 73 |
| 894360 | 435 | 2672 | 3432 | 73 |
| 892304 | 434 | 2656 | 112 | 72 |
| 886136 | 431 | 2640 | 904 | 71 |
| 884080 | 430 | 2640 | 2960 | 71 |
| 879968 | 428 | 2624 | 1696 | 70 |
| 877912 | 427 | 2624 | 3752 | 70 |
| 875856 | 426 | 2608 | 432 | 69 |
| 873800 | 425 | 2608 | 2488 | 69 |
| 869688 | 423 | 2592 | 1224 | 68 |
| 867632 | 422 | 2592 | 3280 | 68 |
| 863520 | 420 | 2576 | 2016 | 67 |
| 861464 | 419 | 2576 | 4072 | 67 |
| 859408 | 418 | 2560 | 752 | 66 |
| 857352 | 417 | 2560 | 2808 | 66 |
| 853240 | 415 | 2544 | 1544 | 65 |
| 851184 | 414 | 2544 | 3600 | 65 |
| 849128 | 413 | 2528 | 280 | 64 |
| 847072 | 412 | 2528 | 2336 | 64 |
| 842960 | 410 | 2512 | 1072 | 63 |
| 840904 | 409 | 2512 | 3128 | 63 |
| 836792 | 407 | 2496 | 1864 | 62 |
| 834736 | 406 | 2496 | 3920 | 62 |
| 832680 | 405 | 2480 | 600 | 61 |
| 830624 | 404 | 2480 | 2656 | 61 |
| 826512 | 402 | 2464 | 1392 | 60 |
| 824456 | 401 | 2464 | 3448 | 60 |
| 822400 | 400 | 2448 | 128 | 59 |
| 820344 | 399 | 2448 | 2184 | 59 |
| 816232 | 397 | 2432 | 920 | 58 |
| 814176 | 396 | 2432 | 2976 | 58 |
| 810064 | 394 | 2416 | 1712 | 57 |
| 808008 | 393 | 2416 | 3768 | 57 |
| 805952 | 392 | 2400 | 448 | 56 |
| 803896 | 391 | 2400 | 2504 | 56 |
| 799784 | 389 | 2384 | 1240 | 55 |
| 797728 | 388 | 2384 | 3296 | 55 |
| 793616 | 386 | 2368 | 2032 | 54 |
| 791560 | 385 | 2368 | 4088 | 54 |
| 789504 | 384 | 2352 | 768 | 53 |
| 787448 | 383 | 2352 | 2824 | 53 |
| 783336 | 381 | 2336 | 1560 | 52 |
| 781280 | 380 | 2336 | 3616 | 52 |
| 779224 | 379 | 2320 | 296 | 51 |
| 777168 | 378 | 2320 | 2352 | 51 |
| 773056 | 376 | 2304 | 1088 | 50 |
| 771000 | 375 | 2304 | 3144 | 50 |
| 766888 | 373 | 2288 | 1880 | 49 |
| 764832 | 372 | 2288 | 3936 | 49 |
| 762776 | 371 | 2272 | 616 | 48 |
| 760720 | 370 | 2272 | 2672 | 48 |
| 756608 | 368 | 2256 | 1408 | 47 |
| 754552 | 367 | 2256 | 3464 | 47 |
| 752496 | 366 | 2240 | 144 | 46 |
| 750440 | 365 | 2240 | 2200 | 46 |
| 746328 | 363 | 2224 | 936 | 45 |
| 744272 | 362 | 2224 | 2992 | 45 |
| 740160 | 360 | 2208 | 1728 | 44 |
| 738104 | 359 | 2208 | 3784 | 44 |
| 736048 | 358 | 2192 | 464 | 43 |
| 733992 | 357 | 2192 | 2520 | 43 |
| 729880 | 355 | 2176 | 1256 | 42 |
| 727824 | 354 | 2176 | 3312 | 42 |
| 723712 | 352 | 2160 | 2048 | 41 |
| 721656 | 351 | 2160 | 4104 | 41 |
| 719600 | 350 | 2144 | 784 | 40 |

Table 1 further provides a specific value of v/16 corresponding to the parameter combination {dᵢₙ, r, m, d_{CP}}. It should be noted that, v = m - 1504 is an integer multiple of 16. When n₀ = 128, k₀ = v/16. In other words, 16 PCS sub-processing operations are used in the PCS processing to implement effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It should be noted that, in some specific applications, the first data processing includes the cyclic redundancy check CRC-32 operation. In this case, the following first constraint is considered: When the quantity r of rows is an integer multiple of 20, there are p = r/20 times of CRC-32 operations, and d_{CRC} = r/20 × 32 ≤ d_{CP}. In other words, the CRC-32 operations are performed on a total of 20× 2056 =41120 bits in every 20 rows of the r rows of data. When the quantity r of rows is not an integer multiple of 20, there are $p = \left⌊r/20\right⌋ + 1$ times of CRC-32 operations, and ${d}_{CRC} = \left(\left⌊r/20\right⌋+1\right) \times 32 \leq {d}_{CP}$, where an operation $\left⌊a\right⌋$ indicates performing a floor operation on a. In other words, r₀ = 20, r₁ = r - 20 × (p - 1), CRC-32 is performed on a total of q × r₀ = 41120 bits in every r₀ = 20 rows in first 20 × (p - 1) rows of the r rows of data, and a CRC-32 operation is performed once on a total of q × r₁ bits in last r₁ rows. It is considered that d_{PAD} = d_{CP} - d_{CRC}. With reference to Table 1 and the first constraint, the following Table 2 provides a corresponding parameter combination {r, m, d_{CP}, d_{PAD}, p}. It should be noted that the last column in Table 2 further provides a specific value of a corresponding parameter r₁ when the quantity r of rows is not an integer multiple of 20. When the quantity r of rows is an integer multiple of 20, for example, as shown by r=540 in the row 23 in Table 2, a corresponding parameter r₁ is represented by a slash in the table, indicating that the parameter r₁ does not exist.

**Table 2**

| r | m | d_{CP} | d_{PAD} | p | v/16 | r₁ |
|---|---|---|---|---|---|---|
| 577 | 3536 | 1784 | 856 | 29 | 127 | 17 |
| 576 | 3536 | 3840 | 2912 | 29 | 127 | 16 |
| 574 | 3520 | 2576 | 1648 | 29 | 126 | 14 |
| 572 | 3504 | 1312 | 384 | 29 | 125 | 12 |
| 571 | 3504 | 3368 | 2440 | 29 | 125 | 11 |
| 569 | 3488 | 2104 | 1176 | 29 | 124 | 9 |
| 566 | 3472 | 2896 | 1968 | 29 | 123 | 6 |
| 564 | 3456 | 1632 | 704 | 29 | 122 | 4 |
| 563 | 3456 | 3688 | 2760 | 29 | 122 | 3 |
| 561 | 3440 | 2424 | 1496 | 29 | 121 | 1 |
| 559 | 3424 | 1160 | 264 | 28 | 120 | 19 |
| 558 | 3424 | 3216 | 2320 | 28 | 120 | 18 |
| 556 | 3408 | 1952 | 1056 | 28 | 119 | 16 |
| 555 | 3408 | 4008 | 3112 | 28 | 119 | 15 |
| 553 | 3392 | 2744 | 1848 | 28 | 118 | 13 |
| 551 | 3376 | 1480 | 584 | 28 | 117 | 11 |
| 550 | 3376 | 3536 | 2640 | 28 | 117 | 10 |
| 546 | 3344 | 1008 | 112 | 28 | 115 | 6 |
| 545 | 3344 | 3064 | 2168 | 28 | 115 | 5 |
| 543 | 3328 | 1800 | 904 | 28 | 114 | 3 |
| 542 | 3328 | 3856 | 2960 | 28 | 114 | 2 |
| 540 | 3312 | 2592 | 1728 | 27 | 113 | |
| 538 | 3296 | 1328 | 464 | 27 | 112 | 18 |
| 537 | 3296 | 3384 | 2520 | 27 | 112 | 17 |
| 535 | 3280 | 2120 | 1256 | 27 | 111 | 15 |
| 532 | 3264 | 2912 | 2048 | 27 | 110 | 12 |
| 530 | 3248 | 1648 | 784 | 27 | 109 | 10 |
| 529 | 3248 | 3704 | 2840 | 27 | 109 | 9 |
| 527 | 3232 | 2440 | 1576 | 27 | 108 | 7 |
| 525 | 3216 | 1176 | 312 | 27 | 107 | 5 |
| 524 | 3216 | 3232 | 2368 | 27 | 107 | 4 |
| 521 | 3200 | 4024 | 3160 | 27 | 106 | 1 |
| 519 | 3184 | 2760 | 1928 | 26 | 105 | 19 |
| 517 | 3168 | 1496 | 664 | 26 | 104 | 17 |
| 516 | 3168 | 3552 | 2720 | 26 | 104 | 16 |
| 514 | 3152 | 2288 | 1456 | 26 | 103 | 14 |
| 512 | 3136 | 1024 | 192 | 26 | 102 | 12 |
| 511 | 3136 | 3080 | 2248 | 26 | 102 | 11 |
| 509 | 3120 | 1816 | 984 | 26 | 101 | 9 |
| 508 | 3120 | 3872 | 3040 | 26 | 101 | 8 |
| 506 | 3104 | 2608 | 1776 | 26 | 100 | 6 |
| 504 | 3088 | 1344 | 512 | 26 | 99 | 4 |
| 503 | 3088 | 3400 | 2568 | 26 | 99 | 3 |
| 501 | 3072 | 2136 | 1304 | 26 | 98 | 1 |
| 499 | 3056 | 872 | 72 | 25 | 97 | 19 |
| 498 | 3056 | 2928 | 2128 | 25 | 97 | 18 |
| 496 | 3040 | 1664 | 864 | 25 | 96 | 16 |
| 495 | 3040 | 3720 | 2920 | 25 | 96 | 15 |
| 493 | 3024 | 2456 | 1656 | 25 | 95 | 13 |
| 491 | 3008 | 1192 | 392 | 25 | 94 | 11 |
| 490 | 3008 | 3248 | 2448 | 25 | 94 | 10 |
| 488 | 2992 | 1984 | 1184 | 25 | 93 | 8 |
| 487 | 2992 | 4040 | 3240 | 25 | 93 | 7 |
| 485 | 2976 | 2776 | 1976 | 25 | 92 | 5 |
| 483 | 2960 | 1512 | 712 | 25 | 91 | 3 |
| 482 | 2960 | 3568 | 2768 | 25 | 91 | 2 |
| 480 | 2944 | 2304 | 1536 | 24 | 90 | |
| 478 | 2928 | 1040 | 272 | 24 | 89 | 18 |
| 477 | 2928 | 3096 | 2328 | 24 | 89 | 17 |
| 475 | 2912 | 1832 | 1064 | 24 | 88 | 15 |
| 474 | 2912 | 3888 | 3120 | 24 | 88 | 14 |
| 472 | 2896 | 2624 | 1856 | 24 | 87 | 12 |
| 470 | 2880 | 1360 | 592 | 24 | 86 | 10 |
| 469 | 2880 | 3416 | 2648 | 24 | 86 | 9 |
| 467 | 2864 | 2152 | 1384 | 24 | 85 | 7 |
| 465 | 2848 | 888 | 120 | 24 | 84 | 5 |
| 464 | 2848 | 2944 | 2176 | 24 | 84 | 4 |
| 462 | 2832 | 1680 | 912 | 24 | 83 | 2 |
| 461 | 2832 | 3736 | 2968 | 24 | 83 | 1 |
| 459 | 2816 | 2472 | 1736 | 23 | 82 | 19 |
| 457 | 2800 | 1208 | 472 | 23 | 81 | 17 |
| 456 | 2800 | 3264 | 2528 | 23 | 81 | 16 |
| 454 | 2784 | 2000 | 1264 | 23 | 80 | 14 |
| 453 | 2784 | 4056 | 3320 | 23 | 80 | 13 |
| 452 | 2768 | 736 | 0 | 23 | 79 | 12 |
| 451 | 2768 | 2792 | 2056 | 23 | 79 | 11 |
| 449 | 2752 | 1528 | 792 | 23 | 78 | 9 |
| 448 | 2752 | 3584 | 2848 | 23 | 78 | 8 |
| 446 | 2736 | 2320 | 1584 | 23 | 77 | 6 |
| 444 | 2720 | 1056 | 320 | 23 | 76 | 4 |
| 443 | 2720 | 3112 | 2376 | 23 | 76 | 3 |
| 441 | 2704 | 1848 | 1112 | 23 | 75 | 1 |
| 440 | 2704 | 3904 | 3200 | 22 | 75 | |
| 438 | 2688 | 2640 | 1936 | 22 | 74 | 18 |
| 436 | 2672 | 1376 | 672 | 22 | 73 | 16 |
| 435 | 2672 | 3432 | 2728 | 22 | 73 | 15 |
| 431 | 2640 | 904 | 200 | 22 | 71 | 11 |
| 430 | 2640 | 2960 | 2256 | 22 | 71 | 10 |
| 428 | 2624 | 1696 | 992 | 22 | 70 | 8 |
| 427 | 2624 | 3752 | 3048 | 22 | 70 | 7 |
| 425 | 2608 | 2488 | 1784 | 22 | 69 | 5 |
| 423 | 2592 | 1224 | 520 | 22 | 68 | 3 |
| 422 | 2592 | 3280 | 2576 | 22 | 68 | 2 |
| 420 | 2576 | 2016 | 1344 | 21 | 67 | |
| 419 | 2576 | 4072 | 3400 | 21 | 67 | 19 |
| 418 | 2560 | 752 | 80 | 21 | 66 | 18 |
| 417 | 2560 | 2808 | 2136 | 21 | 66 | 17 |
| 415 | 2544 | 1544 | 872 | 21 | 65 | 15 |
| 414 | 2544 | 3600 | 2928 | 21 | 65 | 14 |
| 412 | 2528 | 2336 | 1664 | 21 | 64 | 12 |
| 410 | 2512 | 1072 | 400 | 21 | 63 | 10 |
| 409 | 2512 | 3128 | 2456 | 21 | 63 | 9 |
| 407 | 2496 | 1864 | 1192 | 21 | 62 | 7 |
| 406 | 2496 | 3920 | 3248 | 21 | 62 | 6 |
| 404 | 2480 | 2656 | 1984 | 21 | 61 | 4 |
| 402 | 2464 | 1392 | 720 | 21 | 60 | 2 |
| 401 | 2464 | 3448 | 2776 | 21 | 60 | 1 |
| 399 | 2448 | 2184 | 1544 | 20 | 59 | 19 |
| 397 | 2432 | 920 | 280 | 20 | 58 | 17 |
| 396 | 2432 | 2976 | 2336 | 20 | 58 | 16 |
| 394 | 2416 | 1712 | 1072 | 20 | 57 | 14 |
| 393 | 2416 | 3768 | 3128 | 20 | 57 | 13 |
| 391 | 2400 | 2504 | 1864 | 20 | 56 | 11 |
| 389 | 2384 | 1240 | 600 | 20 | 55 | 9 |
| 388 | 2384 | 3296 | 2656 | 20 | 55 | 8 |
| 386 | 2368 | 2032 | 1392 | 20 | 54 | 6 |
| 385 | 2368 | 4088 | 3448 | 20 | 54 | 5 |
| 384 | 2352 | 768 | 128 | 20 | 53 | 4 |
| 383 | 2352 | 2824 | 2184 | 20 | 53 | 3 |
| 381 | 2336 | 1560 | 920 | 20 | 52 | 1 |
| 380 | 2336 | 3616 | 3008 | 19 | 52 | |
| 378 | 2320 | 2352 | 1744 | 19 | 51 | 18 |
| 376 | 2304 | 1088 | 480 | 19 | 50 | 16 |
| 375 | 2304 | 3144 | 2536 | 19 | 50 | 15 |
| 373 | 2288 | 1880 | 1272 | 19 | 49 | 13 |
| 372 | 2288 | 3936 | 3328 | 19 | 49 | 12 |
| 371 | 2272 | 616 | 8 | 19 | 48 | 11 |
| 370 | 2272 | 2672 | 2064 | 19 | 48 | 10 |
| 368 | 2256 | 1408 | 800 | 19 | 47 | 8 |
| 367 | 2256 | 3464 | 2856 | 19 | 47 | 7 |
| 365 | 2240 | 2200 | 1592 | 19 | 46 | 5 |
| 363 | 2224 | 936 | 328 | 19 | 45 | 3 |
| 362 | 2224 | 2992 | 2384 | 19 | 45 | 2 |
| 360 | 2208 | 1728 | 1152 | 18 | 44 | |
| 359 | 2208 | 3784 | 3208 | 18 | 44 | 19 |
| 357 | 2192 | 2520 | 1944 | 18 | 43 | 17 |
| 355 | 2176 | 1256 | 680 | 18 | 42 | 15 |
| 354 | 2176 | 3312 | 2736 | 18 | 42 | 14 |
| 352 | 2160 | 2048 | 1472 | 18 | 41 | 12 |
| 351 | 2160 | 4104 | 3528 | 18 | 41 | 11 |
| 350 | 2144 | 784 | 208 | 18 | 40 | 10 |

Table 2 further provides a specific value of v/16 corresponding to the parameter combination {r, m, d_{CP}, d_{PAD}, p}. It should be noted that, v = m - 1504 is an integer multiple of 16. When n₀ = 128, k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It should be noted that, in some other specific applications, it is considered that the first sub-processing including the PCS, the interleaving, and the encoding is performed on the first bit set including m bits to obtain the second bit set including 4096 bits, where a ratio of an encoding input bit length to an encoding output bit length in the encoding operation is 3552:4096=111:128. It is considered that a ratio of an input bit length m to an output bit length 4096 in the first sub-processing (including the PCS processing, the interleaving, and the encoding) is m:4096=f1:12, where the greatest common divisor of the integers f1 and f2 is 1. Typically, when values of f1 and f2 are smaller, overall hardware implementation may be simpler, complexity is lower, and power consumption is lower. Therefore, the following second constraint is considered. In other words, m is an integer multiple of 32, so that the ratio of the input bit length m to the output bit length 4096 in the first sub-processing is m:4096=f:128, where the integer f = m/32. This may be understood with reference to FIG. 4. With reference to Table 1 and the second constraint, the following Table 3 provides a corresponding parameter combination {r, m, d_{CP}, f}.

**Table 3**

| r | m | d_{CP} | f | v/16 |
|---|---|---|---|---|
| 575 | 3520 | 520 | 110 | 126 |
| 574 | 3520 | 2576 | 110 | 126 |
| 570 | 3488 | 48 | 109 | 124 |
| 569 | 3488 | 2104 | 109 | 124 |
| 564 | 3456 | 1632 | 108 | 122 |
| 563 | 3456 | 3688 | 108 | 122 |
| 559 | 3424 | 1160 | 107 | 120 |
| 558 | 3424 | 3216 | 107 | 120 |
| 554 | 3392 | 688 | 106 | 118 |
| 553 | 3392 | 2744 | 106 | 118 |
| 549 | 3360 | 216 | 105 | 116 |
| 543 | 3328 | 1800 | 104 | 114 |
| 542 | 3328 | 3856 | 104 | 114 |
| 538 | 3296 | 1328 | 103 | 112 |
| 537 | 3296 | 3384 | 103 | 112 |
| 533 | 3264 | 856 | 102 | 110 |
| 532 | 3264 | 2912 | 102 | 110 |
| 528 | 3232 | 384 | 101 | 108 |
| 527 | 3232 | 2440 | 101 | 108 |
| 521 | 3200 | 4024 | 100 | 106 |
| 517 | 3168 | 1496 | 99 | 104 |
| 516 | 3168 | 3552 | 99 | 104 |
| 512 | 3136 | 1024 | 98 | 102 |
| 511 | 3136 | 3080 | 98 | 102 |
| 507 | 3104 | 552 | 97 | 100 |
| 506 | 3104 | 2608 | 97 | 100 |
| 502 | 3072 | 80 | 96 | 98 |
| 501 | 3072 | 2136 | 96 | 98 |
| 496 | 3040 | 1664 | 95 | 96 |
| 495 | 3040 | 3720 | 95 | 96 |
| 491 | 3008 | 1192 | 94 | 94 |
| 490 | 3008 | 3248 | 94 | 94 |
| 486 | 2976 | 720 | 93 | 92 |
| 485 | 2976 | 2776 | 93 | 92 |
| 481 | 2944 | 248 | 92 | 90 |
| 480 | 2944 | 2304 | 92 | 90 |
| 475 | 2912 | 1832 | 91 | 88 |
| 474 | 2912 | 3888 | 91 | 88 |
| 470 | 2880 | 1360 | 90 | 86 |
| 469 | 2880 | 3416 | 90 | 86 |
| 465 | 2848 | 888 | 89 | 84 |
| 464 | 2848 | 2944 | 89 | 84 |
| 460 | 2816 | 416 | 88 | 82 |
| 459 | 2816 | 2472 | 88 | 82 |
| 454 | 2784 | 2000 | 87 | 80 |
| 453 | 2784 | 4056 | 87 | 80 |
| 449 | 2752 | 1528 | 86 | 78 |
| 448 | 2752 | 3584 | 86 | 78 |
| 444 | 2720 | 1056 | 85 | 76 |
| 443 | 2720 | 3112 | 85 | 76 |
| 439 | 2688 | 584 | 84 | 74 |
| 438 | 2688 | 2640 | 84 | 74 |
| 434 | 2656 | 112 | 83 | 72 |
| 428 | 2624 | 1696 | 82 | 70 |
| 427 | 2624 | 3752 | 82 | 70 |
| 423 | 2592 | 1224 | 81 | 68 |
| 422 | 2592 | 3280 | 81 | 68 |
| 418 | 2560 | 752 | 80 | 66 |
| 417 | 2560 | 2808 | 80 | 66 |
| 413 | 2528 | 280 | 79 | 64 |
| 412 | 2528 | 2336 | 79 | 64 |
| 407 | 2496 | 1864 | 78 | 62 |
| 406 | 2496 | 3920 | 78 | 62 |
| 402 | 2464 | 1392 | 77 | 60 |
| 401 | 2464 | 3448 | 77 | 60 |
| 397 | 2432 | 920 | 76 | 58 |
| 396 | 2432 | 2976 | 76 | 58 |
| 392 | 2400 | 448 | 75 | 56 |
| 391 | 2400 | 2504 | 75 | 56 |
| 386 | 2368 | 2032 | 74 | 54 |
| 385 | 2368 | 4088 | 74 | 54 |
| 381 | 2336 | 1560 | 73 | 52 |
| 380 | 2336 | 3616 | 73 | 52 |
| 376 | 2304 | 1088 | 72 | 50 |
| 375 | 2304 | 3144 | 72 | 50 |
| 371 | 2272 | 616 | 71 | 48 |
| 370 | 2272 | 2672 | 71 | 48 |
| 366 | 2240 | 144 | 70 | 46 |
| 365 | 2240 | 2200 | 70 | 46 |
| 360 | 2208 | 1728 | 69 | 44 |
| 359 | 2208 | 3784 | 69 | 44 |
| 355 | 2176 | 1256 | 68 | 42 |
| 354 | 2176 | 3312 | 68 | 42 |
| 350 | 2144 | 784 | 67 | 40 |

Table 3 further provides a specific value of v/16 corresponding to the parameter combination {r, m, d_{CP}, f}. It should be noted that, v = m - 1504 is an integer multiple of 16. When n₀ = 128, k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It should be noted that, in still some other specific applications, the first constraint and the second constraint are considered. In this case, with reference to Table 1, the first constraint, and the second constraint, the following Table 4 provides a corresponding parameter combination {r, m, d_{CP}, d_{PAD}, f, p}. It should be noted that the last column in Table 4 further provides a specific value of a corresponding parameter r₁ when the quantity r of rows is not an integer multiple of 20. When the quantity r of rows is an integer multiple of 20, for example, as shown by r=480 in the row 28 in Table 4, a corresponding parameter r₁ is represented by a slash in the table, indicating that the parameter r₁ does not exist.

**Table 4**

| r | m | d_{CP} | d_{PAD} | f | p | v/16 | r₁ |
|---|---|---|---|---|---|---|---|
| 574 | 3520 | 2576 | 1648 | 110 | 29 | 126 | 14 |
| 569 | 3488 | 2104 | 1176 | 109 | 29 | 124 | 9 |
| 564 | 3456 | 1632 | 704 | 108 | 29 | 122 | 4 |
| 563 | 3456 | 3688 | 2760 | 108 | 29 | 122 | 3 |
| 559 | 3424 | 1160 | 264 | 107 | 28 | 120 | 19 |
| 558 | 3424 | 3216 | 2320 | 107 | 28 | 120 | 18 |
| 553 | 3392 | 2744 | 1848 | 106 | 28 | 118 | 13 |
| 543 | 3328 | 1800 | 904 | 104 | 28 | 114 | 3 |
| 542 | 3328 | 3856 | 2960 | 104 | 28 | 114 | 2 |
| 538 | 3296 | 1328 | 464 | 103 | 27 | 112 | 18 |
| 537 | 3296 | 3384 | 2520 | 103 | 27 | 112 | 17 |
| 532 | 3264 | 2912 | 2048 | 102 | 27 | 110 | 12 |
| 527 | 3232 | 2440 | 1576 | 101 | 27 | 108 | 7 |
| 521 | 3200 | 4024 | 3160 | 100 | 27 | 106 | 1 |
| 517 | 3168 | 1496 | 664 | 99 | 26 | 104 | 17 |
| 516 | 3168 | 3552 | 2720 | 99 | 26 | 104 | 16 |
| 512 | 3136 | 1024 | 192 | 98 | 26 | 102 | 12 |
| 511 | 3136 | 3080 | 2248 | 98 | 26 | 102 | 11 |
| 506 | 3104 | 2608 | 1776 | 97 | 26 | 100 | 6 |
| 501 | 3072 | 2136 | 1304 | 96 | 26 | 98 | 1 |
| 496 | 3040 | 1664 | 864 | 95 | 25 | 96 | 16 |
| 495 | 3040 | 3720 | 2920 | 95 | 25 | 96 | 15 |
| 491 | 3008 | 1192 | 392 | 94 | 25 | 94 | 11 |
| 490 | 3008 | 3248 | 2448 | 94 | 25 | 94 | 10 |
| 485 | 2976 | 2776 | 1976 | 93 | 25 | 92 | 5 |
| 480 | 2944 | 2304 | 1536 | 92 | 24 | 90 | |
| 475 | 2912 | 1832 | 1064 | 91 | 24 | 88 | 15 |
| 474 | 2912 | 3888 | 3120 | 91 | 24 | 88 | 14 |
| 470 | 2880 | 1360 | 592 | 90 | 24 | 86 | 10 |
| 469 | 2880 | 3416 | 2648 | 90 | 24 | 86 | 9 |
| 465 | 2848 | 888 | 120 | 89 | 24 | 84 | 5 |
| 464 | 2848 | 2944 | 2176 | 89 | 24 | 84 | 4 |
| 459 | 2816 | 2472 | 1736 | 88 | 23 | 82 | 19 |
| 454 | 2784 | 2000 | 1264 | 87 | 23 | 80 | 14 |
| 453 | 2784 | 4056 | 3320 | 87 | 23 | 80 | 13 |
| 449 | 2752 | 1528 | 792 | 86 | 23 | 78 | 9 |
| 448 | 2752 | 3584 | 2848 | 86 | 23 | 78 | 8 |
| 444 | 2720 | 1056 | 320 | 85 | 23 | 76 | 4 |
| 443 | 2720 | 3112 | 2376 | 85 | 23 | 76 | 3 |
| 438 | 2688 | 2640 | 1936 | 84 | 22 | 74 | 18 |
| 428 | 2624 | 1696 | 992 | 82 | 22 | 70 | 8 |
| 427 | 2624 | 3752 | 3048 | 82 | 22 | 70 | 7 |
| 423 | 2592 | 1224 | 520 | 81 | 22 | 68 | 3 |
| 422 | 2592 | 3280 | 2576 | 81 | 22 | 68 | 2 |
| 418 | 2560 | 752 | 80 | 80 | 21 | 66 | 18 |
| 417 | 2560 | 2808 | 2136 | 80 | 21 | 66 | 17 |
| 412 | 2528 | 2336 | 1664 | 79 | 21 | 64 | 12 |
| 407 | 2496 | 1864 | 1192 | 78 | 21 | 62 | 7 |
| 406 | 2496 | 3920 | 3248 | 78 | 21 | 62 | 6 |
| 402 | 2464 | 1392 | 720 | 77 | 21 | 60 | 2 |
| 401 | 2464 | 3448 | 2776 | 77 | 21 | 60 | 1 |
| 397 | 2432 | 920 | 280 | 76 | 20 | 58 | 17 |
| 396 | 2432 | 2976 | 2336 | 76 | 20 | 58 | 16 |
| 391 | 2400 | 2504 | 1864 | 75 | 20 | 56 | 11 |
| 386 | 2368 | 2032 | 1392 | 74 | 20 | 54 | 6 |
| 385 | 2368 | 4088 | 3448 | 74 | 20 | 54 | 5 |
| 381 | 2336 | 1560 | 920 | 73 | 20 | 52 | 1 |
| 380 | 2336 | 3616 | 3008 | 73 | 19 | 52 | |
| 376 | 2304 | 1088 | 480 | 72 | 19 | 50 | 16 |
| 375 | 2304 | 3144 | 2536 | 72 | 19 | 50 | 15 |
| 371 | 2272 | 616 | 8 | 71 | 19 | 48 | 11 |
| 370 | 2272 | 2672 | 2064 | 71 | 19 | 48 | 10 |
| 365 | 2240 | 2200 | 1592 | 70 | 19 | 46 | 5 |
| 360 | 2208 | 1728 | 1152 | 69 | 18 | 44 | |
| 359 | 2208 | 3784 | 3208 | 69 | 18 | 44 | 19 |
| 355 | 2176 | 1256 | 680 | 68 | 18 | 42 | 15 |
| 354 | 2176 | 3312 | 2736 | 68 | 18 | 42 | 14 |
| 350 | 2144 | 784 | 208 | 67 | 18 | 40 | 10 |

Table 4 further provides a specific value of v/16 corresponding to the parameter combination {r, m, d_{CP}, d_{PAD}, f, p}. It should be noted that, v = m - 1504 is an integer multiple of 16. When n₀ = 128, k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It should be noted that, assuming that a bit rate of the data frame is W₀ Gbit/s, a corresponding bit rate obtained through the first data processing is W₀ × (r × q + d_{CP})/(r × q) Gbit/s, and a corresponding bit rate obtained through the first sub-processing (that is, the PCS, interleaving, and encoding processing) in the second data processing is W₁ = W₀ × (r × q + d_{CP})/(r × q) × (4096/m). Considering that an overhead of the DSP framing in the second data processing is *h*_{DSP}, to be specific, a corresponding bit rate obtained through the second data processing is W₂ = W₁ × (1 + *h*_{DSP}) = W₀ × (r × q + d_{CP})/(r × q) × (4096/m) × (1 + *h*_{DSP}), a corresponding baud rate (that is, a symbol rate) is W*ₛ* = *W*₂/8 = W₀ × (r × q + d_{CP})/(r × q) × (4096/m) × (1 + *h*_{DSP})/8 GBaud. Typically, the overhead *h*_{DSP} of the DSP framing is considered as 1/28 or 1/56. It can be learned that, for the parameter combinations provided in Tables 1 to 4, when considering that input data (that is, the first bit data) for the first data processing is FlexO-4e or 400G ZR frame data, a corresponding baud rate is less than 100 GBaud. It may be understood that the proposed data processing solution may be well compatible with existing 400G data centers and metropolitan area networks.

The following provides several specific embodiments with reference to the foregoing descriptions of the first data processing and the second data processing.

### Embodiment 1

It is considered that the input data (that is, the first bit data) for the first data processing is the FlexO-4e or 400G ZR frame data, and a nominal bit rate (nominal bit rate) of the FlexO-4e or 400G ZR frame data is W₀ ≈ 402.489753310 Gbit/s. It should be noted that, in this embodiment of this application, only nine digits after the decimal point are retained for a non-integer. In some specific applications, the non-integer may be described in another form, for example, two digits after the decimal point are retained. A description manner thereof may be known by a person of ordinary skill in the art. Details are not described herein. The first bit data includes a total of dᵢₙ = q × r bits in r rows and q = 2056 columns. The corresponding bit rate obtained through the first data processing is W₀ × (r × q + d_{CP})/(r × q) Gbit/s, and the corresponding bit rate obtained through the first sub-processing (that is, the PCS, interleaving, and encoding processing) in the second data processing is W₁ = W₀ × (r × q + d_{CP})/(r × q) × (4096/m).

In some specific applications, it is considered that the overhead of the DSP framing in the second data processing is *h*_{DSP} = 1/28, each DSP frame (also referred to as a super-frame or a multi-frame) includes 178176 dual-polarization symbols, where 172032 dual-polarization symbols (that is, pre-framing symbols) in each DSP frame are obtained by performing the symbol mapping and the polarization distribution on the fourth bit data. In this case, the corresponding bit rate obtained through the second data processing is W₂₋₂₈ = W₁ × (1 + *h*_{DSP}) = W₀ × (r × q + d_{CP})/(r × q) × (4096/m) × (29/28), and the corresponding baud rate (that is, the symbol rate) is W_{*s*-28} = W₂₋₂₈/8 = W₀ × (r × q + d_{CP})/(r × q) × (4096/m) × (29/28)/8 GBaud.

The following Table 5 provides a corresponding parameter combination {dᵢₙ, r, m, d_{CP}, v/16, W₁, W₂₋₂₈, W_{*s*-28}}.

**Table 5**

| Sequence number | dᵢₙ | r | m | d_{CP} | v/16 | W₁ (Gbit/s) | W₂₋₂₈ (Gbit/s) | W_{*s*-28} (GBaud) |
|---|---|---|---|---|---|---|---|---|
| 1 | 1186312 | 577 | 3536 | 1784 | 127 | 466.933604255 | 483.609804407 | 60.451225551 |
| 2 | 1184256 | 576 | 3536 | 3840 | 127 | 467.744252873 | 484.449404762 | 60.556175595 |
| 3 | 1182200 | 575 | 3520 | 520 | 126 | 468.557721139 | 485.291925465 | 60.661490683 |
| 4 | 1180144 | 574 | 3520 | 2576 | 126 | 469.374023789 | 486.137381782 | 60.767172723 |
| 5 | 1176032 | 572 | 3504 | 1312 | 125 | 471.015191705 | 487.837162837 | 60.979645355 |
| 6 | 1173976 | 571 | 3504 | 3368 | 125 | 471.840086961 | 488.691518639 | 61.086439830 |
| 7 | 1171920 | 570 | 3488 | 48 | 124 | 472.667876588 | 489.548872180 | 61.193609023 |
| 8 | 1169864 | 569 | 3488 | 2104 | 124 | 473.498575844 | 490.409239267 | 61.301154908 |
| 9 | 1165752 | 567 | 3472 | 840 | 123 | 475.168764824 | 492.139077853 | 61.517384732 |
| 10 | 1163696 | 566 | 3472 | 2896 | 123 | 476.008285609 | 493.008581524 | 61.626072691 |
| 11 | 1159584 | 564 | 3456 | 1632 | 122 | 477.696258254 | 494.756838905 | 61.844604863 |
| 12 | 1157528 | 563 | 3456 | 3688 | 122 | 478.544741838 | 495.635625475 | 61.954453184 |
| 13 | 1155472 | 562 | 3440 | 368 | 121 | 479.396244938 | 496.517539400 | 62.064692425 |
| 14 | 1153416 | 561 | 3440 | 2424 | 121 | 480.250783699 | 497.402597402 | 62.175324675 |
| 15 | 1149304 | 559 | 3424 | 1160 | 120 | 481.969033372 | 499.182213135 | 62.397776642 |
| 16 | 1147248 | 558 | 3424 | 3216 | 120 | 482.832777159 | 500.076804915 | 62.509600614 |
| 17 | 1143136 | 556 | 3408 | 1952 | 119 | 484.569585710 | 501.875642343 | 62.734455293 |
| 18 | 1141080 | 555 | 3408 | 4008 | 119 | 485.442684063 | 502.779922780 | 62.847490347 |
| 19 | 1139024 | 554 | 3392 | 688 | 118 | 486.318934395 | 503.687467767 | 62.960933471 |
| 20 | 1136968 | 553 | 3392 | 2744 | 118 | 487.198353806 | 504.598295014 | 63.074786877 |
| 21 | 1132856 | 551 | 3376 | 1480 | 117 | 488.966768884 | 506.429867773 | 63.303733472 |
| 22 | 1130800 | 550 | 3376 | 3536 | 117 | 489.855799373 | 507.350649350 | 63.418831169 |
| 23 | 1128744 | 549 | 3360 | 216 | 116 | 490.748068588 | 508.274785324 | 63.534348165 |
| 24 | 1122576 | 546 | 3344 | 1008 | 115 | 493.444486548 | 511.067503924 | 63.883437991 |
| 25 | 1120520 | 545 | 3344 | 3064 | 115 | 494.349889275 | 512.005242464 | 64.000655308 |
| 26 | 1116408 | 543 | 3328 | 1800 | 114 | 496.170699180 | 513.891081294 | 64.236385162 |
| 27 | 1114352 | 542 | 3328 | 3856 | 114 | 497.086143275 | 514.839219820 | 64.354902478 |
| 28 | 1112296 | 541 | 3312 | 536 | 113 | 498.004971636 | 515.790863480 | 64.473857935 |
| 29 | 1110240 | 540 | 3312 | 2592 | 113 | 498.927203065 | 516.746031746 | 64.593253968 |
| 30 | 1106128 | 538 | 3296 | 1328 | 112 | 500.781951032 | 518.667020711 | 64.833377589 |
| 31 | 1104072 | 537 | 3296 | 3384 | 112 | 501.714505875 | 519.632881085 | 64.954110136 |
| 32 | 1102016 | 536 | 3280 | 64 | 111 | 502.650540401 | 520.602345415 | 65.075293177 |
| 33 | 1099960 | 535 | 3280 | 2120 | 111 | 503.590074121 | 521.575433911 | 65.196929239 |
| 34 | 1095848 | 533 | 3264 | 856 | 110 | 505.479717927 | 523.532564996 | 65.441570624 |
| 35 | 1093792 | 532 | 3264 | 2912 | 110 | 506.429867773 | 524.516648764 | 65.564581096 |
| 36 | 1089680 | 530 | 3248 | 1648 | 109 | 508.340923877 | 526.495956873 | 65.811994609 |
| 37 | 1087624 | 529 | 3248 | 3704 | 109 | 509.301870803 | 527.491223332 | 65.936402917 |
| 38 | 1085568 | 528 | 3232 | 384 | 108 | 510.266457680 | 528.490259740 | 66.061282467 |
| 39 | 1083512 | 527 | 3232 | 2440 | 108 | 511.234705228 | 529.493087557 | 66.186635945 |
| 40 | 1079400 | 525 | 3216 | 1176 | 107 | 513.182266009 | 531.510204081 | 66.438775510 |
| 41 | 1077344 | 524 | 3216 | 3232 | 107 | 514.161621479 | 532.524536532 | 66.565567066 |
| 42 | 1071176 | 521 | 3200 | 4024 | 106 | 517.122245019 | 535.590896627 | 66.948862078 |
| 43 | 1069120 | 520 | 3184 | 704 | 105 | 518.116710875 | 536.620879120 | 67.077609890 |
| 44 | 1067064 | 519 | 3184 | 2760 | 105 | 519.115008969 | 537.654830718 | 67.206853840 |
| 45 | 1062952 | 517 | 3168 | 1496 | 104 | 521.123190822 | 539.734733351 | 67.466841669 |
| 46 | 1060896 | 516 | 3168 | 3552 | 104 | 522.133119486 | 540.780730897 | 67.597591362 |
| 47 | 1058840 | 515 | 3152 | 232 | 103 | 523.146970204 | 541.830790568 | 67.728848821 |
| 48 | 1056784 | 514 | 3152 | 2288 | 103 | 524.164765866 | 542.884936075 | 67.860617009 |
| 49 | 1052672 | 512 | 3136 | 1024 | 102 | 526.212284482 | 545.005580357 | 68.125697545 |
| 50 | 1050616 | 511 | 3136 | 3080 | 102 | 527.242054119 | 546.072127481 | 68.259015935 |
| 51 | 1046504 | 509 | 3120 | 1816 | 101 | 529.313732132 | 548.217793993 | 68.527224249 |
| 52 | 1044448 | 508 | 3120 | 3872 | 101 | 530.355688297 | 549.296962879 | 68.662120360 |
| 53 | 1042392 | 507 | 3104 | 552 | 100 | 531.401754744 | 550.380388842 | 68.797548605 |
| 54 | 1040336 | 506 | 3104 | 2608 | 100 | 532.451955840 | 551.468097120 | 68.933512140 |
| 55 | 1036224 | 504 | 3088 | 1344 | 99 | 534.564860427 | 553.656462585 | 69.207057823 |
| 56 | 1034168 | 503 | 3088 | 3400 | 99 | 535.627613628 | 554.757171258 | 69.344646407 |
| 57 | 1032112 | 502 | 3072 | 80 | 98 | 536.694600906 | 555.862265224 | 69.482783153 |
| 58 | 1030056 | 501 | 3072 | 2136 | 98 | 537.765847615 | 556.971770744 | 69.621471343 |
| 59 | 1025944 | 499 | 3056 | 872 | 97 | 539.921221753 | 559.204122530 | 69.900515316 |
| 60 | 1023888 | 498 | 3056 | 2928 | 97 | 541.005400914 | 560.327022375 | 70.040877797 |
| 61 | 1019776 | 496 | 3040 | 1664 | 96 | 543.186874304 | 562.586405530 | 70.323300691 |
| 62 | 1017720 | 495 | 3040 | 3720 | 96 | 544.284221525 | 563.722943723 | 70.465367965 |
| 63 | 1015664 | 494 | 3024 | 400 | 95 | 545.386011447 | 564.864083285 | 70.608010411 |
| 64 | 1013608 | 493 | 3024 | 2456 | 95 | 546.492271105 | 566.009852216 | 70.751231527 |
| 65 | 1009496 | 491 | 3008 | 1192 | 94 | 548.718308870 | 568.315391329 | 71.039423916 |
| 66 | 1007440 | 490 | 3008 | 3248 | 94 | 549.838142153 | 569.475218658 | 71.184402332 |
| 67 | 1003328 | 488 | 2992 | 1984 | 93 | 552.091577162 | 571.809133489 | 71.476141686 |
| 68 | 1001272 | 487 | 2992 | 4040 | 93 | 553.225235431 | 572.983279554 | 71.622909944 |
| 69 | 999216 | 486 | 2976 | 720 | 92 | 554.363558961 | 574.162257495 | 71.770282187 |
| 70 | 997160 | 485 | 2976 | 2776 | 92 | 555.506576608 | 575.346097201 | 71.918262150 |
| 71 | 993048 | 483 | 2960 | 1512 | 91 | 557.806810880 | 577.728482697 | 72.216060337 |
| 72 | 990992 | 482 | 2960 | 3568 | 91 | 558.964086421 | 578.927089508 | 72.365886188 |
| 73 | 988936 | 481 | 2944 | 248 | 90 | 560.126173919 | 580.130680130 | 72.516335016 |
| 74 | 986880 | 480 | 2944 | 2304 | 90 | 561.293103448 | 581.339285714 | 72.667410714 |
| 75 | 982768 | 478 | 2928 | 1040 | 89 | 563.641610157 | 583.771667662 | 72.971458458 |
| 76 | 980712 | 477 | 2928 | 3096 | 89 | 564.823248753 | 584.995507637 | 73.124438455 |
| 77 | 976600 | 475 | 2912 | 1832 | 88 | 567.201451905 | 587.458646616 | 73.432330827 |
| 78 | 974544 | 474 | 2912 | 3888 | 88 | 568.398079441 | 588.698010849 | 73.587251356 |
| 79 | 972488 | 473 | 2896 | 568 | 87 | 569.599766712 | 589.942615524 | 73.742826940 |
| 80 | 970432 | 472 | 2896 | 2624 | 87 | 570.806545879 | 591.192493946 | 73.899061743 |
| 81 | 966320 | 470 | 2880 | 1360 | 86 | 573.235509904 | 593.708206686 | 74.213525836 |
| 82 | 964264 | 469 | 2880 | 3416 | 86 | 574.457760458 | 594.974109046 | 74.371763631 |
| 83 | 962208 | 468 | 2864 | 96 | 85 | 575.685234306 | 596.245421245 | 74.530677656 |
| 84 | 960152 | 467 | 2864 | 2152 | 85 | 576.917965000 | 597.522178036 | 74.690272254 |
| 85 | 956040 | 465 | 2848 | 888 | 84 | 579.399332591 | 600.092165898 | 75.011520737 |
| 86 | 953984 | 464 | 2848 | 2944 | 84 | 580.648038050 | 601.385467980 | 75.173183497 |
| 87 | 949872 | 462 | 2832 | 1680 | 83 | 583.161665920 | 603.988868274 | 75.498608534 |
| 88 | 947816 | 461 | 2832 | 3736 | 83 | 584.426658688 | 605.299039355 | 75.662379919 |
| 89 | 945760 | 460 | 2816 | 416 | 82 | 585.697151424 | 606.614906832 | 75.826863354 |
| 90 | 943704 | 459 | 2816 | 2472 | 82 | 586.973180076 | 607.936507936 | 75.992063492 |
| 91 | 939592 | 457 | 2800 | 1208 | 81 | 589.541990492 | 610.597061581 | 76.324632698 |
| 92 | 937536 | 456 | 2800 | 3264 | 81 | 590.834845735 | 611.936090225 | 76.492011278 |
| 93 | 933424 | 454 | 2784 | 2000 | 80 | 593.437642412 | 614.631843927 | 76.828980491 |
| 94 | 931368 | 453 | 2784 | 4056 | 80 | 594.747659283 | 615.988647114 | 76.998580889 |
| 95 | 929312 | 452 | 2768 | 736 | 79 | 596.063472688 | 617.351453855 | 77.168931732 |
| 96 | 927256 | 451 | 2768 | 2792 | 79 | 597.385121186 | 618.720304086 | 77.340038011 |
| 97 | 923144 | 449 | 2752 | 1528 | 78 | 600.046079410 | 621.476296532 | 77.684537066 |
| 98 | 921088 | 448 | 2752 | 3584 | 78 | 601.385467980 | 622.863520408 | 77.857940051 |
| 99 | 919032 | 447 | 2736 | 264 | 77 | 602.730849340 | 624.256951102 | 78.032118888 |
| 100 | 916976 | 446 | 2736 | 2320 | 77 | 604.082263800 | 625.656630365 | 78.207078796 |
| 101 | 912864 | 444 | 2720 | 1056 | 76 | 606.803355079 | 628.474903474 | 78.559362934 |
| 102 | 910808 | 443 | 2720 | 3112 | 76 | 608.173114345 | 629.893582715 | 78.736697839 |
| 103 | 906696 | 441 | 2704 | 1848 | 75 | 610.931269059 | 632.750242954 | 79.093780369 |
| 104 | 904640 | 440 | 2704 | 3904 | 75 | 612.319749216 | 634.188311688 | 79.273538961 |
| 105 | 902584 | 439 | 2688 | 584 | 74 | 613.714555023 | 635.632931988 | 79.454116498 |
| 106 | 900528 | 438 | 2688 | 2640 | 74 | 615.115729806 | 637.084148728 | 79.635518591 |
| 107 | 896416 | 436 | 2672 | 1376 | 73 | 617.937361594 | 640.006553079 | 80.000819135 |
| 108 | 894360 | 435 | 2672 | 3432 | 73 | 619.357907253 | 641.477832512 | 80.184729064 |
| 109 | 892304 | 434 | 2656 | 112 | 72 | 620.784999205 | 642.955892034 | 80.369486504 |
| 110 | 886136 | 431 | 2640 | 904 | 71 | 625.106008480 | 647.431223069 | 80.928902884 |
| 111 | 884080 | 430 | 2640 | 2960 | 71 | 626.559743384 | 648.936877076 | 81.117109634 |
| 112 | 879968 | 428 | 2624 | 1696 | 70 | 629.487592652 | 651.969292389 | 81.496161549 |
| 113 | 877912 | 427 | 2624 | 3752 | 70 | 630.961802471 | 653.496152559 | 81.687019070 |
| 114 | 875856 | 426 | 2608 | 432 | 69 | 632.442933462 | 655.030181086 | 81.878772636 |
| 115 | 873800 | 425 | 2608 | 2488 | 69 | 633.931034482 | 656.571428571 | 82.071428571 |
| 116 | 869688 | 423 | 2592 | 1224 | 68 | 636.928344338 | 659.675785207 | 82.459473151 |
| 117 | 867632 | 422 | 2592 | 3280 | 68 | 638.437653211 | 661.238997968 | 82.654874746 |
| 118 | 863520 | 420 | 2576 | 2016 | 67 | 641.477832512 | 664.387755102 | 83.048469388 |
| 119 | 861464 | 419 | 2576 | 4072 | 67 | 643.008805859 | 665.973406068 | 83.246675759 |
| 120 | 859408 | 418 | 2560 | 752 | 66 | 644.547104438 | 667.566643882 | 83.445830485 |
| 121 | 857352 | 417 | 2560 | 2808 | 66 | 646.092780947 | 669.167523124 | 83.645940390 |
| 122 | 853240 | 415 | 2544 | 1544 | 65 | 649.206481096 | 672.392426850 | 84.049053356 |
| 123 | 851184 | 414 | 2544 | 3600 | 65 | 650.774612693 | 674.016563147 | 84.252070393 |
| 124 | 849128 | 413 | 2528 | 280 | 64 | 652.350338148 | 675.648564510 | 84.456070564 |
| 125 | 847072 | 412 | 2528 | 2336 | 64 | 653.933712755 | 677.288488210 | 84.661061026 |
| 126 | 842960 | 410 | 2512 | 1072 | 63 | 657.123633305 | 680.592334494 | 85.074041812 |
| 127 | 840904 | 409 | 2512 | 3128 | 63 | 658.730292555 | 682.256374432 | 85.282046804 |
| 128 | 836792 | 407 | 2496 | 1864 | 62 | 661.967296450 | 685.608985608 | 85.701123201 |
| 129 | 834736 | 406 | 2496 | 3920 | 62 | 663.597757771 | 687.297677691 | 85.912209711 |
| 130 | 832680 | 405 | 2480 | 600 | 61 | 665.236270753 | 688.994708994 | 86.124338624 |
| 131 | 830624 | 404 | 2480 | 2656 | 61 | 666.882895186 | 690.700141442 | 86.337517680 |
| 132 | 826512 | 402 | 2464 | 1392 | 60 | 670.200720535 | 694.136460554 | 86.767057569 |
| 133 | 824456 | 401 | 2464 | 3448 | 60 | 671.872044027 | 695.867474171 | 86.983434271 |
| 134 | 822400 | 400 | 2448 | 128 | 59 | 673.551724137 | 697.607142857 | 87.200892857 |
| 135 | 820344 | 399 | 2448 | 2184 | 59 | 675.239823697 | 699.355531686 | 87.419441461 |
| 136 | 816232 | 397 | 2432 | 920 | 58 | 678.641535655 | 702.878733357 | 87.859841670 |
| 137 | 814176 | 396 | 2432 | 2976 | 58 | 680.355276907 | 704.653679653 | 88.081709957 |
| 138 | 810064 | 394 | 2416 | 1712 | 57 | 683.808856992 | 708.230601885 | 88.528825236 |
| 139 | 808008 | 393 | 2416 | 3768 | 57 | 685.548828639 | 710.032715376 | 88.754089422 |
| 140 | 805952 | 392 | 2400 | 448 | 56 | 687.297677691 | 711.844023323 | 88.980502915 |
| 141 | 803896 | 391 | 2400 | 2504 | 56 | 689.055472263 | 713.664596273 | 89.208074534 |
| 142 | 799784 | 389 | 2384 | 1240 | 55 | 692.598173920 | 717.333822989 | 89.666727874 |
| 143 | 797728 | 388 | 2384 | 3296 | 55 | 694.383220760 | 719.182621502 | 89.897827688 |
| 144 | 793616 | 386 | 2368 | 2032 | 54 | 697.981061282 | 722.908956328 | 90.363619541 |
| 145 | 791560 | 385 | 2368 | 4088 | 54 | 699.793999104 | 724.786641929 | 90.598330241 |
| 146 | 789504 | 384 | 2352 | 768 | 53 | 701.616379310 | 726.674107142 | 90.834263393 |
| 147 | 787448 | 383 | 2352 | 2824 | 53 | 703.448275862 | 728.571428571 | 91.071428571 |
| 148 | 783336 | 381 | 2336 | 1560 | 52 | 707.140917730 | 732.395950506 | 91.549493813 |
| 149 | 781280 | 380 | 2336 | 3616 | 52 | 709.001814882 | 734.323308270 | 91.790413534 |
| 150 | 779224 | 379 | 2320 | 296 | 51 | 710.872532071 | 736.260836788 | 92.032604599 |
| 151 | 777168 | 378 | 2320 | 2352 | 51 | 712.753147235 | 738.208616780 | 92.276077097 |
| 152 | 773056 | 376 | 2304 | 1088 | 50 | 716.544387380 | 742.135258358 | 92.766907295 |
| 153 | 771000 | 375 | 2304 | 3144 | 50 | 718.455172413 | 744.114285714 | 93.014285714 |
| 154 | 766888 | 373 | 2288 | 1880 | 49 | 722.307478968 | 748.104174645 | 93.513021831 |
| 155 | 764832 | 372 | 2288 | 3936 | 49 | 724.249165739 | 750.115207373 | 93.764400922 |
| 156 | 762776 | 371 | 2272 | 616 | 48 | 726.201319825 | 752.137081247 | 94.017135156 |
| 157 | 760720 | 370 | 2272 | 2672 | 48 | 728.164026095 | 754.169884169 | 94.271235521 |
| 158 | 756608 | 368 | 2256 | 1408 | 47 | 732.121439280 | 758.268633540 | 94.783579192 |
| 159 | 754552 | 367 | 2256 | 3464 | 47 | 734.116320586 | 760.334760607 | 95.041845076 |
| 160 | 752496 | 366 | 2240 | 144 | 46 | 736.122102882 | 762.412177985 | 95.301522248 |
| 161 | 750440 | 365 | 2240 | 2200 | 46 | 738.138875767 | 764.500978473 | 95.562622309 |
| 162 | 746328 | 363 | 2224 | 936 | 45 | 742.205756625 | 768.713105076 | 96.089138135 |
| 163 | 744272 | 362 | 2224 | 2992 | 45 | 744.256048771 | 770.836621941 | 96.354577743 |
| 164 | 740160 | 360 | 2208 | 1728 | 44 | 748.390804597 | 775.119047618 | 96.889880952 |
| 165 | 738104 | 359 | 2208 | 3784 | 44 | 750.475458649 | 777.278153601 | 97.159769200 |
| 166 | 736048 | 358 | 2192 | 464 | 43 | 752.571758813 | 779.449321628 | 97.431165203 |
| 167 | 733992 | 357 | 2192 | 2520 | 43 | 754.679802955 | 781.632653061 | 97.704081633 |
| 168 | 729880 | 355 | 2176 | 1256 | 42 | 758.931520155 | 786.036217303 | 98.254527163 |
| 169 | 727824 | 354 | 2176 | 3312 | 42 | 761.075394506 | 788.256658595 | 98.532082324 |
| 170 | 723712 | 352 | 2160 | 2048 | 41 | 765.399686520 | 792.735389610 | 99.091923701 |
| 171 | 721656 | 351 | 2160 | 4104 | 41 | 767.580312407 | 794.993894993 | 99.374236874 |
| 172 | 719600 | 350 | 2144 | 784 | 40 | 769.773399014 | 797.265306122 | 99.658163265 |

It should be noted that v = m - 1504 is an integer multiple of 16. In some specific implementations, it is considered that n₀ = 128, and k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It can be learned that, for the parameter combination provided in Embodiment 1, when the input data (that is, the first bit data) for the first data processing is considered as the FlexO-4e or 400G ZR frame data, the corresponding baud rate is less than 100 GBaud. In this case, in corresponding specific optical communication network transmission, a channel spacing that may be used is not greater than 112.5 GHz. It may be understood that the proposed data processing solution may be well compatible with existing 400G data centers and metropolitan area networks. In addition, after the first data processing and the second data processing are performed on the first bit data that includes a total of dᵢₙ = q × r bits, a DSP frame (also referred to as a super-frame or a multi-frame) is exactly obtained, so that the proposed data processing method has low implementation complexity and lower power consumption.

### Embodiment 2

Based on Embodiment 1, the first constraint and the second constraint are considered.

The first data processing includes the cyclic redundancy check CRC-32 operation. CRC-32 encoding and a corresponding CRC detection operation may directly adopt a CRC-32 operation in the existing 800G-ZR, which is easy to implement. In other words, the first constraint is considered: When the quantity r of rows is an integer multiple of 20, there are p = r/20 times of CRC-32 operations, and d_{CRC} = r/20 × 32 ≤ d_{CP}. In other words, the CRC-32 operations are performed on a total of 41120 bits in every 20 rows of the r rows of data. When the quantity r of rows is not an integer multiple of 20, there are $p = \left⌊r/20\right⌋ + 1$ times of CRC-32 operations, and ${d}_{CRC} = \left(\left⌊r/20\right⌋+1\right) \times 32 \leq {d}_{CP}$, where an operation $\left⌊a\right⌋$ indicates performing a floor operation on a. In other words, r₀ = 20, r₁ = r - 20 × (p - 1), CRC-32 is performed on a total of q × r₀ = 41120 bits in every r₀ = 20 rows in first 20 × (p - 1) rows of the r rows of data, and a CRC-32 operation is performed once on a total of q × r₁ bits in last r₁ rows. Considering that d_{PAD} = d_{CP} - d_{CRC}, proper r and d_{CP} need to be selected to make d_{PAD} ≥ 0.

It is considered that the first sub-processing including the PCS, the interleaving, and the encoding is performed on the first bit set including m bits to obtain the second bit set including 4096 bits, where the ratio of the encoding input bit length to the encoding output bit length in the encoding operation is 111: 128. It is considered that the ratio of the input bit length m to the output bit length 4096 in the first sub-processing (including the PCS processing, the interleaving, and the encoding) is m:4096=f1:f2, where the greatest common divisor of the integers f1 and f2 is 1. Typically, when the values of f1 and f2 are smaller, overall hardware implementation may be simpler, complexity is lower, and power consumption is lower. For ease of hardware implementation, the following second constraint is considered. In other words, m is an integer multiple of 32, so that the ratio of the input bit length m to the output bit length in the first sub-processing is f:128, where the integer f = m/32.

In Embodiment 2, it is considered that the overhead of the DSP framing in the second data processing is *h*_{DSP} = 1/28, each DSP frame (also referred to as a super-frame or a multi-frame) includes 178176 dual-polarization symbols, where 172032 dual-polarization symbols (that is, pre-framing symbols) in each DSP frame are obtained by performing the symbol mapping and the polarization distribution on the fourth bit data. In this case, the corresponding bit rate obtained through the second data processing is W₂₋₂₈ = W₁ × (1 + *h*_{DSP}) = W₀ × (r × q + d_{CP})/(r × q) × (4096/m) × (29/28), and the corresponding baud rate (that is, the symbol rate) is W_{*s*-28} = W₂₋₂₈/8 = W₀ × (r × q + d_{CP})/(r × q) × (4096/m) × (29/28)/8 GBaud.

The following Table 6 provides a corresponding parameter combination {r, m, d_{CP}, d_{PAD}, f, p, v/16, W₁, W₂₋₂₈, W_{*s*-28}}. It should be noted that Table 6 further provides a specific value of a corresponding parameter r₁ when the quantity r of rows is not an integer multiple of 20. When the quantity r of rows is an integer multiple of 20, for example, as shown by r=480 in the row 28 in Table 6, a corresponding parameter r₁ is represented by a slash in the table, indicating that the parameter r₁ does not exist.

**Table 6**

| Sequence number | r | m | d_{CP} | d_{PAD} | f | p | v/16 | r₁ | W₁ (Gbit/s) | W₂₋₂₈ (Gbit/s) | W_{*s*-28} (GBaud) |
|---|---|---|---|---|---|---|---|---|---|---|---|
| 1 | 574 | 3520 | 2576 | 1648 | 110 | 29 | 126 | 14 | 469.374023789 | 486.137381782 | 60.767172723 |
| 2 | 569 | 3488 | 2104 | 1176 | 109 | 29 | 124 | 9 | 473.498575844 | 490.409239267 | 61.301154908 |
| 3 | 564 | 3456 | 1632 | 704 | 108 | 29 | 122 | 4 | 477.696258254 | 494.756838905 | 61.844604863 |
| 4 | 563 | 3456 | 3688 | 2760 | 108 | 29 | 122 | 3 | 478.544741838 | 495.635625475 | 61.954453184 |
| 5 | 559 | 3424 | 1160 | 264 | 107 | 28 | 120 | 19 | 481.969033372 | 499.182213135 | 62.397776642 |
| 6 | 558 | 3424 | 3216 | 2320 | 107 | 28 | 120 | 18 | 482.832777159 | 500.076804915 | 62.509600614 |
| 7 | 553 | 3392 | 2744 | 1848 | 106 | 28 | 118 | 13 | 487.198353806 | 504.598295014 | 63.074786877 |
| 8 | 543 | 3328 | 1800 | 904 | 104 | 28 | 114 | 3 | 496.170699180 | 513.891081294 | 64.236385162 |
| 9 | 542 | 3328 | 3856 | 2960 | 104 | 28 | 114 | 2 | 497.086143275 | 514.839219820 | 64.354902478 |
| 10 | 538 | 3296 | 1328 | 464 | 103 | 27 | 112 | 18 | 500.781951032 | 518.667020711 | 64.833377589 |
| 11 | 537 | 3296 | 3384 | 2520 | 103 | 27 | 112 | 17 | 501.714505875 | 519.632881085 | 64.954110136 |
| 12 | 532 | 3264 | 2912 | 2048 | 102 | 27 | 110 | 12 | 506.429867773 | 524.516648764 | 65.564581096 |
| 13 | 527 | 3232 | 2440 | 1576 | 101 | 27 | 108 | 7 | 511.234705228 | 529.493087557 | 66.186635945 |
| 14 | 521 | 3200 | 4024 | 3160 | 100 | 27 | 106 | 1 | 517.122245019 | 535.590896627 | 66.948862078 |
| 15 | 517 | 3168 | 1496 | 664 | 99 | 26 | 104 | 17 | 521.123190822 | 539.734733351 | 67.466841669 |
| 16 | 516 | 3168 | 3552 | 2720 | 99 | 26 | 104 | 16 | 522.133119486 | 540.780730897 | 67.597591362 |
| 17 | 512 | 3136 | 1024 | 192 | 98 | 26 | 102 | 12 | 526.212284482 | 545.005580357 | 68.125697545 |
| 18 | 511 | 3136 | 3080 | 2248 | 98 | 26 | 102 | 11 | 527.242054119 | 546.072127481 | 68.259015935 |
| 19 | 506 | 3104 | 2608 | 1776 | 97 | 26 | 100 | 6 | 532.451955840 | 551.468097120 | 68.933512140 |
| 20 | 501 | 3072 | 2136 | 1304 | 96 | 26 | 98 | 1 | 537.765847615 | 556.971770744 | 69.621471343 |
| 21 | 496 | 3040 | 1664 | 864 | 95 | 25 | 96 | 16 | 543.186874304 | 562.586405530 | 70.323300691 |
| 22 | 495 | 3040 | 3720 | 2920 | 95 | 25 | 96 | 15 | 544.284221525 | 563.722943723 | 70.465367965 |
| 23 | 491 | 3008 | 1192 | 392 | 94 | 25 | 94 | 11 | 548.718308870 | 568.315391329 | 71.039423916 |
| 24 | 490 | 3008 | 3248 | 2448 | 94 | 25 | 94 | 10 | 549.838142153 | 569.475218658 | 71.184402332 |
| 25 | 485 | 2976 | 2776 | 1976 | 93 | 25 | 92 | 5 | 555.506576608 | 575.346097201 | 71.918262150 |
| 26 | 480 | 2944 | 2304 | 1536 | 92 | 24 | 90 | | 561.293103448 | 581.339285714 | 72.667410714 |
| 27 | 475 | 2912 | 1832 | 1064 | 91 | 24 | 88 | 15 | 567.201451905 | 587.458646616 | 73.432330827 |
| 28 | 474 | 2912 | 3888 | 3120 | 91 | 24 | 88 | 14 | 568.398079441 | 588.698010849 | 73.587251356 |
| 29 | 470 | 2880 | 1360 | 592 | 90 | 24 | 86 | 10 | 573.235509904 | 593.708206686 | 74.213525836 |
| 30 | 469 | 2880 | 3416 | 2648 | 90 | 24 | 86 | 9 | 574.457760458 | 594.974109046 | 74.371763631 |
| 31 | 465 | 2848 | 888 | 120 | 89 | 24 | 84 | 5 | 579.399332591 | 600.092165898 | 75.011520737 |
| 32 | 464 | 2848 | 2944 | 2176 | 89 | 24 | 84 | 4 | 580.648038050 | 601.385467980 | 75.173183497 |
| 33 | 459 | 2816 | 2472 | 1736 | 88 | 23 | 82 | 19 | 586.973180076 | 607.936507936 | 75.992063492 |
| 34 | 454 | 2784 | 2000 | 1264 | 87 | 23 | 80 | 14 | 593.437642412 | 614.631843927 | 76.828980491 |
| 35 | 453 | 2784 | 4056 | 3320 | 87 | 23 | 80 | 13 | 594.747659283 | 615.988647114 | 76.998580889 |
| 36 | 449 | 2752 | 1528 | 792 | 86 | 23 | 78 | 9 | 600.046079410 | 621.476296532 | 77.684537066 |
| 37 | 448 | 2752 | 3584 | 2848 | 86 | 23 | 78 | 8 | 601.385467980 | 622.863520408 | 77.857940051 |
| 38 | 444 | 2720 | 1056 | 320 | 85 | 23 | 76 | 4 | 606.803355079 | 628.474903474 | 78.559362934 |
| 39 | 443 | 2720 | 3112 | 2376 | 85 | 23 | 76 | 3 | 608.173114345 | 629.893582715 | 78.736697839 |
| 40 | 438 | 2688 | 2640 | 1936 | 84 | 22 | 74 | 18 | 615.115729806 | 637.084148728 | 79.635518591 |
| 41 | 428 | 2624 | 1696 | 992 | 82 | 22 | 70 | 8 | 629.487592652 | 651.969292389 | 81.496161549 |
| 42 | 427 | 2624 | 3752 | 3048 | 82 | 22 | 70 | 7 | 630.961802471 | 653.496152559 | 81.687019070 |
| 43 | 423 | 2592 | 1224 | 520 | 81 | 22 | 68 | 3 | 636.928344338 | 659.675785207 | 82.459473151 |
| 44 | 422 | 2592 | 3280 | 2576 | 81 | 22 | 68 | 2 | 638.437653211 | 661.238997968 | 82.654874746 |
| 45 | 418 | 2560 | 752 | 80 | 80 | 21 | 66 | 18 | 644.547104438 | 667.566643882 | 83.445830485 |
| 46 | 417 | 2560 | 2808 | 2136 | 80 | 21 | 66 | 17 | 646.092780947 | 669.167523124 | 83.645940390 |
| 47 | 412 | 2528 | 2336 | 1664 | 79 | 21 | 64 | 12 | 653.933712755 | 677.288488210 | 84.661061026 |
| 48 | 407 | 2496 | 1864 | 1192 | 78 | 21 | 62 | 7 | 661.967296450 | 685.608985608 | 85.701123201 |
| 49 | 406 | 2496 | 3920 | 3248 | 78 | 21 | 62 | 6 | 663.597757771 | 687.297677691 | 85.912209711 |
| 50 | 402 | 2464 | 1392 | 720 | 77 | 21 | 60 | 2 | 670.200720535 | 694.136460554 | 86.767057569 |
| 51 | 401 | 2464 | 3448 | 2776 | 77 | 21 | 60 | 1 | 671.872044027 | 695.867474171 | 86.983434271 |
| 52 | 397 | 2432 | 920 | 280 | 76 | 20 | 58 | 17 | 678.641535655 | 702.878733357 | 87.859841670 |
| 53 | 396 | 2432 | 2976 | 2336 | 76 | 20 | 58 | 16 | 680.355276907 | 704.653679653 | 88.081709957 |
| 54 | 391 | 2400 | 2504 | 1864 | 75 | 20 | 56 | 11 | 689.055472263 | 713.664596273 | 89.208074534 |
| 55 | 386 | 2368 | 2032 | 1392 | 74 | 20 | 54 | 6 | 697.981061282 | 722.908956328 | 90.363619541 |
| 56 | 385 | 2368 | 4088 | 3448 | 74 | 20 | 54 | 5 | 699.793999104 | 724.786641929 | 90.598330241 |
| 57 | 381 | 2336 | 1560 | 920 | 73 | 20 | 52 | 1 | 707.140917730 | 732.395950506 | 91.549493813 |
| 58 | 380 | 2336 | 3616 | 3008 | 73 | 19 | 52 | | 709.001814882 | 734.323308270 | 91.790413534 |
| 59 | 376 | 2304 | 1088 | 480 | 72 | 19 | 50 | 16 | 716.544387380 | 742.135258358 | 92.766907295 |
| 60 | 375 | 2304 | 3144 | 2536 | 72 | 19 | 50 | 15 | 718.455172413 | 744.114285714 | 93.014285714 |
| 61 | 371 | 2272 | 616 | 8 | 71 | 19 | 48 | 11 | 726.201319825 | 752.137081247 | 94.017135156 |
| 62 | 370 | 2272 | 2672 | 2064 | 71 | 19 | 48 | 10 | 728.164026095 | 754.169884169 | 94.271235521 |
| 63 | 365 | 2240 | 2200 | 1592 | 70 | 19 | 46 | 5 | 738.138875767 | 764.500978473 | 95.562622309 |
| 64 | 360 | 2208 | 1728 | 1152 | 69 | 18 | 44 | | 748.390804597 | 775.119047618 | 96.889880952 |
| 65 | 359 | 2208 | 3784 | 3208 | 69 | 18 | 44 | 19 | 750.475458649 | 777.278153601 | 97.159769200 |
| 66 | 355 | 2176 | 1256 | 680 | 68 | 18 | 42 | 15 | 758.931520155 | 786.036217303 | 98.254527163 |
| 67 | 354 | 2176 | 3312 | 2736 | 68 | 18 | 42 | 14 | 761.075394506 | 788.256658595 | 98.532082324 |
| 68 | 350 | 2144 | 784 | 208 | 67 | 18 | 40 | 10 | 769.773399014 | 797.265306122 | 99.658163265 |

It should be noted that v = m - 1504 is an integer multiple of 16. In some specific implementations, it is considered that n₀ = 128, and k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It can be learned that, for the parameter combination provided in Embodiment 2, when the input data (that is, the first bit data) for the first data processing is considered as the FlexO-4e or 400G ZR frame data, the corresponding baud rate is less than 100 GBaud. In this case, in corresponding specific optical communication network transmission, a channel spacing that may be used is not greater than 112.5 GHz. It may be understood that the proposed data processing solution may be well compatible with existing 400G data centers and metropolitan area networks. In addition, after the first data processing and the second data processing are performed on the first bit data that includes a total of dᵢₙ = q × r bits, a DSP frame (also referred to as a super-frame or a multi-frame) is exactly obtained, so that the proposed data processing method has low implementation complexity and lower power consumption. Further, in Embodiment 2, the cyclic redundancy check CRC-32 operation included in the first data processing adopts a CRC-32 operation in the existing 800G-ZR, which is easy to implement. In addition, m is an integer multiple of 32, so that the ratio of the input bit length m to the output bit length in the first sub-processing is f:128, where the integer f = m/32. In this way, hardware implementation is simpler.

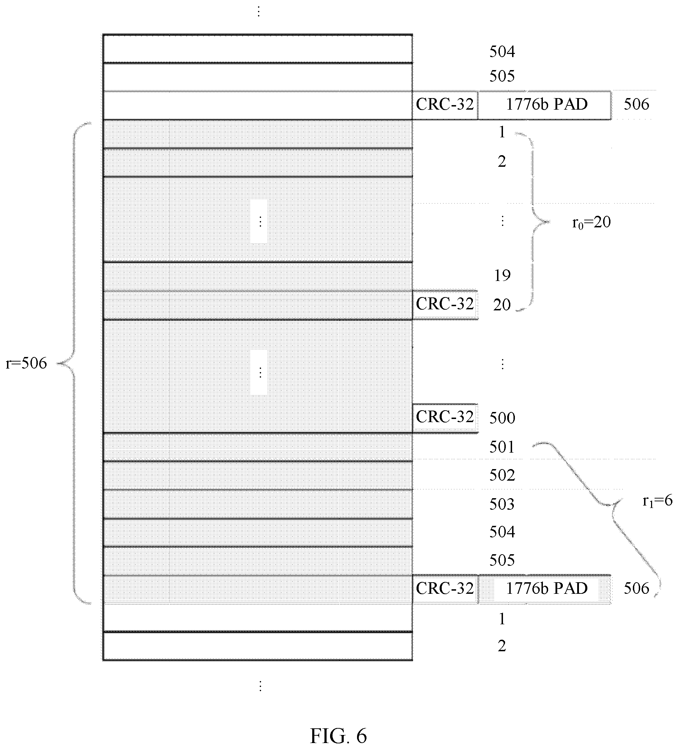

Some parameter combinations in Table 6 are used as an example. For example, for a parameter combination in the row 19, namely, {r=506, m=3104, d_{CP} = 2608, d_{PAD} = 1776, f = 97 , p=26, r₁ = 6 , W₁ = 532.451955840 (Gbit/s) , W₂₋₂₈ = 551.468097120 (Gbit/s) , W_{*s*-28} = 68.933512140 (GBaud)}, an operation of adding cyclic redundancy check (Cyclic Redundancy Check, CRC) bits and/or padding (Padding) bits corresponding to the parameter combination may be understood with reference to FIG. 6. In this case, r₀ = 20, and 1776b in FIG. 6 represents 1776 bits. It should be noted that, in actual optical transmission application, a channel spacing is C_{grid} GHz, a value C_{grid} (in a unit of G) of the channel spacing is smaller than a value of a baud rate (in a unit of G), and C_{grid} is usually an integer multiple of a value 12.5. In this case, considering that a baud rate corresponding to a parameter combination in the row 21 is W_{*s*-28} =68.933512140 (GBaud), in corresponding specific optical communication network transmission, a channel spacing that may be used is 75 GHz. The proposed data processing solution may be well compatible with existing 400G data centers and metropolitan area networks, for example, an OpenZR+, 400ZR, or 400ZR+ transport network using 75 GHz grid spacings (grid spacings).

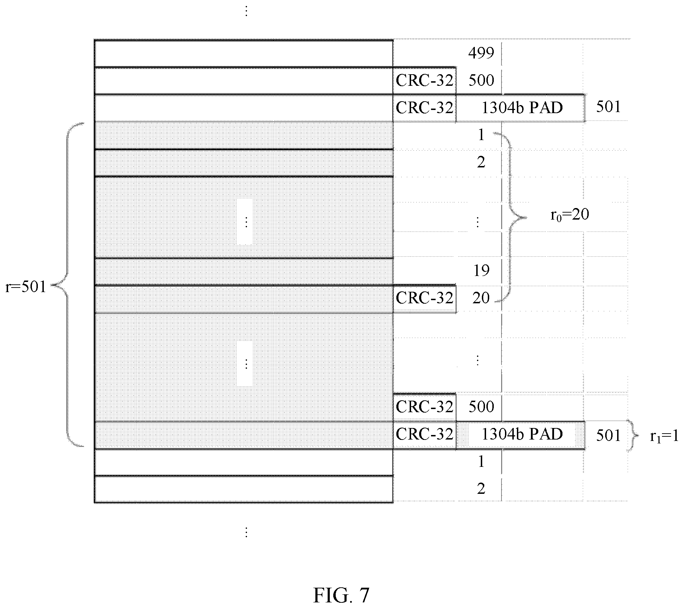

For another example, for a parameter combination in the row 20 in Table 6, namely, {r=501, m=3072, d_{CP} = 2136 , d_{PAD} = 1304, f = 96 , p=26, r₁ = 1 , W₁ = 537.765847615 (Gbit/s) , W₂₋₂₈ = 556.971770744 (Gbit/s) , W_{*s*-28} = 69.621471343 (GBaud)}, an operation of adding cyclic redundancy check (Cyclic Redundancy Check, CRC) bits and/or padding (Padding) bits corresponding to the parameter combination may be understood with reference to FIG. 7. In this case, r₀ = 20, and 1304b in FIG. 7 represents 1304 bits. In this case, in corresponding specific optical communication network transmission, a channel spacing that may be used is also 75 GHz. The proposed data processing solution may be well compatible with existing 400G data centers and metropolitan area networks, for example, an OpenZR+, 400ZR, or 400ZR+ transport network using 75 GHz grid spacings (grid spacings).

Further, a parameter combination in the row 47 in Table 6, namely, {r=412, m=2528, d_{CP} = 2336, d_{PAD} = 1664, f = 79, p=21, r₁ = 12, W₁ = 653.933712755 (Gbit/s), W₂₋₂₈ = 677.288488210 (Gbit/s), W_{*s*-28} = 84.661061026 (GBaud)}, is considered. In this case, in corresponding specific optical communication network transmission, a channel spacing that may be used is 100 GHz. The proposed data processing solution may be well compatible with existing 400G data centers and metropolitan area networks, for example, an OpenZR+, 400ZR, or 400ZR+ transport network using 100 GHz grid spacings (grid spacings).

In some other specific applications, a parameter combination in the row 48 in Table 6, namely, {r=407, m=2496, d_{CP} = 1864 , d_{PAD} = 1192, f = 78 , p=21, r₁ = 7 , W₁ = 661.967296450 (Gbit/s) , W₂₋₂₈ = 685.608985608 (Gbit/s) , W_{*s*-28} = 85.701123201 (GBaud) }, may be used. In this case, in corresponding specific optical communication network transmission, a channel spacing that may be used is 100 GHz. The proposed data processing solution may be well compatible with existing 400G data centers and metropolitan area networks, for example, an OpenZR+, 400ZR, or 400ZR+ transport network using 100 GHz grid spacings (grid spacings).

In still some other specific applications, a parameter combination in the row 49 in Table 6, namely, {r=406, m=2496, d_{CP} = 3920 , d_{PAD} = 3248, f = 78 , p=21, r₁ = 6 , W₁ = 663.597757771 (Gbit/s) , W₂₋₂₈ = 687.297677691 (Gbit/s) , W_{*s*-28} = 85.912209711 (GBaud) }, may be used. In this case, in corresponding specific optical communication network transmission, a channel spacing that may be used is 100 GHz. The proposed data processing solution may be well compatible with existing 400G data centers and metropolitan area networks, for example, an OpenZR+, 400ZR, or 400ZR+ transport network using 100 GHz grid spacings (grid spacings).

For another example, a parameter combination in the row 63 in Table 6, namely, {r=365, m=2240, d_{CP} = 2200, d_{PAD} = 1592, f = 70 , p=19, r₁ = 5, W₁ = 738.138875767 (Gbit/s), W₂₋₂₈ = 764.500978473 (Gbit/s), W_{*s*-28} = 95.562622309 (GBaud)}, is considered. In this case, in corresponding specific optical communication network transmission, a channel spacing that may be used is 112.5 GHz. The proposed data processing solution may be well compatible with existing 400G data centers and metropolitan area networks, for example, a high-performance metropolitan transport network using 112.5 GHz grid spacings (grid spacings).

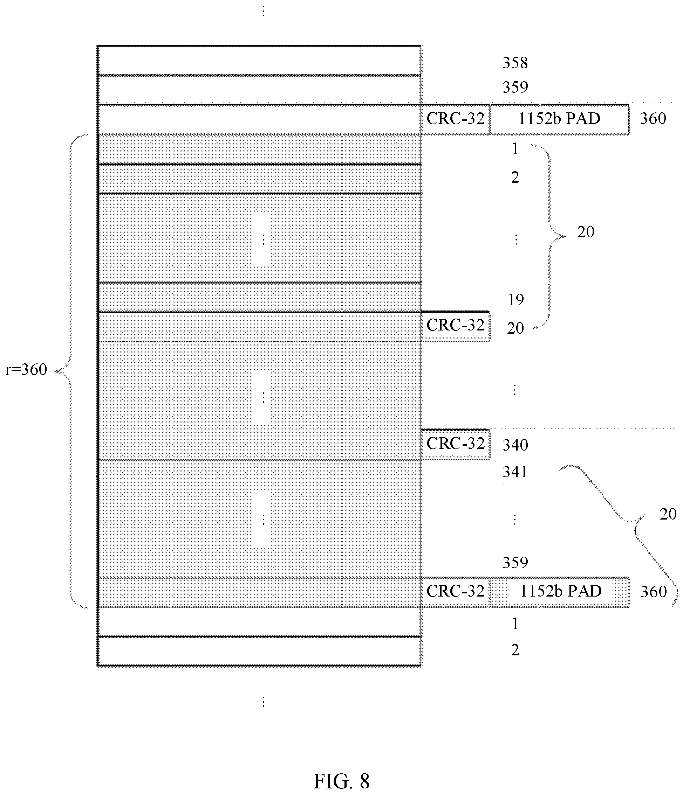

In still some other specific applications, a parameter combination in the row 64 in Table 6, namely, {r=360, m=2208, d_{CP} = 1728 , d_{PAD} = 1152, f = 69 , p=18, W₁ = 748.390804597 (Gbit/s) , W₂₋₂₈ = 775.119047618 (Gbit/s) , W_{*s*-28} = 96.889880952 (GBaud)}, may be used. An operation of adding cyclic redundancy check (Cyclic Redundancy Check, CRC) bits and/or padding (Padding) bits corresponding to the parameter combination may be understood with reference to FIG. 8. In this case, r=360 is divisible by p, r/p = 20, and 1152b in FIG. 8 represents 1152 bits. In this case, in corresponding specific optical communication network transmission, a channel spacing that may be used is 112.5 GHz. The proposed data processing solution may be well compatible with existing 400G data centers and metropolitan area networks, for example, a high-performance metropolitan transport network using 112.5 GHz grid spacings (grid spacings).

### Embodiment 3

Based on Embodiment 1, it is considered that the overhead of the DSP framing in the second data processing is *h*_{DSP} = 1/56, each DSP frame (also referred to as a super-frame or a multi-frame) includes 175104 dual-polarization symbols, where 172032 dual-polarization symbols (that is, pre-framing symbols) in each DSP frame are obtained by performing the symbol mapping and the polarization distribution on the fourth bit data. In this case, the corresponding bit rate obtained through the second data processing is W₂₋₅₆ = W₁ × (1 + *h*_{DSP}) = W₀ × (r × q + d_{CP})/(r × q) × (4096/m) × (57/56), and the corresponding baud rate (that is, the symbol rate) is W_{*s-*56} = *W*₂₋₅₆/8 = W₀ × (r × q + d_{CP})/(r × q) × (4096/m) × (57/56)/8 GBaud.

The following Table 7 provides a corresponding parameter combination {dᵢₙ, r, m, d_{CP}, v/16, W₁, W₂₋₅₆, W₃₋₅₆}.

**Table 7**

| Sequence number | dᵢₙ | r | m | d_{CP} | v/16 | W₁ (Gbit/s) | W₂₋₅₆ (Gbit/s) | W_{*s*-56} (GBaud) |
|---|---|---|---|---|---|---|---|---|
| 1 | 1186312 | 577 | 3536 | 1784 | 127 | 466.933604255 | 475.271704331 | 59.408963041 |
| 2 | 1184256 | 576 | 3536 | 3840 | 127 | 467.744252873 | 476.096828817 | 59.512103602 |
| 3 | 1182200 | 575 | 3520 | 520 | 126 | 468.557721139 | 476.924823302 | 59.615602913 |
| 4 | 1180144 | 574 | 3520 | 2576 | 126 | 469.374023789 | 477.755702785 | 59.719462848 |
| 5 | 1176032 | 572 | 3504 | 1312 | 125 | 471.015191705 | 479.426177271 | 59.928272159 |
| 6 | 1173976 | 571 | 3504 | 3368 | 125 | 471.840086961 | 480.265802800 | 60.033225350 |
| 7 | 1171920 | 570 | 3488 | 48 | 124 | 472.667876588 | 481.108374384 | 60.138546798 |
| 8 | 1169864 | 569 | 3488 | 2104 | 124 | 473.498575844 | 481.953907555 | 60.244238444 |
| 9 | 1165752 | 567 | 3472 | 840 | 123 | 475.168764824 | 483.653921338 | 60.456740167 |
| 10 | 1163696 | 566 | 3472 | 2896 | 123 | 476.008285609 | 484.508433567 | 60.563554196 |
| 11 | 1159584 | 564 | 3456 | 1632 | 122 | 477.696258254 | 486.226548579 | 60.778318572 |
| 12 | 1157528 | 563 | 3456 | 3688 | 122 | 478.544741838 | 487.090183657 | 60.886272957 |
| 13 | 1155472 | 562 | 3440 | 368 | 121 | 479.396244938 | 487.956892169 | 60.994611521 |
| 14 | 1153416 | 561 | 3440 | 2424 | 121 | 480.250783699 | 488.826690550 | 61.103336319 |
| 15 | 1149304 | 559 | 3424 | 1160 | 120 | 481.969033372 | 490.575623254 | 61.321952907 |
| 16 | 1147248 | 558 | 3424 | 3216 | 120 | 482.832777159 | 491.454791037 | 61.431848880 |
| 17 | 1143136 | 556 | 3408 | 1952 | 119 | 484.569585710 | 493.222614027 | 61.652826753 |
| 18 | 1141080 | 555 | 3408 | 4008 | 119 | 485.442684063 | 494.111303421 | 61.763912928 |
| 19 | 1139024 | 554 | 3392 | 688 | 118 | 486.318934395 | 495.003201081 | 61.875400135 |
| 20 | 1136968 | 553 | 3392 | 2744 | 118 | 487.198353806 | 495.898324410 | 61.987290551 |
| 21 | 1132856 | 551 | 3376 | 1480 | 117 | 488.966768884 | 497.698318328 | 62.212289791 |
| 22 | 1130800 | 550 | 3376 | 3536 | 117 | 489.855799373 | 498.603224361 | 62.325403045 |
| 23 | 1128744 | 549 | 3360 | 216 | 116 | 490.748068588 | 499.511426956 | 62.438928369 |
| 24 | 1122576 | 546 | 3344 | 1008 | 115 | 493.444486548 | 502.255995236 | 62.781999404 |
| 25 | 1120520 | 545 | 3344 | 3064 | 115 | 494.349889275 | 503.177565869 | 62.897195734 |
| 26 | 1116408 | 543 | 3328 | 1800 | 114 | 496.170699180 | 505.030890237 | 63.128861280 |
| 27 | 1114352 | 542 | 3328 | 3856 | 114 | 497.086143275 | 505.962681548 | 63.245335193 |
| 28 | 1112296 | 541 | 3312 | 536 | 113 | 498.004971636 | 506.897917558 | 63.362239695 |
| 29 | 1110240 | 540 | 3312 | 2592 | 113 | 498.927203065 | 507.836617405 | 63.479577176 |
| 30 | 1106128 | 538 | 3296 | 1328 | 112 | 500.781951032 | 509.724485871 | 63.715560734 |
| 31 | 1104072 | 537 | 3296 | 3384 | 112 | 501.714505875 | 510.673693480 | 63.834211685 |
| 32 | 1102016 | 536 | 3280 | 64 | 111 | 502.650540401 | 511.626442908 | 63.953305364 |
| 33 | 1099960 | 535 | 3280 | 2120 | 111 | 503.590074121 | 512.582754016 | 64.072844252 |
| 34 | 1095848 | 533 | 3264 | 856 | 110 | 505.479717927 | 514.506141461 | 64.313267683 |
| 35 | 1093792 | 532 | 3264 | 2912 | 110 | 506.429867773 | 515.473258268 | 64.434157284 |
| 36 | 1089680 | 530 | 3248 | 1648 | 109 | 508.340923877 | 517.418440375 | 64.677305047 |
| 37 | 1087624 | 529 | 3248 | 3704 | 109 | 509.301870803 | 518.396547068 | 64.799568383 |
| 38 | 1085568 | 528 | 3232 | 384 | 108 | 510.266457680 | 519.378358710 | 64.922294839 |
| 39 | 1083512 | 527 | 3232 | 2440 | 108 | 511.234705228 | 520.363896392 | 65.045487049 |
| 40 | 1079400 | 525 | 3216 | 1176 | 107 | 513.182266009 | 522.346235045 | 65.293279381 |
| 41 | 1077344 | 524 | 3216 | 3232 | 107 | 514.161621479 | 523.343079005 | 65.417884876 |
| 42 | 1071176 | 521 | 3200 | 4024 | 106 | 517.122245019 | 526.356570823 | 65.794571353 |
| 43 | 1069120 | 520 | 3184 | 704 | 105 | 518.116710875 | 527.368794998 | 65.921099375 |
| 44 | 1067064 | 519 | 3184 | 2760 | 105 | 519.115008969 | 528.384919844 | 66.048114980 |
| 45 | 1062952 | 517 | 3168 | 1496 | 104 | 521.123190822 | 530.428962087 | 66.303620261 |
| 46 | 1060896 | 516 | 3168 | 3552 | 104 | 522.133119486 | 531.456925191 | 66.432115649 |
| 47 | 1058840 | 515 | 3152 | 232 | 103 | 523.146970204 | 532.488880386 | 66.561110048 |
| 48 | 1056784 | 514 | 3152 | 2288 | 103 | 524.164765866 | 533.524850970 | 66.690606371 |
| 49 | 1052672 | 512 | 3136 | 1024 | 102 | 526.212284482 | 535.608932420 | 66.951116552 |
| 50 | 1050616 | 511 | 3136 | 3080 | 102 | 527.242054119 | 536.657090800 | 67.082136350 |
| 51 | 1046504 | 509 | 3120 | 1816 | 101 | 529.313732132 | 538.765763063 | 67.345720383 |
| 52 | 1044448 | 508 | 3120 | 3872 | 101 | 530.355688297 | 539.826325588 | 67.478290699 |
| 53 | 1042392 | 507 | 3104 | 552 | 100 | 531.401754744 | 540.891071793 | 67.611383974 |
| 54 | 1040336 | 506 | 3104 | 2608 | 100 | 532.451955840 | 541.960026480 | 67.745003310 |
| 55 | 1036224 | 504 | 3088 | 1344 | 99 | 534.564860427 | 544.110661506 | 68.013832688 |
| 56 | 1034168 | 503 | 3088 | 3400 | 99 | 535.627613628 | 545.192392443 | 68.149049055 |
| 57 | 1032112 | 502 | 3072 | 80 | 98 | 536.694600906 | 546.278433065 | 68.284804133 |
| 58 | 1030056 | 501 | 3072 | 2136 | 98 | 537.765847615 | 547.368809179 | 68.421101147 |
| 59 | 1025944 | 499 | 3056 | 872 | 97 | 539.921221753 | 549.562672142 | 68.695334018 |
| 60 | 1023888 | 498 | 3056 | 2928 | 97 | 541.005400914 | 550.666211644 | 68.833276456 |
| 61 | 1019776 | 496 | 3040 | 1664 | 96 | 543.186874304 | 552.886639917 | 69.110829990 |
| 62 | 1017720 | 495 | 3040 | 3720 | 96 | 544.284221525 | 554.003582624 | 69.250447828 |
| 63 | 1015664 | 494 | 3024 | 400 | 95 | 545.386011447 | 555.125047366 | 69.390630921 |
| 64 | 1013608 | 493 | 3024 | 2456 | 95 | 546.492271105 | 556.251061661 | 69.531382708 |
| 65 | 1009496 | 491 | 3008 | 1192 | 94 | 548.718308870 | 558.516850099 | 69.814606262 |
| 66 | 1007440 | 490 | 3008 | 3248 | 94 | 549.838142153 | 559.656680406 | 69.957085051 |
| 67 | 1003328 | 488 | 2992 | 1984 | 93 | 552.091577162 | 561.950355325 | 70.243794416 |
| 68 | 1001272 | 487 | 2992 | 4040 | 93 | 553.225235431 | 563.104257492 | 70.388032187 |
| 69 | 999216 | 486 | 2976 | 720 | 92 | 554.363558961 | 564.262908228 | 70.532863529 |
| 70 | 997160 | 485 | 2976 | 2776 | 92 | 555.506576608 | 565.426336905 | 70.678292113 |
| 71 | 993048 | 483 | 2960 | 1512 | 91 | 557.806810880 | 567.767646788 | 70.970955849 |
| 72 | 990992 | 482 | 2960 | 3568 | 91 | 558.964086421 | 568.945587964 | 71.118198496 |
| 73 | 988936 | 481 | 2944 | 248 | 90 | 560.126173919 | 570.128427025 | 71.266053378 |
| 74 | 986880 | 480 | 2944 | 2304 | 90 | 561.293103448 | 571.316194581 | 71.414524323 |
| 75 | 982768 | 478 | 2928 | 1040 | 89 | 563.641610157 | 573.706638910 | 71.713329864 |
| 76 | 980712 | 477 | 2928 | 3096 | 89 | 564.823248753 | 574.909378195 | 71.863672274 |
| 77 | 976600 | 475 | 2912 | 1832 | 88 | 567.201451905 | 577.330049261 | 72.166256158 |
| 78 | 974544 | 474 | 2912 | 3888 | 88 | 568.398079441 | 578.548045145 | 72.318505643 |
| 79 | 972488 | 473 | 2896 | 568 | 87 | 569.599766712 | 579.771191118 | 72.471398890 |
| 80 | 970432 | 472 | 2896 | 2624 | 87 | 570.806545879 | 580.999519913 | 72.624939989 |
| 81 | 966320 | 470 | 2880 | 1360 | 86 | 573.235509904 | 583.471858295 | 72.933982287 |
| 82 | 964264 | 469 | 2880 | 3416 | 86 | 574.457760458 | 584.715934752 | 73.089491844 |
| 83 | 962208 | 468 | 2864 | 96 | 85 | 575.685234306 | 585.965327775 | 73.245665972 |
| 84 | 960152 | 467 | 2864 | 2152 | 85 | 576.917965000 | 587.220071518 | 73.402508940 |
| 85 | 956040 | 465 | 2848 | 888 | 84 | 579.399332591 | 589.745749245 | 73.718218656 |
| 86 | 953984 | 464 | 2848 | 2944 | 84 | 580.648038050 | 591.016753015 | 73.877094127 |
| 87 | 949872 | 462 | 2832 | 1680 | 83 | 583.161665920 | 593.575267097 | 74.196908387 |
| 88 | 947816 | 461 | 2832 | 3736 | 83 | 584.426658688 | 594.862849021 | 74.357856128 |
| 89 | 945760 | 460 | 2816 | 416 | 82 | 585.697151424 | 596.156029128 | 74.519503641 |
| 90 | 943704 | 459 | 2816 | 2472 | 82 | 586.973180076 | 597.454844006 | 74.681855501 |
| 91 | 939592 | 457 | 2800 | 1208 | 81 | 589.541990492 | 600.069526037 | 75.008690755 |
| 92 | 937536 | 456 | 2800 | 3264 | 81 | 590.834845735 | 601.385467980 | 75.173183497 |
| 93 | 933424 | 454 | 2784 | 2000 | 80 | 593.437642412 | 604.034743169 | 75.504342896 |
| 94 | 931368 | 453 | 2784 | 4056 | 80 | 594.747659283 | 605.368153198 | 75.671019150 |
| 95 | 929312 | 452 | 2768 | 736 | 79 | 596.063472688 | 606.707463272 | 75.838432909 |
| 96 | 927256 | 451 | 2768 | 2792 | 79 | 597.385121186 | 608.052712636 | 76.006589079 |
| 97 | 923144 | 449 | 2752 | 1528 | 78 | 600.046079410 | 610.761187971 | 76.345148496 |
| 98 | 921088 | 448 | 2752 | 3584 | 78 | 601.385467980 | 612.124494194 | 76.515561774 |
| 99 | 919032 | 447 | 2736 | 264 | 77 | 602.730849340 | 613.493900221 | 76.686737528 |
| 100 | 916976 | 446 | 2736 | 2320 | 77 | 604.082263800 | 614.869447083 | 76.858680885 |
| 101 | 912864 | 444 | 2720 | 1056 | 76 | 606.803355079 | 617.639129277 | 77.204891160 |
| 102 | 910808 | 443 | 2720 | 3112 | 76 | 608.173114345 | 619.033348530 | 77.379168566 |
| 103 | 906696 | 441 | 2704 | 1848 | 75 | 610.931269059 | 621.840756006 | 77.730094501 |
| 104 | 904640 | 440 | 2704 | 3904 | 75 | 612.319749216 | 623.254030452 | 77.906753806 |
| 105 | 902584 | 439 | 2688 | 584 | 74 | 613.714555023 | 624.673743505 | 78.084217938 |
| 106 | 900528 | 438 | 2688 | 2640 | 74 | 615.115729806 | 626.099939267 | 78.262492408 |
| 107 | 896416 | 436 | 2672 | 1376 | 73 | 617.937361594 | 628.971957337 | 78.621494667 |
| 108 | 894360 | 435 | 2672 | 3432 | 73 | 619.357907253 | 630.417869882 | 78.802233735 |
| 109 | 892304 | 434 | 2656 | 112 | 72 | 620.784999205 | 631.870445619 | 78.983805702 |
| 110 | 886136 | 431 | 2640 | 904 | 71 | 625.106008480 | 636.268615775 | 79.533576972 |
| 111 | 884080 | 430 | 2640 | 2960 | 71 | 626.559743384 | 637.748310230 | 79.718538779 |
| 112 | 879968 | 428 | 2624 | 1696 | 70 | 629.487592652 | 640.728442521 | 80.091055315 |
| 113 | 877912 | 427 | 2624 | 3752 | 70 | 630.961802471 | 642.228977515 | 80.278622189 |
| 114 | 875856 | 426 | 2608 | 432 | 69 | 632.442933462 | 643.736557274 | 80.467069659 |
| 115 | 873800 | 425 | 2608 | 2488 | 69 | 633.931034482 | 645.251231527 | 80.656403941 |
| 116 | 869688 | 423 | 2592 | 1224 | 68 | 636.928344338 | 648.302064773 | 81.037758097 |
| 117 | 867632 | 422 | 2592 | 3280 | 68 | 638.437653211 | 649.838325590 | 81.229790699 |
| 118 | 863520 | 420 | 2576 | 2016 | 67 | 641.477832512 | 652.932793807 | 81.616599226 |
| 119 | 861464 | 419 | 2576 | 4072 | 67 | 643.008805859 | 654.491105964 | 81.811388245 |
| 120 | 859408 | 418 | 2560 | 752 | 66 | 644.547104438 | 656.056874160 | 82.007109270 |
| 121 | 857352 | 417 | 2560 | 2808 | 66 | 646.092780947 | 657.630152036 | 82.203769004 |
| 122 | 853240 | 415 | 2544 | 1544 | 65 | 649.206481096 | 660.799453973 | 82.599931747 |
| 123 | 851184 | 414 | 2544 | 3600 | 65 | 650.774612693 | 662.395587920 | 82.799448490 |
| 124 | 849128 | 413 | 2528 | 280 | 64 | 652.350338148 | 663.999451329 | 82.999931416 |
| 125 | 847072 | 412 | 2528 | 2336 | 64 | 653.933712755 | 665.611100483 | 83.201387560 |
| 126 | 842960 | 410 | 2512 | 1072 | 63 | 657.123633305 | 668.857983900 | 83.607247987 |
| 127 | 840904 | 409 | 2512 | 3128 | 63 | 658.730292555 | 670.493333493 | 83.811666687 |
| 128 | 836792 | 407 | 2496 | 1864 | 62 | 661.967296450 | 673.788141029 | 84.223517629 |
| 129 | 834736 | 406 | 2496 | 3920 | 62 | 663.597757771 | 675.447717731 | 84.430964716 |
| 130 | 832680 | 405 | 2480 | 600 | 61 | 665.236270753 | 677.115489874 | 84.639436234 |
| 131 | 830624 | 404 | 2480 | 2656 | 61 | 666.882895186 | 678.791518314 | 84.848939789 |
| 132 | 826512 | 402 | 2464 | 1392 | 60 | 670.200720535 | 682.168590544 | 85.271073818 |
| 133 | 824456 | 401 | 2464 | 3448 | 60 | 671.872044027 | 683.869759099 | 85.483719887 |
| 134 | 822400 | 400 | 2448 | 128 | 59 | 673.551724137 | 685.579433497 | 85.697429187 |
| 135 | 820344 | 399 | 2448 | 2184 | 59 | 675.239823697 | 687.297677691 | 85.912209711 |
| 136 | 816232 | 397 | 2432 | 920 | 58 | 678.641535655 | 690.760134506 | 86.345016813 |
| 137 | 814176 | 396 | 2432 | 2976 | 58 | 680.355276907 | 692.504478280 | 86.563059785 |
| 138 | 810064 | 394 | 2416 | 1712 | 57 | 683.808856992 | 696.019729439 | 87.002466180 |
| 139 | 808008 | 393 | 2416 | 3768 | 57 | 685.548828639 | 697.790772007 | 87.223846501 |
| 140 | 805952 | 392 | 2400 | 448 | 56 | 687.297677691 | 699.570850507 | 87.446356313 |
| 141 | 803896 | 391 | 2400 | 2504 | 56 | 689.055472263 | 701.360034268 | 87.670004284 |
| 142 | 799784 | 389 | 2384 | 1240 | 55 | 692.598173920 | 704.965998455 | 88.120749807 |
| 143 | 797728 | 388 | 2384 | 3296 | 55 | 694.383220760 | 706.782921131 | 88.347865141 |
| 144 | 793616 | 386 | 2368 | 2032 | 54 | 697.981061282 | 710.445008805 | 88.805626101 |
| 145 | 791560 | 385 | 2368 | 4088 | 54 | 699.793999104 | 712.290320516 | 89.036290065 |
| 146 | 789504 | 384 | 2352 | 768 | 53 | 701.616379310 | 714.145243226 | 89.268155403 |
| 147 | 787448 | 383 | 2352 | 2824 | 53 | 703.448275862 | 716.009852216 | 89.501231527 |
| 148 | 783336 | 381 | 2336 | 1560 | 52 | 707.140917730 | 719.768434118 | 89.971054265 |
| 149 | 781280 | 380 | 2336 | 3616 | 52 | 709.001814882 | 721.662561576 | 90.207820197 |
| 150 | 779224 | 379 | 2320 | 296 | 51 | 710.872532071 | 723.566684430 | 90.445835554 |
| 151 | 777168 | 378 | 2320 | 2352 | 51 | 712.753147235 | 725.480882007 | 90.685110251 |
| 152 | 773056 | 376 | 2304 | 1088 | 50 | 716.544387380 | 729.339822869 | 91.167477859 |
| 153 | 771000 | 375 | 2304 | 3144 | 50 | 718.455172413 | 731.284729064 | 91.410591133 |
| 154 | 766888 | 373 | 2288 | 1880 | 49 | 722.307478968 | 735.205826806 | 91.900728351 |
| 155 | 764832 | 372 | 2288 | 3936 | 49 | 724.249165739 | 737.182186556 | 92.147773319 |
| 156 | 762776 | 371 | 2272 | 616 | 48 | 726.201319825 | 739.169200536 | 92.396150067 |
| 157 | 760720 | 370 | 2272 | 2672 | 48 | 728.164026095 | 741.166955132 | 92.645869391 |
| 158 | 756608 | 368 | 2256 | 1408 | 47 | 732.121439280 | 745.195036410 | 93.149379551 |
| 159 | 754552 | 367 | 2256 | 3464 | 47 | 734.116320586 | 747.225540596 | 93.403192575 |
| 160 | 752496 | 366 | 2240 | 144 | 46 | 736.122102882 | 749.267140434 | 93.658392554 |
| 161 | 750440 | 365 | 2240 | 2200 | 46 | 738.138875767 | 751.319927120 | 93.914990890 |
| 162 | 746328 | 363 | 2224 | 936 | 45 | 742.205756625 | 755.459430851 | 94.432428856 |
| 163 | 744272 | 362 | 2224 | 2992 | 45 | 744.256048771 | 757.546335356 | 94.693291919 |
| 164 | 740160 | 360 | 2208 | 1728 | 44 | 748.390804597 | 761.754926108 | 95.219365763 |
| 165 | 738104 | 359 | 2208 | 3784 | 44 | 750.475458649 | 763.876806125 | 95.484600766 |
| 166 | 736048 | 358 | 2192 | 464 | 43 | 752.571758813 | 766.010540220 | 95.751317528 |
| 167 | 733992 | 357 | 2192 | 2520 | 43 | 754.679802955 | 768.156228008 | 96.019528501 |
| 168 | 729880 | 355 | 2176 | 1256 | 42 | 758.931520155 | 772.483868729 | 96.560483591 |
| 169 | 727824 | 354 | 2176 | 3312 | 42 | 761.075394506 | 774.666026550 | 96.833253319 |
| 170 | 723712 | 352 | 2160 | 2048 | 41 | 765.399686520 | 779.067538065 | 97.383442258 |
| 171 | 721656 | 351 | 2160 | 4104 | 41 | 767.580312407 | 781.287103700 | 97.660887963 |
| 172 | 719600 | 350 | 2144 | 784 | 40 | 769.773399014 | 783.519352568 | 97.939919071 |

It should be noted that v = m - 1504 is an integer multiple of 16. In some specific implementations, it is considered that n₀ = 128, and k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It can be learned that, for the parameter combination provided in Embodiment 3, when the input data (that is, the first bit data) for the first data processing is considered as the FlexO-4e or 400G-ZR frame data, the corresponding baud rate is less than 100 GBaud. In this case, in corresponding specific optical communication network transmission, a channel spacing that may be used is not greater than 112.5 GHz. It may be understood that the proposed data processing solution may be well compatible with existing 400G data centers and metropolitan area networks. In addition, after the first data processing and the second data processing are performed on the first bit data that includes a total of dᵢₙ = q × r bits, a DSP frame (also referred to as a super-frame or a multi-frame) is exactly obtained, so that the proposed data processing method has low implementation complexity and lower power consumption.

### Embodiment 4

Based on Embodiment 3, the first constraint and the second constraint are considered.

The first data processing includes the cyclic redundancy check CRC-32 operation. CRC-32 encoding and a corresponding CRC detection operation may directly adopt a CRC-32 operation in the existing 800G-ZR, which is easy to implement. In other words, the first constraint is considered: When the quantity r of rows is an integer multiple of 20, there are p = r/20 times of CRC-32 operations, and d_{CRC} = r/20 × 32 ≤ d_{CP}. In other words, the CRC-32 operations are performed on a total of 41120 bits in every 20 rows of the r rows of data. When the quantity r of rows is not an integer multiple of 20, there are $p = \left⌊r/20\right⌋ + 1$ times of CRC-32 operations, and ${d}_{CRC} = \left(\left⌊r/20\right⌋+1\right) \times 32 \leq {d}_{CP}$, where an operation $\left⌊a\right⌋$ indicates performing a floor operation on a. In other words, r₀ = 20, r₁ = r - 20 × (p - 1), CRC-32 is performed on a total of q × r₀ = 41120 bits in every r₀ = 20 rows in first 20 × (p - 1) rows of the r rows of data, and a CRC-32 operation is performed once on a total of q × r₁ bits in last r₁ rows. Considering that d_{PAD} = d_{CP} - d_{CRC}, proper r and d_{CP} need to be selected to make d_{PAD} ≥ 0.

It is considered that the first sub-processing including the PCS, the interleaving, and the encoding is performed on the first bit set including m bits to obtain the second bit set including 4096 bits, where the ratio of the encoding input bit length to the encoding output bit length in the encoding operation is 111: 128. It is considered that the ratio of the input bit length m to the output bit length 4096 in the first sub-processing (including the PCS processing, the interleaving, and the encoding) is m:4096=f1:f2, where the greatest common divisor of the integers f1 and f2 is 1. Typically, when the values of f1 and f2 are smaller, overall hardware implementation may be simpler, complexity is lower, and power consumption is lower. For ease of hardware implementation, the second constraint is considered. In other words, m is an integer multiple of 32, so that the ratio of the input bit length m to the output bit length in the first sub-processing is f:128, where the integer f = m/32.

In Embodiment 4, it is considered that the overhead of the DSP framing in the second data processing is *h*_{DSP} = 56, each DSP frame (also referred to as a super-frame or a multi-frame) includes 175104 dual-polarization symbols, where 172032 dual-polarization symbols (that is, pre-framing symbols) in each DSP frame are obtained by performing the symbol mapping and the polarization distribution on the fourth bit data. In this case, the corresponding bit rate obtained through the second data processing is W₂₋₅₆ = W₁ × (1 + *h*_{DSP}) = W₀ × (r × q + d_{CP})/(r × q) × (4096/m) × (57/56), and the corresponding baud rate (that is, the symbol rate) is W_{*s*-56} = W₂₋₅₆/8 = W₀ × (r × q + d_{CP})/(r × q) × (4096/m) × (57/56)/8 GBaud.

The following Table 8 provides a corresponding parameter combination {r, m, d_{CP}, d_{PAD}, f, p, W₁, W₂₋₅₆, W_{*s*-56}}. It should be noted that Table 8 further provides a specific value of a corresponding parameter r₁ when the quantity r of rows is not an integer multiple of 20. When the quantity r of rows is an integer multiple of 20, for example, as shown by r=480 in the row 28 in Table 8, a corresponding parameter r₁ is represented by a slash in the table, indicating that the parameter r₁ does not exist.

**Table 8**

| Sequence number | r | m | d_{CP} | d_{PAD} | f | p | v/16 | r₁ | W₁ (Gbit/s) | W₂₋₅₆ (Gbit/s) | W_{*s*-56} (GBaud) |
|---|---|---|---|---|---|---|---|---|---|---|---|
| 1 | 574 | 3520 | 2576 | 1648 | 110 | 29 | 126 | 14 | 469.374023789 | 477.755702785 | 59.719462848 |
| 2 | 569 | 3488 | 2104 | 1176 | 109 | 29 | 124 | 9 | 473.498575844 | 481.953907555 | 60.244238444 |
| 3 | 564 | 3456 | 1632 | 704 | 108 | 29 | 122 | 4 | 477.696258254 | 486.226548579 | 60.778318572 |
| 4 | 563 | 3456 | 3688 | 2760 | 108 | 29 | 122 | 3 | 478.544741838 | 487.090183657 | 60.886272957 |
| 5 | 559 | 3424 | 1160 | 264 | 107 | 28 | 120 | 19 | 481.969033372 | 490.575623254 | 61.321952907 |
| 6 | 558 | 3424 | 3216 | 2320 | 107 | 28 | 120 | 18 | 482.832777159 | 491.454791037 | 61.431848880 |
| 7 | 553 | 3392 | 2744 | 1848 | 106 | 28 | 118 | 13 | 487.198353806 | 495.898324410 | 61.987290551 |
| 8 | 543 | 3328 | 1800 | 904 | 104 | 28 | 114 | 3 | 496.170699180 | 505.030890237 | 63.128861280 |
| 9 | 542 | 3328 | 3856 | 2960 | 104 | 28 | 114 | 2 | 497.086143275 | 505.962681548 | 63.245335193 |
| 10 | 538 | 3296 | 1328 | 464 | 103 | 27 | 112 | 18 | 500.781951032 | 509.724485871 | 63.715560734 |
| 11 | 537 | 3296 | 3384 | 2520 | 103 | 27 | 112 | 17 | 501.714505875 | 510.673693480 | 63.834211685 |
| 12 | 532 | 3264 | 2912 | 2048 | 102 | 27 | 110 | 12 | 506.429867773 | 515.473258268 | 64.434157284 |
| 13 | 527 | 3232 | 2440 | 1576 | 101 | 27 | 108 | 7 | 511.234705228 | 520.363896392 | 65.045487049 |
| 14 | 521 | 3200 | 4024 | 3160 | 100 | 27 | 106 | 1 | 517.122245019 | 526.356570823 | 65.794571353 |
| 15 | 517 | 3168 | 1496 | 664 | 99 | 26 | 104 | 17 | 521.123190822 | 530.428962087 | 66.303620261 |
| 16 | 516 | 3168 | 3552 | 2720 | 99 | 26 | 104 | 16 | 522.133119486 | 531.456925191 | 66.432115649 |
| 17 | 512 | 3136 | 1024 | 192 | 98 | 26 | 102 | 12 | 526.212284482 | 535.608932420 | 66.951116552 |
| 18 | 511 | 3136 | 3080 | 2248 | 98 | 26 | 102 | 11 | 527.242054119 | 536.657090800 | 67.082136350 |
| 19 | 501 | 3072 | 2136 | 1304 | 96 | 26 | 98 | 1 | 537.765847615 | 547.368809179 | 68.421101147 |
| 20 | 496 | 3040 | 1664 | 864 | 95 | 25 | 96 | 16 | 543.186874304 | 552.886639917 | 69.110829990 |
| 21 | 495 | 3040 | 3720 | 2920 | 95 | 25 | 96 | 15 | 544.284221525 | 554.003582624 | 69.250447828 |
| 22 | 491 | 3008 | 1192 | 392 | 94 | 25 | 94 | 11 | 548.718308870 | 558.516850099 | 69.814606262 |
| 23 | 490 | 3008 | 3248 | 2448 | 94 | 25 | 94 | 10 | 549.838142153 | 559.656680406 | 69.957085051 |
| 24 | 485 | 2976 | 2776 | 1976 | 93 | 25 | 92 | 5 | 555.506576608 | 565.426336905 | 70.678292113 |
| 25 | 480 | 2944 | 2304 | 1536 | 92 | 24 | 90 | | 561.293103448 | 571.316194581 | 71.414524323 |
| 26 | 475 | 2912 | 1832 | 1064 | 91 | 24 | 88 | 15 | 567.201451905 | 577.330049261 | 72.166256158 |
| 27 | 474 | 2912 | 3888 | 3120 | 91 | 24 | 88 | 14 | 568.398079441 | 578.548045145 | 72.318505643 |
| 28 | 470 | 2880 | 1360 | 592 | 90 | 24 | 86 | 10 | 573.235509904 | 583.471858295 | 72.933982287 |
| 29 | 469 | 2880 | 3416 | 2648 | 90 | 24 | 86 | 9 | 574.457760458 | 584.715934752 | 73.089491844 |
| 30 | 465 | 2848 | 888 | 120 | 89 | 24 | 84 | 5 | 579.399332591 | 589.745749245 | 73.718218656 |
| 31 | 464 | 2848 | 2944 | 2176 | 89 | 24 | 84 | 4 | 580.648038050 | 591.016753015 | 73.877094127 |
| 32 | 459 | 2816 | 2472 | 1736 | 88 | 23 | 82 | 19 | 586.973180076 | 597.454844006 | 74.681855501 |
| 33 | 454 | 2784 | 2000 | 1264 | 87 | 23 | 80 | 14 | 593.437642412 | 604.034743169 | 75.504342896 |
| 34 | 453 | 2784 | 4056 | 3320 | 87 | 23 | 80 | 13 | 594.747659283 | 605.368153198 | 75.671019150 |
| 35 | 449 | 2752 | 1528 | 792 | 86 | 23 | 78 | 9 | 600.046079410 | 610.761187971 | 76.345148496 |
| 36 | 448 | 2752 | 3584 | 2848 | 86 | 23 | 78 | 8 | 601.385467980 | 612.124494194 | 76.515561774 |
| 37 | 444 | 2720 | 1056 | 320 | 85 | 23 | 76 | 4 | 606.803355079 | 617.639129277 | 77.204891160 |
| 38 | 443 | 2720 | 3112 | 2376 | 85 | 23 | 76 | 3 | 608.173114345 | 619.033348530 | 77.379168566 |
| 39 | 438 | 2688 | 2640 | 1936 | 84 | 22 | 74 | 18 | 615.115729806 | 626.099939267 | 78.262492408 |
| 40 | 433 | 2656 | 2168 | 1464 | 83 | 22 | 72 | 13 | 622.218682806 | 633.329730713 | 79.166216339 |
| 41 | 428 | 2624 | 1696 | 992 | 82 | 22 | 70 | 8 | 629.487592652 | 640.728442521 | 80.091055315 |
| 42 | 427 | 2624 | 3752 | 3048 | 82 | 22 | 70 | 7 | 630.961802471 | 642.228977515 | 80.278622189 |
| 43 | 423 | 2592 | 1224 | 520 | 81 | 22 | 68 | 3 | 636.928344338 | 648.302064773 | 81.037758097 |
| 44 | 422 | 2592 | 3280 | 2576 | 81 | 22 | 68 | 2 | 638.437653211 | 649.838325590 | 81.229790699 |
| 45 | 418 | 2560 | 752 | 80 | 80 | 21 | 66 | 18 | 644.547104438 | 656.056874160 | 82.007109270 |
| 46 | 417 | 2560 | 2808 | 2136 | 80 | 21 | 66 | 17 | 646.092780947 | 657.630152036 | 82.203769004 |
| 47 | 412 | 2528 | 2336 | 1664 | 79 | 21 | 64 | 12 | 653.933712755 | 665.611100483 | 83.201387560 |
| 48 | 407 | 2496 | 1864 | 1192 | 78 | 21 | 62 | 7 | 661.967296450 | 673.788141029 | 84.223517629 |
| 49 | 406 | 2496 | 3920 | 3248 | 78 | 21 | 62 | 6 | 663.597757771 | 675.447717731 | 84.430964716 |
| 50 | 402 | 2464 | 1392 | 720 | 77 | 21 | 60 | 2 | 670.200720535 | 682.168590544 | 85.271073818 |
| 51 | 401 | 2464 | 3448 | 2776 | 77 | 21 | 60 | 1 | 671.872044027 | 683.869759099 | 85.483719887 |
| 52 | 397 | 2432 | 920 | 280 | 76 | 20 | 58 | 17 | 678.641535655 | 690.760134506 | 86.345016813 |
| 53 | 396 | 2432 | 2976 | 2336 | 76 | 20 | 58 | 16 | 680.355276907 | 692.504478280 | 86.563059785 |
| 54 | 391 | 2400 | 2504 | 1864 | 75 | 20 | 56 | 11 | 689.055472263 | 701.360034268 | 87.670004284 |
| 55 | 386 | 2368 | 2032 | 1392 | 74 | 20 | 54 | 6 | 697.981061282 | 710.445008805 | 88.805626101 |
| 56 | 385 | 2368 | 4088 | 3448 | 74 | 20 | 54 | 5 | 699.793999104 | 712.290320516 | 89.036290065 |
| 57 | 381 | 2336 | 1560 | 920 | 73 | 20 | 52 | 1 | 707.140917730 | 719.768434118 | 89.971054265 |
| 58 | 380 | 2336 | 3616 | 3008 | 73 | 19 | 52 | | 709.001814882 | 721.662561576 | 90.207820197 |
| 59 | 376 | 2304 | 1088 | 480 | 72 | 19 | 50 | 16 | 716.544387380 | 729.339822869 | 91.167477859 |
| 60 | 375 | 2304 | 3144 | 2536 | 72 | 19 | 50 | 15 | 718.455172413 | 731.284729064 | 91.410591133 |
| 61 | 371 | 2272 | 616 | 8 | 71 | 19 | 48 | 11 | 726.201319825 | 739.169200536 | 92.396150067 |
| 62 | 370 | 2272 | 2672 | 2064 | 71 | 19 | 48 | 10 | 728.164026095 | 741.166955132 | 92.645869391 |
| 63 | 365 | 2240 | 2200 | 1592 | 70 | 19 | 46 | 5 | 738.138875767 | 751.319927120 | 93.914990890 |
| 64 | 360 | 2208 | 1728 | 1152 | 69 | 18 | 44 | | 748.390804597 | 761.754926108 | 95.219365763 |
| 65 | 359 | 2208 | 3784 | 3208 | 69 | 18 | 44 | 19 | 750.475458649 | 763.876806125 | 95.484600766 |
| 66 | 355 | 2176 | 1256 | 680 | 68 | 18 | 42 | 15 | 758.931520155 | 772.483868729 | 96.560483591 |
| 67 | 354 | 2176 | 3312 | 2736 | 68 | 18 | 42 | 14 | 761.075394506 | 774.666026550 | 96.833253319 |
| 68 | 350 | 2144 | 784 | 208 | 67 | 18 | 40 | 10 | 769.773399014 | 783.519352568 | 97.939919071 |

It should be noted that v = m - 1504 is an integer multiple of 16. In some specific implementations, it is considered that n₀ = 128, and k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It can be learned that, for the parameter combination provided in Embodiment 4, when the input data (that is, the first bit data) for the first data processing is considered as the FlexO-4e or 400G ZR frame data, the corresponding baud rate is less than 100 GBaud. In this case, in corresponding specific optical communication network transmission, a channel spacing that may be used is not greater than 112.5 GHz. It may be understood that the proposed data processing solution may be well compatible with existing 400G data centers and metropolitan area networks. In addition, after the first data processing and the second data processing are performed on the first bit data that includes a total of dᵢₙ = q × r bits, a DSP frame (also referred to as a super-frame or a multi-frame) is exactly obtained, so that the proposed data processing method has low implementation complexity and lower power consumption. Further, in Embodiment 2, the cyclic redundancy check CRC-32 operation included in the first data processing adopts a CRC-32 operation in the existing 800G-ZR, which is easy to implement. In addition, m is an integer multiple of 32, so that the ratio of the input bit length m to the output bit length in the first sub-processing is f:128, where the integer f = m/32. In this way, hardware implementation is simpler.

It should be noted that, in a same parameter combination {r, m, d_{CP}, d_{PAD}, f, p, W₁}, because an overhead *h*_{DSP} = 1/56 that is of the DSP framing and used in Embodiment 4 is less than the overhead of the framing in Embodiment 2, the bit rate W₂₋₅₆ obtained through the second data processing and the corresponding baud rate W_{*s*-56} are respectively less than the bit rate W₂₋₂₈ and the corresponding baud rate W_{*s*-28} in Embodiment 2.

Some parameter combinations in Table 8 are used as an example. For example, for a parameter combination in the row 20 in Table 8, namely, {r=496, m=3040, d_{CP} = 1664, d_{PAD} = 864, f = 95, p=25, r₁ = 16, W₁ = 543.186874304 (Gbit/s), W₂₋₅₆ = 552.886639917 (Gbit/ s) , W_{*s-*56} = 69.110829990 (GBaud) }, in corresponding specific optical communication network transmission, a channel spacing that may be used is 75 GHz. The proposed data processing solution may be well compatible with existing 400G data centers and metropolitan area networks, for example, an OpenZR+, 400ZR, or 400ZR+ transport network using 75 GHz grid spacings (grid spacings).

Further, for example, for a parameter combination in the row 50 in Table 8, namely, {r=402, m=2464, d_{CP} = 1392 , d_{PAD} = 720, f = 77 , p=21, r₁ = 2 , W₁ = 670.200720535 (Gbit/s) , W₂₋₅₆ = 682.168590544 (Gbit/s) , W_{*s-*56} = 85.271073818 (GBaud) }, in corresponding specific optical communication network transmission, a channel spacing that may be used is 100 GHz. The proposed data processing solution may be well compatible with existing 400G data centers and metropolitan area networks, for example, an OpenZR+, 400ZR, or 400ZR+ transport network using 100 GHz grid spacings (grid spacings).

For another example, for a parameter combination in the row 66 in Table 8, namely, {r=355, m=2176, d_{CP} = 1256 , d_{PAD} = 680, f = 68 , p=18, r₁ = 15 , W₁ = 758.931520155 (Gbit/s) , W₂₋₅₆ = 772.483868729 (Gbit/s) , W_{*s-*56} = 96.560483591 (GBaud) }, in corresponding specific optical communication network transmission, a channel spacing that may be used is 112.5 GHz. The proposed data processing solution may be well compatible with existing 400G data centers and metropolitan area networks, for example, a high-performance metropolitan transport network using 112.5 GHz grid spacings (grid spacings).

The foregoing first aspect considers the case in which q = 2056, and the following second aspect considers the case in which q = 10280.

The bit quantity of the third bit data is d_{scr} = q × r + d_{CP} = L × m = 336 × m. It should be understood that a larger quantity d_{CP} of bits of added CRC check bits and/or padding bits indicates a greater introduced overhead OH_{CP} = d_{CP}/(q × r). For transmission effectiveness, herein, considering that 0 ≤ d_{CP} < q/2 = 5140, transmission performance can be ensured and an overhead can be low. The following Table 9 shows a corresponding parameter combination {dᵢₙ, r, m, d_{CP}}.

**Table 9**

| Sequence number | dᵢₙ | r | m | d_{CP} | v/16 |
|---|---|---|---|---|---|
| 1 | 236440 | 115 | 3520 | 520 | 126 |
| 2 | 234384 | 114 | 3488 | 48 | 124 |
| 3 | 232328 | 113 | 3472 | 4952 | 123 |
| 4 | 230272 | 112 | 3440 | 4480 | 121 |
| 5 | 228216 | 111 | 3408 | 4008 | 119 |
| 6 | 226160 | 110 | 3376 | 3536 | 117 |
| 7 | 224104 | 109 | 3344 | 3064 | 115 |
| 8 | 222048 | 108 | 3312 | 2592 | 113 |
| 9 | 219992 | 107 | 3280 | 2120 | 111 |
| 10 | 217936 | 106 | 3248 | 1648 | 109 |
| 11 | 215880 | 105 | 3216 | 1176 | 107 |
| 12 | 213824 | 104 | 3184 | 704 | 105 |
| 13 | 211768 | 103 | 3152 | 232 | 103 |
| 14 | 209712 | 102 | 3136 | 5136 | 102 |
| 15 | 207656 | 101 | 3104 | 4664 | 100 |
| 16 | 205600 | 100 | 3072 | 4192 | 98 |
| 17 | 203544 | 99 | 3040 | 3720 | 96 |
| 18 | 201488 | 98 | 3008 | 3248 | 94 |
| 19 | 199432 | 97 | 2976 | 2776 | 92 |
| 20 | 197376 | 96 | 2944 | 2304 | 90 |
| 21 | 195320 | 95 | 2912 | 1832 | 88 |
| 22 | 193264 | 94 | 2880 | 1360 | 86 |
| 23 | 191208 | 93 | 2848 | 888 | 84 |
| 24 | 189152 | 92 | 2816 | 416 | 82 |
| 25 | 185040 | 90 | 2768 | 4848 | 79 |
| 26 | 182984 | 89 | 2736 | 4376 | 77 |
| 27 | 180928 | 88 | 2704 | 3904 | 75 |
| 28 | 178872 | 87 | 2672 | 3432 | 73 |
| 29 | 176816 | 86 | 2640 | 2960 | 71 |
| 30 | 174760 | 85 | 2608 | 2488 | 69 |
| 31 | 172704 | 84 | 2576 | 2016 | 67 |
| 32 | 170648 | 83 | 2544 | 1544 | 65 |
| 33 | 168592 | 82 | 2512 | 1072 | 63 |
| 34 | 166536 | 81 | 2480 | 600 | 61 |
| 35 | 164480 | 80 | 2448 | 128 | 59 |
| 36 | 162424 | 79 | 2432 | 5032 | 58 |
| 37 | 160368 | 78 | 2400 | 4560 | 56 |
| 38 | 158312 | 77 | 2368 | 4088 | 54 |
| 39 | 156256 | 76 | 2336 | 3616 | 52 |
| 40 | 154200 | 75 | 2304 | 3144 | 50 |
| 41 | 152144 | 74 | 2272 | 2672 | 48 |
| 42 | 150088 | 73 | 2240 | 2200 | 46 |
| 43 | 148032 | 72 | 2208 | 1728 | 44 |
| 44 | 145976 | 71 | 2176 | 1256 | 42 |
| 45 | 143920 | 70 | 2144 | 784 | 40 |

Table 9 further provides a specific value of v/16 corresponding to the parameter combination {dᵢₙ, r, m, d_{CP}}. It should be noted that, v = m - 1504 is an integer multiple of 16. When n₀ = 128, k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It should be noted that, in some specific applications, the first data processing includes the cyclic redundancy check CRC-32 operation. In this case, the following third constraint is considered: When the quantity r of rows is an integer multiple of 4, there are p = r/4 times of CRC-32 operations, and d_{CRC} = r/4 × 32 ≤ d_{CP}. In other words, the CRC-32 operations are performed on a total of 4× 10280=41120 bits in every 4 rows of the r rows of data. When the quantity r of rows is not an integer multiple of 4, there are $p = \left⌊r/4\right⌋ + 1$ times of CRC-32 operations, and ${d}_{CRC} = \left(\left⌊r/4\right⌋+1\right) \times 32 \leq {d}_{CP}$, where an operation $\left⌊a\right⌋$ indicates performing a floor operation on a. In other words, r₀ = 4, r₁ = r - 4 × (p - 1), CRC-32 is performed on a total of q × r₀ = 41120 bits in every r₀ = 4 rows in first 4 × (p - 1) rows of the r rows of data, and a CRC-32 operation is performed once on a total of q × r₁ bits in last r₁ rows. It is considered that d_{PAD} = d_{CP} - d_{CRC}. With reference to Table 9 and the third constraint, the following Table 10 provides a corresponding parameter combination {r, m, d_{CP}, d_{PAD}, p}. It should be noted that the last column in Table 10 further provides a specific value of a corresponding parameter r₁ when the quantity r of rows is not an integer multiple of 4. When the quantity r of rows is an integer multiple of 4, for example, as shown by r=112 in the row 2 in Table 10, a corresponding parameter r₁ is represented by a slash in the table, indicating that the parameter r₁ does not exist.

**Table 10**

| Sequence number | r | m | d_{CP} | d_{PAD} | p | v/16 | r₁ |
|---|---|---|---|---|---|---|---|
| 1 | 113 | 3472 | 4952 | 4024 | 29 | 123 | 1 |
| 2 | 112 | 3440 | 4480 | 3584 | 28 | 121 | |
| 3 | 111 | 3408 | 4008 | 3112 | 28 | 119 | 3 |
| 4 | 110 | 3376 | 3536 | 2640 | 28 | 117 | 2 |
| 5 | 109 | 3344 | 3064 | 2168 | 28 | 115 | 1 |
| 6 | 108 | 3312 | 2592 | 1728 | 27 | 113 | |
| 7 | 107 | 3280 | 2120 | 1256 | 27 | 111 | 3 |
| 8 | 106 | 3248 | 1648 | 784 | 27 | 109 | 2 |
| 9 | 105 | 3216 | 1176 | 312 | 27 | 107 | 1 |
| 10 | 102 | 3136 | 5136 | 4304 | 26 | 102 | 2 |
| 11 | 101 | 3104 | 4664 | 3832 | 26 | 100 | 1 |
| 12 | 100 | 3072 | 4192 | 3392 | 25 | 98 | |
| 13 | 99 | 3040 | 3720 | 2920 | 25 | 96 | 3 |
| 14 | 98 | 3008 | 3248 | 2448 | 25 | 94 | 2 |
| 15 | 97 | 2976 | 2776 | 1976 | 25 | 92 | 1 |
| 16 | 96 | 2944 | 2304 | 1536 | 24 | 90 | |
| 17 | 95 | 2912 | 1832 | 1064 | 24 | 88 | 3 |
| 18 | 94 | 2880 | 1360 | 592 | 24 | 86 | 2 |
| 19 | 93 | 2848 | 888 | 120 | 24 | 84 | 1 |
| 20 | 90 | 2768 | 4848 | 4112 | 23 | 79 | 2 |
| 21 | 89 | 2736 | 4376 | 3640 | 23 | 77 | 1 |
| 22 | 88 | 2704 | 3904 | 3200 | 22 | 75 | |
| 23 | 87 | 2672 | 3432 | 2728 | 22 | 73 | 3 |
| 24 | 86 | 2640 | 2960 | 2256 | 22 | 71 | 2 |
| 25 | 85 | 2608 | 2488 | 1784 | 22 | 69 | 1 |
| 26 | 84 | 2576 | 2016 | 1344 | 21 | 67 | |
| 27 | 83 | 2544 | 1544 | 872 | 21 | 65 | 3 |
| 28 | 82 | 2512 | 1072 | 400 | 21 | 63 | 2 |
| 29 | 79 | 2432 | 5032 | 4392 | 20 | 58 | 3 |
| 30 | 78 | 2400 | 4560 | 3920 | 20 | 56 | 2 |
| 31 | 77 | 2368 | 4088 | 3448 | 20 | 54 | 1 |
| 32 | 76 | 2336 | 3616 | 3008 | 19 | 52 | |
| 33 | 75 | 2304 | 3144 | 2536 | 19 | 50 | 3 |
| 34 | 74 | 2272 | 2672 | 2064 | 19 | 48 | 2 |
| 35 | 73 | 2240 | 2200 | 1592 | 19 | 46 | 1 |
| 36 | 72 | 2208 | 1728 | 1152 | 18 | 44 | |
| 37 | 71 | 2176 | 1256 | 680 | 18 | 42 | 3 |
| 38 | 70 | 2144 | 784 | 208 | 18 | 40 | 2 |

It should be noted that, in some other specific applications, it is considered that the first sub-processing including the PCS, the interleaving, and the encoding is performed on the first bit set including m bits to obtain the second bit set including 4096 bits, where the ratio of the encoding input bit length to the encoding output bit length in the encoding operation is 111: 128. For ease of hardware implementation, the following fourth constraint is considered. In other words, m is an integer multiple of 32, so that the ratio of the input bit length m to the output bit length in the first sub-processing is f:128, where the integer f = m/32. With reference to Table 9 and the fourth constraint, the following Table 11 provides a corresponding parameter combination {r, m, d_{CP}, f}.

**Table 11**

| Sequence number | r | m | d_{CP} | f | v/16 |
|---|---|---|---|---|---|
| 1 | 115 | 3520 | 520 | 110 | 126 |
| 2 | 114 | 3488 | 48 | 109 | 124 |
| 3 | 102 | 3136 | 5136 | 98 | 102 |
| 4 | 101 | 3104 | 4664 | 97 | 100 |
| 5 | 100 | 3072 | 4192 | 96 | 98 |
| 6 | 99 | 3040 | 3720 | 95 | 96 |
| 7 | 98 | 3008 | 3248 | 94 | 94 |
| 8 | 97 | 2976 | 2776 | 93 | 92 |
| 9 | 96 | 2944 | 2304 | 92 | 90 |
| 10 | 95 | 2912 | 1832 | 91 | 88 |
| 11 | 94 | 2880 | 1360 | 90 | 86 |
| 12 | 93 | 2848 | 888 | 89 | 84 |
| 13 | 92 | 2816 | 416 | 88 | 82 |
| 14 | 79 | 2432 | 5032 | 76 | 58 |
| 15 | 78 | 2400 | 4560 | 75 | 56 |
| 16 | 77 | 2368 | 4088 | 74 | 54 |
| 17 | 76 | 2336 | 3616 | 73 | 52 |
| 18 | 75 | 2304 | 3144 | 72 | 50 |
| 19 | 74 | 2272 | 2672 | 71 | 48 |
| 20 | 73 | 2240 | 2200 | 70 | 46 |
| 21 | 72 | 2208 | 1728 | 69 | 44 |
| 22 | 71 | 2176 | 1256 | 68 | 42 |
| 23 | 70 | 2144 | 784 | 67 | 40 |

Table 11 further provides a specific value of v/16 corresponding to the parameter combination {r, m, d_{CP}, f}. It should be noted that, v = m - 1504 is an integer multiple of 16. When n₀ = 128, k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It should be noted that, in still some other specific applications, the third constraint and the fourth constraint are considered. In this case, with reference to Table 9, the third constraint, and the fourth constraint, the following Table 12 provides a corresponding parameter combination {r, m, d_{CP}, d_{PAD}, f, p}. It should be noted that the last column in Table 12 further provides a specific value of a corresponding parameter r₁ when the quantity r of rows is not an integer multiple of 4. When the quantity r of rows is an integer multiple of 4, for example, as shown by r=100 in the row 2 in Table 12, a corresponding parameter r₁ is represented by a slash in the table, indicating that the parameter r₁ does not exist.

**Table 12**

| Sequence number | r | m | d_{CP} | d_{PAD} | f | p | v/16 | r₁ |
|---|---|---|---|---|---|---|---|---|
| 1 | 102 | 3136 | 5136 | 4304 | 98 | 26 | 102 | 2 |
| 2 | 101 | 3104 | 4664 | 3832 | 97 | 26 | 100 | 1 |
| 3 | 100 | 3072 | 4192 | 3392 | 96 | 25 | 98 | |
| 4 | 99 | 3040 | 3720 | 2920 | 95 | 25 | 96 | 3 |
| 5 | 98 | 3008 | 3248 | 2448 | 94 | 25 | 94 | 2 |
| 6 | 97 | 2976 | 2776 | 1976 | 93 | 25 | 92 | 1 |
| 7 | 96 | 2944 | 2304 | 1536 | 92 | 24 | 90 | |
| 8 | 95 | 2912 | 1832 | 1064 | 91 | 24 | 88 | 3 |
| 9 | 94 | 2880 | 1360 | 592 | 90 | 24 | 86 | 2 |
| 10 | 93 | 2848 | 888 | 120 | 89 | 24 | 84 | 1 |
| 11 | 79 | 2432 | 5032 | 4392 | 76 | 20 | 58 | 3 |
| 12 | 78 | 2400 | 4560 | 3920 | 75 | 20 | 56 | 2 |
| 13 | 77 | 2368 | 4088 | 3448 | 74 | 20 | 54 | 1 |
| 14 | 76 | 2336 | 3616 | 3008 | 73 | 19 | 52 | |
| 15 | 75 | 2304 | 3144 | 2536 | 72 | 19 | 50 | 3 |
| 16 | 74 | 2272 | 2672 | 2064 | 71 | 19 | 48 | 2 |
| 17 | 73 | 2240 | 2200 | 1592 | 70 | 19 | 46 | 1 |
| 18 | 72 | 2208 | 1728 | 1152 | 69 | 18 | 44 | |
| 19 | 71 | 2176 | 1256 | 680 | 68 | 18 | 42 | 3 |
| 20 | 70 | 2144 | 784 | 208 | 67 | 18 | 40 | 2 |

Table 12 further provides a specific value of v/16 corresponding to the parameter combination {r, m, d_{CP}, d_{PAD}, f, p}. It should be noted that, v = m - 1504 is an integer multiple of 16. When n₀ = 128, k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits.

It should be noted that, given that a bit rate of the data frame is W₀ Gbit/s, a corresponding bit rate obtained through the first data processing is W₀ × (r × q + d_{CP})/(r × q) Gbit/s, and a corresponding bit rate obtained through the first sub-processing (that is, the PCS, interleaving, and encoding processing) in the second data processing is W₁ = W₀ × (r × q + d_{CP})/(r × q) × (4096/m). Considering that the overhead of the DSP framing in the second data processing is *h*_{DSP}, to be specific, a corresponding bit rate obtained through the second data processing is W₂ = W₁ × (1 + *h*_{DSP}) = W₀ × (r × q + d_{CP})/(r × q) × (4096/m) × (1 + *h*_{DSP}), a corresponding baud rate (that is, a symbol rate) is W*ₛ* = *W*₂/8 = W₀ × (r × q + d_{CP})/(r × q) × (4096/m) × (1 + *h*_{DSP})/8 GBaud. Typically, the overhead *h*_{DSP} of the DSP framing is considered as 1/28 or 1/56. It can be learned that, for the parameter combinations provided in Tables 1 to 4, when considering that input data (that is, the first bit data) for the first data processing is FlexO-4e or 400G ZR frame data, a corresponding baud rate is less than 100 GBaud. It may be understood that the proposed data processing solution may be well compatible with existing 400G data centers and metropolitan area networks.

The following provides several specific embodiments with reference to the foregoing descriptions of the first data processing and the second data processing.

### Embodiment 5

It is considered that the input data (that is, the first bit data) for the first data processing is the FlexO-4e or 400G ZR frame data, and a nominal bit rate (nominal bit rate) of the FlexO-4e or 400G ZR frame data is W₀ ≈ 402.489753310 Gbit/s. It should be noted that, in this embodiment of this application, only nine digits after the decimal point are retained for a non-integer. In some specific applications, the non-integer may be described in another form, for example, two digits after the decimal point are retained. A description manner thereof may be known by a person of ordinary skill in the art. Details are not described herein. The first bit data includes a total of dᵢₙ = q × r bits in r rows and q = 10280 columns. The corresponding bit rate obtained through the first data processing is W₀ × (r × q + d_{CP})/(r × q) Gbit/s, and the corresponding bit rate obtained through the first sub-processing (that is, the PCS, interleaving, and encoding processing) in the second data processing is W₁ = W₀ × (r × q + d_{CP})/(r × q) × (4096/m).

In some specific applications, it is considered that the overhead of the DSP framing in the second data processing is *h*_{DSP} = 1/28, each DSP frame (also referred to as a super-frame or a multi-frame) includes 178176 dual-polarization symbols, where 172032 dual-polarization symbols (that is, pre-framing symbols) in each DSP frame are obtained by performing the symbol mapping and the polarization distribution on the fourth bit data. In this case, the corresponding bit rate obtained through the second data processing is W₂₋₂₈ = W₁ × (1 + *h*_{DSP}) = W₀ × (r × q + d_{CP})/(r × q) × (4096/m) × (29/28), and the corresponding baud rate (that is, the symbol rate) is W_{*s*-28} = W₂₋₂₈/8 = W₀ × (r × q + d_{CP})/(r × q) × (4096/m) × (29/28)/8 GBaud.

The following Table 13 provides a corresponding parameter combination {dᵢₙ, r, m, d_{CP}, v/16, W₁, W₂₋₂₈, W_{*s*-28}}.

**Table 13**

| Sequence number | dᵢₙ | r | m | d_{CP} | v/16 | W₁ (Gbit/s) | W₂₋₂₈ (Gbit/s) | W_{*s*-28} (GBaud) |
|---|---|---|---|---|---|---|---|---|
| 1 | 236440 | 115 | 3520 | 520 | 126 | 468.557721139 | 485.291925465 | 60.661490683 |
| 2 | 234384 | 114 | 3488 | 48 | 124 | 472.667876588 | 489.548872180 | 61.193609023 |
| 3 | 232328 | 113 | 3472 | 4952 | 123 | 476.850778150 | 493.881163084 | 61.735145386 |
| 4 | 230272 | 112 | 3440 | 4480 | 121 | 481.108374384 | 498.290816326 | 62.286352041 |
| 5 | 228216 | 111 | 3408 | 4008 | 119 | 485.442684063 | 502.779922780 | 62.847490347 |
| 6 | 226160 | 110 | 3376 | 3536 | 117 | 489.855799373 | 507.350649350 | 63.418831169 |
| 7 | 224104 | 109 | 3344 | 3064 | 115 | 494.349889275 | 512.005242464 | 64.000655308 |
| 8 | 222048 | 108 | 3312 | 2592 | 113 | 498.927203065 | 516.746031746 | 64.593253968 |
| 9 | 219992 | 107 | 3280 | 2120 | 111 | 503.590074121 | 521.575433911 | 65.196929239 |
| 10 | 217936 | 106 | 3248 | 1648 | 109 | 508.340923877 | 526.495956873 | 65.811994609 |
| 11 | 215880 | 105 | 3216 | 1176 | 107 | 513.182266009 | 531.510204081 | 66.438775510 |
| 12 | 213824 | 104 | 3184 | 704 | 105 | 518.116710875 | 536.620879120 | 67.077609890 |
| 13 | 211768 | 103 | 3152 | 232 | 103 | 523.146970204 | 541.830790568 | 67.728848821 |
| 14 | 209712 | 102 | 3136 | 5136 | 102 | 528.275862069 | 547.142857142 | 68.392857143 |
| 15 | 207656 | 101 | 3104 | 4664 | 100 | 533.506316148 | 552.560113154 | 69.070014144 |
| 16 | 205600 | 100 | 3072 | 4192 | 98 | 538.841379310 | 558.085714285 | 69.760714286 |
| 17 | 203544 | 99 | 3040 | 3720 | 96 | 544.284221525 | 563.722943723 | 70.465367965 |
| 18 | 201488 | 98 | 3008 | 3248 | 94 | 549.838142153 | 569.475218658 | 71.184402332 |
| 19 | 199432 | 97 | 2976 | 2776 | 92 | 555.506576608 | 575.346097201 | 71.918262150 |
| 20 | 197376 | 96 | 2944 | 2304 | 90 | 561.293103448 | 581.339285714 | 72.667410714 |
| 21 | 195320 | 95 | 2912 | 1832 | 88 | 567.201451905 | 587.458646616 | 73.432330827 |
| 22 | 193264 | 94 | 2880 | 1360 | 86 | 573.235509904 | 593.708206686 | 74.213525836 |
| 23 | 191208 | 93 | 2848 | 888 | 84 | 579.399332591 | 600.092165898 | 75.011520737 |
| 24 | 189152 | 92 | 2816 | 416 | 82 | 585.697151424 | 606.614906832 | 75.826863354 |
| 25 | 185040 | 90 | 2768 | 4848 | 79 | 598.712643678 | 620.095238095 | 77.511904762 |
| 26 | 182984 | 89 | 2736 | 4376 | 77 | 605.439752034 | 627.062600321 | 78.382825040 |
| 27 | 180928 | 88 | 2704 | 3904 | 75 | 612.319749216 | 634.188311688 | 79.273538961 |
| 28 | 178872 | 87 | 2672 | 3432 | 73 | 619.357907253 | 641.477832512 | 80.184729064 |
| 29 | 176816 | 86 | 2640 | 2960 | 71 | 626.559743384 | 648.936877076 | 81.117109634 |
| 30 | 174760 | 85 | 2608 | 2488 | 69 | 633.931034482 | 656.571428571 | 82.071428571 |
| 31 | 172704 | 84 | 2576 | 2016 | 67 | 641.477832512 | 664.387755102 | 83.048469388 |
| 32 | 170648 | 83 | 2544 | 1544 | 65 | 649.206481096 | 672.392426850 | 84.049053356 |
| 33 | 168592 | 82 | 2512 | 1072 | 63 | 657.123633305 | 680.592334494 | 85.074041812 |
| 34 | 166536 | 81 | 2480 | 600 | 61 | 665.236270753 | 688.994708994 | 86.124338624 |
| 35 | 164480 | 80 | 2448 | 128 | 59 | 673.551724137 | 697.607142857 | 87.200892857 |
| 36 | 162424 | 79 | 2432 | 5032 | 58 | 682.077695329 | 706.437613019 | 88.304701627 |
| 37 | 160368 | 78 | 2400 | 4560 | 56 | 690.822281167 | 715.494505494 | 89.436813187 |
| 38 | 158312 | 77 | 2368 | 4088 | 54 | 699.793999104 | 724.786641929 | 90.598330241 |
| 39 | 156256 | 76 | 2336 | 3616 | 52 | 709.001814882 | 734.323308270 | 91.790413534 |
| 40 | 154200 | 75 | 2304 | 3144 | 50 | 718.455172413 | 744.114285714 | 93.014285714 |
| 41 | 152144 | 74 | 2272 | 2672 | 48 | 728.164026095 | 754.169884169 | 94.271235521 |
| 42 | 150088 | 73 | 2240 | 2200 | 46 | 738.138875767 | 764.500978473 | 95.562622309 |
| 43 | 148032 | 72 | 2208 | 1728 | 44 | 748.390804597 | 775.119047618 | 96.889880952 |
| 44 | 145976 | 71 | 2176 | 1256 | 42 | 758.931520155 | 786.036217303 | 98.254527163 |
| 45 | 143920 | 70 | 2144 | 784 | 40 | 769.773399014 | 797.265306122 | 99.658163265 |

It should be noted that v = m - 1504 is an integer multiple of 16. In some specific implementations, it is considered that n₀ = 128, and k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It can be learned that, for the parameter combination provided in this embodiment, when the input data (that is, the first bit data) for the first data processing is considered as the FlexO-4e or 400G ZR frame data, the corresponding baud rate is less than 100 GBaud. In this case, in corresponding specific optical communication network transmission, a channel spacing that may be used is not greater than 112.5 GHz. It may be understood that the proposed data processing solution may be well compatible with existing 400G data centers and metropolitan area networks. In addition, after the first data processing and the second data processing are performed on the first bit data that includes a total of dᵢₙ = q × r bits, a DSP frame (also referred to as a super-frame or a multi-frame) is exactly obtained, so that the proposed data processing method has low implementation complexity and lower power consumption.

### Embodiment 6

Based on Embodiment 5, the first constraint and the second constraint are considered.

The first data processing includes the cyclic redundancy check CRC-32 operation. CRC-32 encoding and a corresponding CRC detection operation may directly adopt a CRC-32 operation in the existing 800G-ZR, which is easy to implement. In other words, the third constraint is considered: When the quantity r of rows is an integer multiple of 4, there are p = r/4 times of CRC-32 operations, and d_{CRC} = r/4 × 32 ≤ d_{CP}. In other words, the CRC-32 operations are performed on a total of 41120 bits in every 4 rows of the r rows of data. When the quantity r of rows is not an integer multiple of 4, there are p = [r/4] + 1 times of CRC-32 operations, and ${d}_{CRC} = \left(\left⌊r/4\right⌋+1\right) \times 32 \leq {d}_{CP}$, where an operation $\left⌊a\right⌋$ indicates performing a floor operation on a. In other words, r₀ = 4, r₁ = r - 4 × (p - 1), CRC-32 is performed on a total of q × r₀ = 41120 bits in every r₀ = 4 rows in first 4 × (p - 1) rows of the r rows of data, and a CRC-32 operation is performed once on a total of q × r₁ bits in last r₁ rows. It is considered that d_{PAD} = d_{CP} - d_{CRC}.

It is considered that the first sub-processing including the PCS, the interleaving, and the encoding is performed on the first bit set including m bits to obtain the second bit set including 4096 bits, where the ratio of the encoding input bit length to the encoding output bit length in the encoding operation is 111:128. For ease of hardware implementation, the fourth constraint is considered. In other words, m is an integer multiple of 32, so that the ratio of the input bit length m to the output bit length in the first sub-processing is f:128, where the integer f = m/32.

In Embodiment 12, it is considered that the overhead of the DSP framing in the second data processing is *h*_{DSP} = 1/28, each DSP frame (also referred to as a super-frame or a multi-frame) includes 178176 dual-polarization symbols, where 172032 dual-polarization symbols (that is, pre-framing symbols) in each DSP frame are obtained by performing the symbol mapping and the polarization distribution on the fourth bit data. In this case, the corresponding bit rate obtained through the second data processing is W₂₋₂₈ = W₁ × (1 + *h*_{DSP}) = W₀ × (r × q + d_{CP})/(r × q) × (4096/m) × (29/28), and the corresponding baud rate (that is, the symbol rate) is W_{*s*-28} = W₂₋₂₈/8 = W₀ × (r × q + d_{CP})/(r × q) × (4096/m) × (29/28)/8 GBaud.

The following Table 14 provides a corresponding parameter combination {r, m, d_{CP}, d_{PAD}, f, p, v/16, W₁, W₂₋₂₈, W_{*s*-28}}. It should be noted that Table 14 further provides a specific value of a corresponding parameter r₁ when the quantity r of rows is not an integer multiple of 4. When the quantity r of rows is an integer multiple of 4, for example, as shown by r=100 in the row 3 in Table 14, a corresponding parameter r₁ is represented by a slash in the table, indicating that the parameter r₁ does not exist.

**Table 14**

| Sequence number | r | m | d_{CP} | d_{PAD} | f | p | v/16 | r₁ | W₁ (Gbit/s) | W₂₋₂₈ (Gbit/s) | W_{*s*-28} (GBaud) |
|---|---|---|---|---|---|---|---|---|---|---|---|
| 1 | 102 | 3136 | 5136 | 4304 | 98 | 26 | 102 | 2 | 528.275862069 | 547.142857142 | 68.392857143 |
| 2 | 101 | 3104 | 4664 | 3832 | 97 | 26 | 100 | 1 | 533.506316148 | 552.560113154 | 69.070014144 |
| 3 | 100 | 3072 | 4192 | 3392 | 96 | 25 | 98 | | 538.841379310 | 558.085714285 | 69.760714286 |
| 4 | 99 | 3040 | 3720 | 2920 | 95 | 25 | 96 | 3 | 544.284221525 | 563.722943723 | 70.465367965 |
| 5 | 98 | 3008 | 3248 | 2448 | 94 | 25 | 94 | 2 | 549.838142153 | 569.475218658 | 71.184402332 |
| 6 | 97 | 2976 | 2776 | 1976 | 93 | 25 | 92 | 1 | 555.506576608 | 575.346097201 | 71.918262150 |
| 7 | 96 | 2944 | 2304 | 1536 | 92 | 24 | 90 | | 561.293103448 | 581.339285714 | 72.667410714 |
| 8 | 95 | 2912 | 1832 | 1064 | 91 | 24 | 88 | 3 | 567.201451905 | 587.458646616 | 73.432330827 |
| 9 | 94 | 2880 | 1360 | 592 | 90 | 24 | 86 | 2 | 573.235509904 | 593.708206686 | 74.213525836 |
| 10 | 93 | 2848 | 888 | 120 | 89 | 24 | 84 | 1 | 579.399332591 | 600.092165898 | 75.011520737 |
| 11 | 79 | 2432 | 5032 | 4392 | 76 | 20 | 58 | 3 | 682.077695329 | 706.437613019 | 88.304701627 |
| 12 | 78 | 2400 | 4560 | 3920 | 75 | 20 | 56 | 2 | 690.822281167 | 715.494505494 | 89.436813187 |
| 13 | 77 | 2368 | 4088 | 3448 | 74 | 20 | 54 | 1 | 699.793999104 | 724.786641929 | 90.598330241 |
| 14 | 76 | 2336 | 3616 | 3008 | 73 | 19 | 52 | | 709.001814882 | 734.323308270 | 91.790413534 |
| 15 | 75 | 2304 | 3144 | 2536 | 72 | 19 | 50 | 3 | 718.455172413 | 744.114285714 | 93.014285714 |
| 16 | 74 | 2272 | 2672 | 2064 | 71 | 19 | 48 | 2 | 728.164026095 | 754.169884169 | 94.271235521 |
| 17 | 73 | 2240 | 2200 | 1592 | 70 | 19 | 46 | 1 | 738.138875767 | 764.500978473 | 95.562622309 |
| 18 | 72 | 2208 | 1728 | 1152 | 69 | 18 | 44 | | 748.390804597 | 775.119047618 | 96.889880952 |
| 19 | 71 | 2176 | 1256 | 680 | 68 | 18 | 42 | 3 | 758.931520155 | 786.036217303 | 98.254527163 |
| 20 | 70 | 2144 | 784 | 208 | 67 | 18 | 40 | 2 | 769.773399014 | 797.265306122 | 99.658163265 |

It should be noted that v = m - 1504 is an integer multiple of 16. In some specific implementations, it is considered that n₀ = 128, and k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It can be learned that, for the parameter combination provided in this embodiment, when the input data (that is, the first bit data) for the first data processing is considered as the FlexO-4e or 400G ZR frame data, the corresponding baud rate is less than 100 GBaud. In this case, in corresponding specific optical communication network transmission, a channel spacing that may be used is not greater than 112.5 GHz. It may be understood that the proposed data processing solution may be well compatible with existing 400G data centers and metropolitan area networks. In addition, after the first data processing and the second data processing are performed on the first bit data that includes a total of dᵢₙ = q × r bits, a DSP frame (also referred to as a super-frame or a multi-frame) is exactly obtained, so that the proposed data processing method has low implementation complexity and lower power consumption. Further, in Embodiment 2, the cyclic redundancy check CRC-32 operation included in the first data processing adopts a CRC-32 operation in the existing 800G-ZR, which is easy to implement. In addition, m is an integer multiple of 32, so that the ratio of the input bit length m to the output bit length in the first sub-processing is f:128, where the integer f = m/32. In this way, hardware implementation is simpler.

Some parameter combinations in Table 14 are used as an example. For example, for a parameter combination in the row 2 in Table 14, namely, {r=101, m=3104, d_{CP} = 4664, d_{PAD} = 3832, f = 97, p=26, r₁ = 1, W₁ = 533.506316148 (Gbit/s), W₂₋₂₈ = 552.560113154 (Gbit/ s) , W_{*s*-28} = 69.070014144 (GBaud) }, in corresponding specific optical communication network transmission, a channel spacing that may be used is 75 GHz. The proposed data processing solution may be well compatible with existing 400G data centers and metropolitan area networks, for example, an OpenZR+, 400ZR, or 400ZR+ transport network using 75 GHz grid spacings (grid spacings).

For another example, for a parameter combination in the row 17 in Table 14, namely, {r=73, m=2240, d_{CP} = 2200 , d_{PAD} = 1592, f = 70 , p=19, r₁ = 1 , W₁ = 738.138875767 (Gbit/s) , W₂₋₂₈ = 764.500978473 (Gbit/s) , W_{*s*-28} = 95.562622309 (GBaud) }, in corresponding specific optical communication network transmission, a channel spacing that may be used is 112.5 GHz. The proposed data processing solution may be well compatible with existing 400G data centers and metropolitan area networks, for example, a high-performance metropolitan transport network using 112.5 GHz grid spacings (grid spacings).

### Embodiment 7

Based on Embodiment 5, it is considered that the overhead of the DSP framing in the second data processing is *h*_{DSP} = 1/56, each DSP frame (also referred to as a super-frame or a multi-frame) includes 175104 dual-polarization symbols, where 172032 dual-polarization symbols (that is, pre-framing symbols) in each DSP frame are obtained by performing the symbol mapping and the polarization distribution on the fourth bit data. In this case, the corresponding bit rate obtained through the second data processing is W₂₋₅₆ = W₁ × (1 + *h*_{DSP}) = W₀ × (r × q + d_{CP})/(r × q) × (4096/m) × (57/56), and the corresponding baud rate (that is, the symbol rate) is W_{*s*-56} = *W*₂₋₅₆/8 = W₀ × (r × q + d_{CP})/(r × q) × (4096/m) × (57/56)/8 GBaud.

The following Table 15 provides a corresponding parameter combination {dᵢₙ, r, m, d_{CP}, v/16, W₁, W₂₋₅₆, W_{*s*-56}}.

**Table 15**

| Sequence number | dᵢₙ | r | m | d_{CP} | v/16 | W₁ (Gbit/s) | W₂₋₅₆ (Gbit/s) | W_{*s*-56} (GBaud) |
|---|---|---|---|---|---|---|---|---|
| 1 | 236440 | 115 | 3520 | 520 | 126 | 468.557721139 | 476.924823302 | 59.615602913 |
| 2 | 234384 | 114 | 3488 | 48 | 124 | 472.667876588 | 481.108374384 | 60.138546798 |
| 3 | 232328 | 113 | 3472 | 4952 | 123 | 476.850778150 | 485.365970617 | 60.670746327 |
| 4 | 230272 | 112 | 3440 | 4480 | 121 | 481.108374384 | 489.699595355 | 61.212449419 |
| 5 | 228216 | 111 | 3408 | 4008 | 119 | 485.442684063 | 494.111303421 | 61.763912928 |
| 6 | 226160 | 110 | 3376 | 3536 | 117 | 489.855799373 | 498.603224361 | 62.325403045 |
| 7 | 224104 | 109 | 3344 | 3064 | 115 | 494.349889275 | 503.177565869 | 62.897195734 |
| 8 | 222048 | 108 | 3312 | 2592 | 113 | 498.927203065 | 507.836617405 | 63.479577176 |
| 9 | 219992 | 107 | 3280 | 2120 | 111 | 503.590074121 | 512.582754016 | 64.072844252 |
| 10 | 217936 | 106 | 3248 | 1648 | 109 | 508.340923877 | 517.418440375 | 64.677305047 |
| 11 | 215880 | 105 | 3216 | 1176 | 107 | 513.182266009 | 522.346235045 | 65.293279381 |
| 12 | 213824 | 104 | 3184 | 704 | 105 | 518.116710875 | 527.368794998 | 65.921099375 |
| 13 | 211768 | 103 | 3152 | 232 | 103 | 523.146970204 | 532.488880386 | 66.561110048 |
| 14 | 209712 | 102 | 3136 | 5136 | 102 | 528.275862069 | 537.709359606 | 67.213669951 |
| 15 | 207656 | 101 | 3104 | 4664 | 100 | 533.506316148 | 543.033214651 | 67.879151831 |
| 16 | 205600 | 100 | 3072 | 4192 | 98 | 538.841379310 | 548.463546798 | 68.557943350 |
| 17 | 203544 | 99 | 3040 | 3720 | 96 | 544.284221525 | 554.003582624 | 69.250447828 |
| 18 | 201488 | 98 | 3008 | 3248 | 94 | 549.838142153 | 559.656680406 | 69.957085051 |
| 19 | 199432 | 97 | 2976 | 2776 | 92 | 555.506576608 | 565.426336905 | 70.678292113 |
| 20 | 197376 | 96 | 2944 | 2304 | 90 | 561.293103448 | 571.316194581 | 71.414524323 |
| 21 | 195320 | 95 | 2912 | 1832 | 88 | 567.201451905 | 577.330049261 | 72.166256158 |
| 22 | 193264 | 94 | 2880 | 1360 | 86 | 573.235509904 | 583.471858295 | 72.933982287 |
| 23 | 191208 | 93 | 2848 | 888 | 84 | 579.399332591 | 589.745749245 | 73.718218656 |
| 24 | 189152 | 92 | 2816 | 416 | 82 | 585.697151424 | 596.156029128 | 74.519503641 |
| 25 | 185040 | 90 | 2768 | 4848 | 79 | 598.712643678 | 609.403940886 | 76.175492611 |
| 26 | 182984 | 89 | 2736 | 4376 | 77 | 605.439752034 | 616.251176177 | 77.031397022 |
| 27 | 180928 | 88 | 2704 | 3904 | 75 | 612.319749216 | 623.254030452 | 77.906753806 |
| 28 | 178872 | 87 | 2672 | 3432 | 73 | 619.357907253 | 630.417869882 | 78.802233735 |
| 29 | 176816 | 86 | 2640 | 2960 | 71 | 626.559743384 | 637.748310230 | 79.718538779 |
| 30 | 174760 | 85 | 2608 | 2488 | 69 | 633.931034482 | 645.251231527 | 80.656403941 |
| 31 | 172704 | 84 | 2576 | 2016 | 67 | 641.477832512 | 652.932793807 | 81.616599226 |
| 32 | 170648 | 83 | 2544 | 1544 | 65 | 649.206481096 | 660.799453973 | 82.599931747 |
| 33 | 168592 | 82 | 2512 | 1072 | 63 | 657.123633305 | 668.857983900 | 83.607247987 |
| 34 | 166536 | 81 | 2480 | 600 | 61 | 665.236270753 | 677.115489874 | 84.639436234 |
| 35 | 164480 | 80 | 2448 | 128 | 59 | 673.551724137 | 685.579433497 | 85.697429187 |
| 36 | 162424 | 79 | 2432 | 5032 | 58 | 682.077695329 | 694.257654174 | 86.782206772 |
| 37 | 160368 | 78 | 2400 | 4560 | 56 | 690.822281167 | 703.158393330 | 87.894799166 |
| 38 | 158312 | 77 | 2368 | 4088 | 54 | 699.793999104 | 712.290320516 | 89.036290065 |
| 39 | 156256 | 76 | 2336 | 3616 | 52 | 709.001814882 | 721.662561576 | 90.207820197 |
| 40 | 154200 | 75 | 2304 | 3144 | 50 | 718.455172413 | 731.284729064 | 91.410591133 |
| 41 | 152144 | 74 | 2272 | 2672 | 48 | 728.164026095 | 741.166955132 | 92.645869391 |
| 42 | 150088 | 73 | 2240 | 2200 | 46 | 738.138875767 | 751.319927120 | 93.914990890 |
| 43 | 148032 | 72 | 2208 | 1728 | 44 | 748.390804597 | 761.754926108 | 95.219365763 |
| 44 | 145976 | 71 | 2176 | 1256 | 42 | 758.931520155 | 772.483868729 | 96.560483591 |
| 45 | 143920 | 70 | 2144 | 784 | 40 | 769.773399014 | 783.519352568 | 97.939919071 |

It should be noted that v = m - 1504 is an integer multiple of 16. In some specific implementations, it is considered that n₀ = 128, and k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It can be learned that, for the parameter combination provided in this embodiment, when the input data (that is, the first bit data) for the first data processing is considered as the FlexO-4e or 400G-ZR frame data, the corresponding baud rate is less than 100 GBaud. In this case, in corresponding specific optical communication network transmission, a channel spacing that may be used is not greater than 112.5 GHz. It may be understood that the proposed data processing solution may be well compatible with existing 400G data centers and metropolitan area networks. In addition, after the first data processing and the second data processing are performed on the first bit data that includes a total of dᵢₙ = q × r bits, a DSP frame (also referred to as a super-frame or a multi-frame) is exactly obtained, so that the proposed data processing method has low implementation complexity and lower power consumption.

### Embodiment 8

Based on Embodiment 7, the first constraint and the second constraint are considered.

The first data processing includes the cyclic redundancy check CRC-32 operation. CRC-32 encoding and a corresponding CRC detection operation may directly adopt a CRC-32 operation in the existing 800G-ZR, which is easy to implement. In other words, the first constraint is considered: When the quantity r of rows is an integer multiple of 4, there are p = r/4 times of CRC-32 operations, and d_{CRC} = r/4 × 32 ≤ d_{CP}. In other words, the CRC-32 operations are performed on a total of 41120 bits in every 4 rows of the r rows of data. When the quantity r of rows is not an integer multiple of 4, there are p = [r/4] + 1 times of CRC-32 operations, and ${d}_{CRC} = \left(\left⌊r/4\right⌋+1\right) \times 32 \leq {d}_{CP}$, where an operation $\left⌊a\right⌋$ indicates performing a floor operation on a. In other words, r₀ = 4, r₁ = r - 4 × (p - 1), CRC-32 is performed on a total of q × r₀ = 41120 bits in every r₀ = 4 rows in first 4 × (p - 1) rows of the r rows of data, and a CRC-32 operation is performed once on a total of q × r₁ bits in last r₁ rows. It is considered that d_{PAD} = d_{CP} - d_{CRC}.

It is considered that the first sub-processing including the PCS, the interleaving, and the encoding is performed on the first bit set including m bits to obtain the second bit set including 4096 bits, where the ratio of the encoding input bit length to the encoding output bit length in the encoding operation is 111:128. For ease of hardware implementation, the fourth constraint is considered. In other words, m is an integer multiple of 32, so that the ratio of the input bit length m to the output bit length in the first sub-processing is f:128, where the integer f = m/32.

In Embodiment 8, it is considered that the overhead of the DSP framing in the second data processing is *h*_{DSP} = 56, each DSP frame (also referred to as a super-frame or a multi-frame) includes 175104 dual-polarization symbols, where 172032 dual-polarization symbols (that is, pre-framing symbols) in each DSP frame are obtained by performing the symbol mapping and the polarization distribution on the fourth bit data. In this case, the corresponding bit rate obtained through the second data processing is W₂₋₅₆ = W₁ × (1 + *h*_{DSP}) = W₀ × (r × q + d_{CP})/(r × q) × (4096/m) × (57/56), and the corresponding baud rate (that is, the symbol rate) is W_{*s*-56} = W₂₋₅₆/8 = W₀ × (r × q + d_{CP})/(r × q) × (4096/m) × (57/56)/8 GBaud.

The following Table 16 provides a corresponding parameter combination {r, m, d_{CP}, d_{PAD}, f, p, W₁, W₂₋₅₆, W_{*s*-56}}. It should be noted that Table 16 further provides a specific value of a corresponding parameter r₁ when the quantity r of rows is not an integer multiple of 4. When the quantity r of rows is an integer multiple of 4, for example, as shown by r=100 in the row 3 in Table 16, a corresponding parameter r₁ is represented by a slash in the table, indicating that the parameter r₁ does not exist.

**Table 16**

| Sequence number | r | m | d_{CP} | d_{PAD} | f | p | v/16 | r₁ | W₁ (Gbit/s) | W₂₋₅₆ (Gbit/s) | W_{*s*-56} (GBaud) |
|---|---|---|---|---|---|---|---|---|---|---|---|
| 1 | 102 | 3136 | 5136 | 4304 | 98 | 26 | 102 | 2 | 528.275862069 | 537.709359606 | 67.213669951 |
| 2 | 101 | 3104 | 4664 | 3832 | 97 | 26 | 100 | 1 | 533.506316148 | 543.033214651 | 67.879151831 |
| 3 | 100 | 3072 | 4192 | 3392 | 96 | 25 | 98 | | 538.841379310 | 548.463546798 | 68.557943350 |
| 4 | 99 | 3040 | 3720 | 2920 | 95 | 25 | 96 | 3 | 544.284221525 | 554.003582624 | 69.250447828 |
| 5 | 98 | 3008 | 3248 | 2448 | 94 | 25 | 94 | 2 | 549.838142153 | 559.656680406 | 69.957085051 |
| 6 | 97 | 2976 | 2776 | 1976 | 93 | 25 | 92 | 1 | 555.506576608 | 565.426336905 | 70.678292113 |
| 7 | 96 | 2944 | 2304 | 1536 | 92 | 24 | 90 | | 561.293103448 | 571.316194581 | 71.414524323 |
| 8 | 95 | 2912 | 1832 | 1064 | 91 | 24 | 88 | 3 | 567.201451905 | 577.330049261 | 72.166256158 |
| 9 | 94 | 2880 | 1360 | 592 | 90 | 24 | 86 | 2 | 573.235509904 | 583.471858295 | 72.933982287 |
| 10 | 93 | 2848 | 888 | 120 | 89 | 24 | 84 | 1 | 579.399332591 | 589.745749245 | 73.718218656 |
| 11 | 79 | 2432 | 5032 | 4392 | 76 | 20 | 58 | 3 | 682.077695329 | 694.257654174 | 86.782206772 |
| 12 | 78 | 2400 | 4560 | 3920 | 75 | 20 | 56 | 2 | 690.822281167 | 703.158393330 | 87.894799166 |
| 13 | 77 | 2368 | 4088 | 3448 | 74 | 20 | 54 | 1 | 699.793999104 | 712.290320516 | 89.036290065 |
| 14 | 76 | 2336 | 3616 | 3008 | 73 | 19 | 52 | | 709.001814882 | 721.662561576 | 90.207820197 |
| 15 | 75 | 2304 | 3144 | 2536 | 72 | 19 | 50 | 3 | 718.455172413 | 731.284729064 | 91.410591133 |
| 16 | 74 | 2272 | 2672 | 2064 | 71 | 19 | 48 | 2 | 728.164026095 | 741.166955132 | 92.645869391 |
| 17 | 73 | 2240 | 2200 | 1592 | 70 | 19 | 46 | 1 | 738.138875767 | 751.319927120 | 93.914990890 |
| 18 | 72 | 2208 | 1728 | 1152 | 69 | 18 | 44 | | 748.390804597 | 761.754926108 | 95.219365763 |
| 19 | 71 | 2176 | 1256 | 680 | 68 | 18 | 42 | 3 | 758.931520155 | 772.483868729 | 96.560483591 |
| 20 | 70 | 2144 | 784 | 208 | 67 | 18 | 40 | 2 | 769.773399014 | 783.519352568 | 97.939919071 |

It should be noted that v = m - 1504 is an integer multiple of 16. In some specific implementations, it is considered that n₀ = 128, and k₀ = v/16. In other words, 16 PCS sub-processing operations are used in the PCS processing to implement the effects of the PCS processing, where in each PCS sub-processing operation, PCS sub-processing is performed on the k₀ = v/16 input bits to obtain the n₀ = 128 output bits. In some specific applications, the 16 PCS sub-processing operations are implemented by using 16 lookup tables LUTs. In some other specific applications, the 16 PCS sub-processing operations are implemented by using 16 trellis codes (trellis codes). It should be noted that, in some other specific embodiments, it is considered that v = m - 1504 is an integer multiple of 32. When n₀ = 64, k₀ = v/32. In other words, 32 PCS sub-processing operations are used in the PCS processing to implement the effects of the PCS processing, where in each PCS sub-processing operation, PCS sub-processing is performed on the k₀ = v/32 input bits to obtain the n₀ = 64 output bits. In some specific applications, the 32 PCS sub-processing operations are implemented by using 32 lookup tables LUTs. In some other specific applications, the 32 PCS sub-processing operations are implemented by using 32 trellis codes (trellis codes).

It can be learned that, for the parameter combination provided in this embodiment, when the input data (that is, the first bit data) for the first data processing is considered as the FlexO-4e or 400G-ZR frame data, the corresponding baud rate is less than 100 GBaud. In this case, in corresponding specific optical communication network transmission, a channel spacing that may be used is not greater than 112.5 GHz. It may be understood that the proposed data processing solution may be well compatible with existing 400G data centers and metropolitan area networks. In addition, after the first data processing and the second data processing are performed on the first bit data that includes a total of dᵢₙ = q × r bits, a DSP frame (also referred to as a super-frame or a multi-frame) is exactly obtained, so that the proposed data processing method has low implementation complexity and lower power consumption. Further, in Embodiment 2, the cyclic redundancy check CRC-32 operation included in the first data processing adopts a CRC-32 operation in the existing 800G-ZR, which is easy to implement. In addition, m is an integer multiple of 32, so that the ratio of the input bit length m to the output bit length in the first sub-processing is f:128, where the integer f = m/32. In this way, hardware implementation is simpler.

It should be noted that, in the foregoing embodiments, it is considered that the input data (that is, the first bit data) for the first data processing is the FlexO-4e or 400G ZR frame data, and the nominal bit rate (nominal bit rate) of the FlexO-4e or 400G ZR frame data is W₀ = 21845/25984 × 766 × 0.15625 × 4 ≈ 401.703640510 × (512/511) ≈ 402.489753310 Gbit/s. The parameter combinations provided in the foregoing embodiments may alternatively be used for other data types, for example, 400G FlexO-4 data, 600G FlexO-6e and FlexO-6 data, 800G FlexO-8e and FlexO-8 data, and future 1.2T and 1.6T data. In some specific applications, the input data (that is, the first bit data) for the first data processing is FlexO-4 data, and a nominal bit rate (nominal bit rate) of the FlexO-4 data is W₀ = 491384/462961 × 99.5328 × 4 ≈ 422.5740431 Gbit/s. In some other specific applications, the input data (that is, the first bit data) for the first data processing is FlexO-6e data, and a nominal bit rate of the FlexO-6e data is W₀ = 21845/25984 × 766 × 0.15625 × 6 ≈ 603.73463 Gbit/s. In some other specific applications, the input data (that is, the first bit data) for the first data processing is FlexO-6 data, and a nominal bit rate of the FlexO-6 data is W₀ = 491384/462961 × 99.5328 × 6 ≈ 633.8611 Gbit/s. In some other specific applications, the input data (that is, the first bit data) for the first data processing is FlexO-8 data, and a nominal bit rate of the FlexO-8 data is W₀ = 491384/462961 × 99.5328 × 8 ≈ 845.14809 Gbit/s. In some other specific applications, the input data (that is, the first bit data) for the first data processing is FlexO-8e data, and a nominal bit rate of the FlexO-8e data is W₀ = 21845/25984 × 766 × 0.15625 × 8 ≈ 804.979507 Gbit/s. The corresponding bit rate obtained through the second data processing may be obtained through calculation of W₂ = W₁ × (1 + *h*_{DSP}) = W₀ × (r × q + d_{CP})/(r × q) × (4096/m) × (1 + *h*_{DSP}), and the corresponding baud rate (that is, the symbol rate) is obtained through calculation of W*ₛ* = W₂/8 = W₀ × (r × q + d_{CP})/(r × q) × (4096/m) × (1 + *h*_{DSP})/8 GBaud. Specific calculation is known to a person of ordinary skill in the art. Details are not described herein.

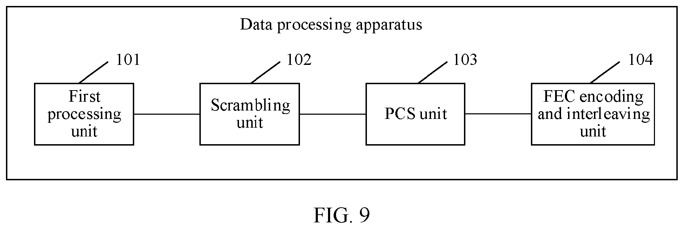

FIG. 9 is a diagram of a structure of a data processing apparatus according to an embodiment of this application. As shown in FIG. 9, the data processing apparatus includes a first processing unit 101, a scrambling unit 102, a PCS unit 103, and an FEC encoding and interleaving unit 104. The first processing unit 101 is specifically configured to obtain second bit data based on first bit data having a bit quantity of dᵢₙ, where the second bit data includes dᵢₙ bits in the first bit data, d_{CRC} check bits, and/or d_{PAD} padding bits, d_{CRC} is an integer greater than or equal to 0, and d_{PAD} is an integer greater than or equal to 0; and is specifically configured to perform cyclic redundancy check CRC and/or inserting padding bits on the first bit data to obtain the second bit data. A method for performing the CRC check is described in detail in the foregoing method embodiments. Details are not described in this embodiment again. The scrambling unit 102 is configured to perform the scrambling operation in the foregoing embodiments. The PCS unit 103 is specifically configured to perform the PCS processing operation in the foregoing embodiments. The FEC encoding and interleaving unit 104 is specifically configured to perform the FEC encoding and interleaving operations in the foregoing embodiments.

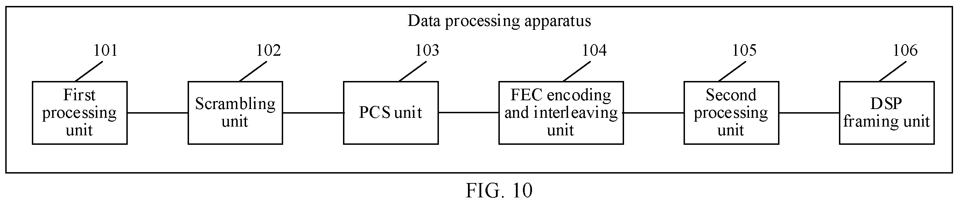

In some possible implementations, a data processing apparatus shown in FIG. 10 may further include a second processing unit 105 and a digital signal processing DSP framing unit 106. The second processing unit 105 is configured to perform symbol mapping and polarization distribution (also referred to as dual-polarization symbol mapping for short) on fourth bit data to obtain a dual-polarization symbol sequence, where the symbol mapping and the polarization distribution (also referred to as the dual-polarization symbol mapping for short) map 8 bits to one dual-polarization DP-16QAM symbol, and the fourth bit data includes a plurality of second bit sets. The DSP framing unit 106 is configured to perform DSP framing on the dual-polarization symbol sequence to obtain a DSP frame (also referred to as a DSP super-frame). For specific operations of the symbol mapping, polarization distribution, and DSP framing operations, refer to related descriptions in the embodiments shown in FIG. 5a to FIG. 5c. Details are not described herein again.

It should be understood that the data processing apparatus provided in this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in the form of hardware, or may be implemented in the form of a software functional unit.

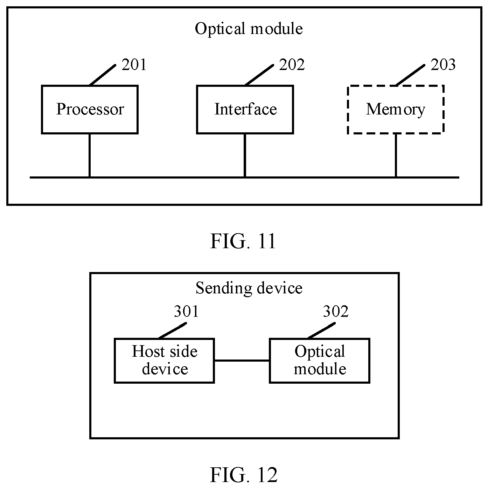

FIG. 11 is a diagram of a structure of an optical module according to an embodiment of this application. As shown in FIG. 11, the optical module includes a processor 201 and an interface 202. The processor 201 is configured to perform operations of the first data processing and the second data processing described in the foregoing embodiments. In a possible implementation, the processor 201 includes the first processing unit 101, the scrambling unit 102, the PCS unit 103, and the FEC encoding and interleaving unit 104 that are shown in FIG. 9, or may include the second processing unit 105 and the DSP framing unit 106 that are shown in FIG. 10. The interface 202 may be a transceiver or an input/output interface. The interface 202 is configured to: receive a signal from an apparatus other than the optical module and transmit the signal to the processor 201, or send a signal from the processor 201 to an apparatus other than the optical module. In an example, the processor 201 obtains a DSP frame after performing the first data processing and the second data processing, and sends the DSP frame through the interface 202. In this example, the interface 202 may be specifically an electrical interface. In another example, the processor 201 obtains a DSP frame after performing the first data processing and the second data processing. A modulator (modulator) in the optical module performs signal processing such as electrical-to-optical conversion based on the DSP frame to obtain an optical signal (optical signal), and then sends the optical signal through the interface 202. In this example, the interface 202 may be specifically an optical interface. Optionally, the optical module may further include a memory 203. The memory 203 is configured to store program instructions and/or data. The modulator may also be referred to as a signal driver (Signal driver).

FIG. 12 is a diagram of a structure of a sending device according to an embodiment of this application. As shown in FIG. 12, the sending device includes a host side device 301 and an optical module 302. The host side device 301 is configured to send data to the optical module 302, and the optical module 302 generates an optical signal based on the data sent by the host side device 301 and sends the optical signal through a channel. For example, the host side device may be specifically a switch, a router, or the like. The sending device may be a communication device including the host side device 301 and the optical module 302. It should be further understood that the sending device in this embodiment of this application is named based on a data stream direction, and a function of the device is not limited. For example, the sending device may also have a receiving function.

An embodiment of this application further provides an optical transport network (Optical Transport Network, OTN) device. The OTN device includes a line side (line side) device and a client side (client side) device. The client side device may also be referred to as a tributary side device in some scenarios. The line side device includes a processor and an interface. The processor is configured to perform operations of the first data processing and the second data processing described in the foregoing embodiments. The interface may be a transceiver or an input/output interface. The interface is configured to: receive a signal from an apparatus other than the line side device and transmit the signal to the processor, or send a signal from the processor to an apparatus other than the line side device.

An embodiment of this application further provides a chip. The chip integrates a circuit and one or more interfaces that are configured to implement functions of the processor 201. In an example, a memory is integrated into the chip. In another example, when no memory is integrated into the chip, the chip may be connected to an external memory through an interface. The chip may complete the steps of the method in any one or more of the foregoing embodiments. Alternatively, the chip implements, based on program code stored in the memory, actions performed by the data processing apparatus in the foregoing embodiments.

An embodiment of this application further provides a computer-readable storage medium, including a program or instructions. When the program or the instructions are run on a computer, the method performed by the processor 201 in the foregoing method embodiments is performed.

It should be understood that the processor mentioned in embodiments of this application may be implemented by using hardware or software. When the hardware is used for the implementation, the processor may be a logic circuit, an integrated circuit, or the like. When the software is used for the implementation, the processor may be a general-purpose processor, and is implemented by reading software code stored in the memory. The memory may exist independently and be connected to the processor, or the memory may be integrated with the processor.

In an example, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, may be any conventional processor, or may be a processing circuit that implements a specific function.

The memory in embodiments of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof.

When the hardware is used for the implementation, the data processing method provided in embodiments of this application may not be implemented by reading software code or instructions, for example, may be implemented by using a CPU, a DSP, an ASIC, an FPGA, another programmable logic device, a transistor logic device, a hardware component, or any combination thereof.

When the software is used for the implementation, all or some of the embodiments may be implemented in the form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a digital versatile disc (Digital Versatile Disc, DVD); or may be a semiconductor medium, for example, a solid state drive (solid state drive, SSD).

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, comprising:
obtaining second bit data based on first bit data having a bit quantity of dᵢₙ, wherein the second bit data comprises dᵢₙ bits in the first bit data, d_{CRC} check bits, and/or d_{PAD} padding bits, d_{CRC} is an integer greater than or equal to 0, and d_{PAD} is an integer greater than or equal to 0;
scrambling the second bit data to obtain third bit data, wherein a bit quantity of the third bit data is d_{scr} = dᵢₙ + d_{CP}, and d_{CP} = d_{CRC} + d_{PAD};
performing probabilistic constellation shaping PCS processing on a first bit subset in a first bit set having a bit quantity of m to obtain a second bit subset, wherein the first bit set is obtained from the third bit data, m is an integer greater than 1, and d_{scr} is an integer multiple of m; and
performing forward error correction FEC encoding and interleaving processing on the second bit subset and a third bit subset in the first bit set other than the first bit subset to obtain a second bit set, wherein values of dᵢₙ, m, and d_{CP} are any group in the following table:
| dᵢₙ | m | d_{CP} |
|---|---|---|
| 1186312 | 3536 | 1784 |
| 1184256 | 3536 | 3840 |
| 1182200 | 3520 | 520 |
| 1180144 | 3520 | 2576 |
| 1176032 | 3504 | 1312 |
| 1173976 | 3504 | 3368 |
| 1171920 | 3488 | 48 |
| 1169864 | 3488 | 2104 |
| 1165752 | 3472 | 840 |
| 1163696 | 3472 | 2896 |
| 1159584 | 3456 | 1632 |
| 1157528 | 3456 | 3688 |
| 1155472 | 3440 | 368 |
| 1153416 | 3440 | 2424 |
| 1149304 | 3424 | 1160 |
| 1147248 | 3424 | 3216 |
| 1143136 | 3408 | 1952 |
| 1141080 | 3408 | 4008 |
| 1139024 | 3392 | 688 |
| 1136968 | 3392 | 2744 |
| 1132856 | 3376 | 1480 |
| 1130800 | 3376 | 3536 |
| 1128744 | 3360 | 216 |
| 1122576 | 3344 | 1008 |
| 1120520 | 3344 | 3064 |
| 1116408 | 3328 | 1800 |
| 1114352 | 3328 | 3856 |
| 1112296 | 3312 | 536 |
| 1110240 | 3312 | 2592 |
| 1106128 | 3296 | 1328 |
| 1104072 | 3296 | 3384 |
| 1102016 | 3280 | 64 |
| 1099960 | 3280 | 2120 |
| 1095848 | 3264 | 856 |
| 1093792 | 3264 | 2912 |
| 1089680 | 3248 | 1648 |
| 1087624 | 3248 | 3704 |
| 1085568 | 3232 | 384 |
| 1083512 | 3232 | 2440 |
| 1079400 | 3216 | 1176 |
| 1077344 | 3216 | 3232 |
| 1071176 | 3200 | 4024 |
| 1069120 | 3184 | 704 |
| 1067064 | 3184 | 2760 |
| 1062952 | 3168 | 1496 |
| 1060896 | 3168 | 3552 |
| 1058840 | 3152 | 232 |
| 1056784 | 3152 | 2288 |
| 1052672 | 3136 | 1024 |
| 1050616 | 3136 | 3080 |
| 1046504 | 3120 | 1816 |
| 1044448 | 3120 | 3872 |
| 1042392 | 3104 | 552 |
| 1040336 | 3104 | 2608 |
| 1036224 | 3088 | 1344 |
| 1034168 | 3088 | 3400 |
| 1032112 | 3072 | 80 |
| 1030056 | 3072 | 2136 |
| 1025944 | 3056 | 872 |
| 1023888 | 3056 | 2928 |
| 1019776 | 3040 | 1664 |
| 1017720 | 3040 | 3720 |
| 1015664 | 3024 | 400 |
| 1013608 | 3024 | 2456 |
| 1009496 | 3008 | 1192 |
| 1007440 | 3008 | 3248 |
| 1003328 | 2992 | 1984 |
| 1001272 | 2992 | 4040 |
| 999216 | 2976 | 720 |
| 997160 | 2976 | 2776 |
| 993048 | 2960 | 1512 |
| 990992 | 2960 | 3568 |
| 988936 | 2944 | 248 |
| 986880 | 2944 | 2304 |
| 982768 | 2928 | 1040 |
| 980712 | 2928 | 3096 |
| 976600 | 2912 | 1832 |
| 974544 | 2912 | 3888 |
| 972488 | 2896 | 568 |
| 970432 | 2896 | 2624 |
| 966320 | 2880 | 1360 |
| 964264 | 2880 | 3416 |
| 962208 | 2864 | 96 |
| 960152 | 2864 | 2152 |
| 956040 | 2848 | 888 |
| 953984 | 2848 | 2944 |
| 949872 | 2832 | 1680 |
| 947816 | 2832 | 3736 |
| 945760 | 2816 | 416 |
| 943704 | 2816 | 2472 |
| 939592 | 2800 | 1208 |
| 937536 | 2800 | 3264 |
| 933424 | 2784 | 2000 |
| 931368 | 2784 | 4056 |
| 929312 | 2768 | 736 |
| 927256 | 2768 | 2792 |
| 923144 | 2752 | 1528 |
| 921088 | 2752 | 3584 |
| 919032 | 2736 | 264 |
| 916976 | 2736 | 2320 |
| 912864 | 2720 | 1056 |
| 910808 | 2720 | 3112 |
| 906696 | 2704 | 1848 |
| 904640 | 2704 | 3904 |
| 902584 | 2688 | 584 |
| 900528 | 2688 | 2640 |
| 896416 | 2672 | 1376 |
| 894360 | 2672 | 3432 |
| 892304 | 2656 | 112 |
| 886136 | 2640 | 904 |
| 884080 | 2640 | 2960 |
| 879968 | 2624 | 1696 |
| 877912 | 2624 | 3752 |
| 875856 | 2608 | 432 |
| 873800 | 2608 | 2488 |
| 869688 | 2592 | 1224 |
| 867632 | 2592 | 3280 |
| 863520 | 2576 | 2016 |
| 861464 | 2576 | 4072 |
| 859408 | 2560 | 752 |
| 857352 | 2560 | 2808 |
| 853240 | 2544 | 1544 |
| 851184 | 2544 | 3600 |
| 849128 | 2528 | 280 |
| 847072 | 2528 | 2336 |
| 842960 | 2512 | 1072 |
| 840904 | 2512 | 3128 |
| 836792 | 2496 | 1864 |
| 834736 | 2496 | 3920 |
| 832680 | 2480 | 600 |
| 830624 | 2480 | 2656 |
| 826512 | 2464 | 1392 |
| 824456 | 2464 | 3448 |
| 822400 | 2448 | 128 |
| 820344 | 2448 | 2184 |
| 816232 | 2432 | 920 |
| 814176 | 2432 | 2976 |
| 810064 | 2416 | 1712 |
| 808008 | 2416 | 3768 |
| 805952 | 2400 | 448 |
| 803896 | 2400 | 2504 |
| 799784 | 2384 | 1240 |
| 797728 | 2384 | 3296 |
| 793616 | 2368 | 2032 |
| 791560 | 2368 | 4088 |
| 789504 | 2352 | 768 |
| 787448 | 2352 | 2824 |
| 783336 | 2336 | 1560 |
| 781280 | 2336 | 3616 |
| 779224 | 2320 | 296 |
| 777168 | 2320 | 2352 |
| 773056 | 2304 | 1088 |
| 771000 | 2304 | 3144 |
| 766888 | 2288 | 1880 |
| 764832 | 2288 | 3936 |
| 762776 | 2272 | 616 |
| 760720 | 2272 | 2672 |
| 756608 | 2256 | 1408 |
| 754552 | 2256 | 3464 |
| 752496 | 2240 | 144 |
| 750440 | 2240 | 2200 |
| 746328 | 2224 | 936 |
| 744272 | 2224 | 2992 |
| 740160 | 2208 | 1728 |
| 738104 | 2208 | 3784 |
| 736048 | 2192 | 464 |
| 733992 | 2192 | 2520 |
| 729880 | 2176 | 1256 |
| 727824 | 2176 | 3312 |
| 723712 | 2160 | 2048 |
| 721656 | 2160 | 4104 |
| 719600 | 2144 | 784 |

2. The method according to claim 1, wherein d_{scr} = 336 × m.

3. The method according to claim 1 or 2, wherein a bit quantity of the first bit subset is an integer multiple of 16 or 32, the second bit subset comprises 2048 bits, the third bit subset comprises 1504 bits, and the second bit set comprises 4096 bits.

4. The method according to any one of claims 1 to 3, wherein the first bit data comprises r rows and q columns of bits, dᵢₙ=r×q, r is an integer greater than 1, and q=2056 or 10280.

5. The method according to claim 4, wherein the obtaining the second bit data based on the first bit data having the bit quantity of dᵢₙ specifically comprises: performing cyclic redundancy check CRC and/or inserting padding bits on the first bit data to obtain the second bit data, wherein the performing the CRC on the first bit data comprises:
performing a CRC-32 check on a total of r×q/p bits in every r/p rows of the first bit data, and adding 32 check bits, wherein d_{CRC} = 32 × p, r is divisible by p, and p is an integer greater than 1; or
performing a CRC-32 check on a total of q × r₀ bits in every r₀ rows in first r₀ × (p - 1) rows of the first bit data to add 32 check bits, and performing a CRC-32 check on a total of q × r₁ bits in last r₁ rows of the first bit data to add 32 check bits, wherein d_{CRC} = 32 × p, r is not divisible by p, p is an integer greater than 1, r₀ × (p - 1) + r₁ = r, and the integer r₀ is greater than the integer r₁.

6. The method according to claim 5, wherein q=2056, and values of r, m, d_{CP}, p, and r₁ are any group in the following table:
| r | m | d_{CP} | p | r₁ |
|---|---|---|---|---|
| 577 | 3536 | 1784 | 29 | 17 |
| 576 | 3536 | 3840 | 29 | 16 |
| 574 | 3520 | 2576 | 29 | 14 |
| 572 | 3504 | 1312 | 29 | 12 |
| 571 | 3504 | 3368 | 29 | 11 |
| 569 | 3488 | 2104 | 29 | 9 |
| 566 | 3472 | 2896 | 29 | 6 |
| 564 | 3456 | 1632 | 29 | 4 |
| 563 | 3456 | 3688 | 29 | 3 |
| 561 | 3440 | 2424 | 29 | 1 |
| 559 | 3424 | 1160 | 28 | 19 |
| 558 | 3424 | 3216 | 28 | 18 |
| 556 | 3408 | 1952 | 28 | 16 |
| *555* | 3408 | 4008 | 28 | 15 |
| 553 | 3392 | 2744 | 28 | 13 |
| *551* | 3376 | 1480 | 28 | 11 |
| *550* | 3376 | 3536 | 28 | 10 |
| 546 | 3344 | 1008 | 28 | 6 |
| 545 | 3344 | 3064 | 28 | 5 |
| 543 | 3328 | 1800 | 28 | 3 |
| 542 | 3328 | 3856 | 28 | 2 |
| 540 | 3312 | 2592 | 27 | |
| 538 | 3296 | 1328 | 27 | 18 |
| 537 | 3296 | 3384 | 27 | 17 |
| 535 | 3280 | 2120 | 27 | 15 |
| 532 | 3264 | 2912 | 27 | 12 |
| 530 | 3248 | 1648 | 27 | 10 |
| 529 | 3248 | 3704 | 27 | 9 |
| 527 | 3232 | 2440 | 27 | 7 |
| 525 | 3216 | 1176 | 27 | 5 |
| 524 | 3216 | 3232 | 27 | 4 |
| 521 | 3200 | 4024 | 27 | 1 |
| 519 | 3184 | 2760 | 26 | 19 |
| 517 | 3168 | 1496 | 26 | 17 |
| 516 | 3168 | 3552 | 26 | 16 |
| 514 | 3152 | 2288 | 26 | 14 |
| 512 | 3136 | 1024 | 26 | 12 |
| 511 | 3136 | 3080 | 26 | 11 |
| 509 | 3120 | 1816 | 26 | 9 |
| 508 | 3120 | 3872 | 26 | 8 |
| 506 | 3104 | 2608 | 26 | 6 |
| 504 | 3088 | 1344 | 26 | 4 |
| 503 | 3088 | 3400 | 26 | 3 |
| 501 | 3072 | 2136 | 26 | 1 |
| 499 | 3056 | 872 | 25 | 19 |
| 498 | 3056 | 2928 | 25 | 18 |
| 496 | 3040 | 1664 | 25 | 16 |
| 495 | 3040 | 3720 | 25 | 15 |
| 493 | 3024 | 2456 | 25 | 13 |
| 491 | 3008 | 1192 | 25 | 11 |
| 490 | 3008 | 3248 | 25 | 10 |
| 488 | 2992 | 1984 | 25 | 8 |
| 487 | 2992 | 4040 | 25 | 7 |
| 485 | 2976 | 2776 | 25 | 5 |
| 483 | 2960 | 1512 | 25 | 3 |
| 482 | 2960 | 3568 | 25 | 2 |
| 480 | 2944 | 2304 | 24 | |
| 478 | 2928 | 1040 | 24 | 18 |
| 477 | 2928 | 3096 | 24 | 17 |
| 475 | 2912 | 1832 | 24 | 15 |
| 474 | 2912 | 3888 | 24 | 14 |
| 472 | 2896 | 2624 | 24 | 12 |
| 470 | 2880 | 1360 | 24 | 10 |
| 469 | 2880 | 3416 | 24 | 9 |
| 467 | 2864 | 2152 | 24 | 7 |
| 465 | 2848 | 888 | 24 | 5 |
| 464 | 2848 | 2944 | 24 | 4 |
| 462 | 2832 | 1680 | 24 | 2 |
| 461 | 2832 | 3736 | 24 | 1 |
| 459 | 2816 | 2472 | 23 | 19 |
| 457 | 2800 | 1208 | 23 | 17 |
| 456 | 2800 | 3264 | 23 | 16 |
| 454 | 2784 | 2000 | 23 | 14 |
| 453 | 2784 | 4056 | 23 | 13 |
| 452 | 2768 | 736 | 23 | 12 |
| 451 | 2768 | 2792 | 23 | 11 |
| 449 | 2752 | 1528 | 23 | 9 |
| 448 | 2752 | 3584 | 23 | 8 |
| 446 | 2736 | 2320 | 23 | 6 |
| 444 | 2720 | 1056 | 23 | 4 |
| 443 | 2720 | 3112 | 23 | 3 |
| 441 | 2704 | 1848 | 23 | 1 |
| 440 | 2704 | 3904 | 22 | |
| 438 | 2688 | 2640 | 22 | 18 |
| 436 | 2672 | 1376 | 22 | 16 |
| 435 | 2672 | 3432 | 22 | 15 |
| 431 | 2640 | 904 | 22 | 11 |
| 430 | 2640 | 2960 | 22 | 10 |
| 428 | 2624 | 1696 | 22 | 8 |
| 427 | 2624 | 3752 | 22 | 7 |
| 425 | 2608 | 2488 | 22 | 5 |
| 423 | 2592 | 1224 | 22 | 3 |
| 422 | 2592 | 3280 | 22 | 2 |
| 420 | 2576 | 2016 | 21 | |
| 419 | 2576 | 4072 | 21 | 19 |
| 418 | 2560 | 752 | 21 | 18 |
| 417 | 2560 | 2808 | 21 | 17 |
| 415 | 2544 | 1544 | 21 | 15 |
| 414 | 2544 | 3600 | 21 | 14 |
| 412 | 2528 | 2336 | 21 | 12 |
| 410 | 2512 | 1072 | 21 | 10 |
| 409 | 2512 | 3128 | 21 | 9 |
| 407 | 2496 | 1864 | 21 | 7 |
| 406 | 2496 | 3920 | 21 | 6 |
| 404 | 2480 | 2656 | 21 | 4 |
| 402 | 2464 | 1392 | 21 | 2 |
| 401 | 2464 | 3448 | 21 | 1 |
| 399 | 2448 | 2184 | 20 | 19 |
| 397 | 2432 | 920 | 20 | 17 |
| 396 | 2432 | 2976 | 20 | 16 |
| 394 | 2416 | 1712 | 20 | 14 |
| 393 | 2416 | 3768 | 20 | 13 |
| 391 | 2400 | 2504 | 20 | 11 |
| 389 | 2384 | 1240 | 20 | 9 |
| 388 | 2384 | 3296 | 20 | 8 |
| 386 | 2368 | 2032 | 20 | 6 |
| 385 | 2368 | 4088 | 20 | 5 |
| 384 | 2352 | 768 | 20 | 4 |
| 383 | 2352 | 2824 | 20 | 3 |
| 381 | 2336 | 1560 | 20 | 1 |
| 380 | 2336 | 3616 | 19 | |
| 378 | 2320 | 2352 | 19 | 18 |
| 376 | 2304 | 1088 | 19 | 16 |
| 375 | 2304 | 3144 | 19 | 15 |
| 373 | 2288 | 1880 | 19 | 13 |
| 372 | 2288 | 3936 | 19 | 12 |
| 371 | 2272 | 616 | 19 | 11 |
| 370 | 2272 | 2672 | 19 | 10 |
| 368 | 2256 | 1408 | 19 | 8 |
| 367 | 2256 | 3464 | 19 | 7 |
| 365 | 2240 | 2200 | 19 | 5 |
| 363 | 2224 | 936 | 19 | 3 |
| 362 | 2224 | 2992 | 19 | 2 |
| 360 | 2208 | 1728 | 18 | |
| 359 | 2208 | 3784 | 18 | 19 |
| 357 | 2192 | 2520 | 18 | 17 |
| 355 | 2176 | 1256 | 18 | 15 |
| 354 | 2176 | 3312 | 18 | 14 |
| 352 | 2160 | 2048 | 18 | 12 |
| 351 | 2160 | 4104 | 18 | 11 |
| 350 | 2144 | 784 | 18 | 10 |

7. The method according to claim 5, wherein m is an integer multiple of 32, q=2056, and values of r, m, d_{CP}, p, and r₁ are any group in the following table:
| r | m | d_{CP} | p | r₁ |
|---|---|---|---|---|
| 574 | 3520 | 2576 | 29 | 14 |
| 569 | 3488 | 2104 | 29 | 9 |
| 564 | 3456 | 1632 | 29 | 4 |
| 563 | 3456 | 3688 | 29 | 3 |
| 559 | 3424 | 1160 | 28 | 19 |
| 558 | 3424 | 3216 | 28 | 18 |
| 553 | 3392 | 2744 | 28 | 13 |
| 543 | 3328 | 1800 | 28 | 3 |
| 542 | 3328 | 3856 | 28 | 2 |
| 538 | 3296 | 1328 | 27 | 18 |
| 537 | 3296 | 3384 | 27 | 17 |
| 532 | 3264 | 2912 | 27 | 12 |
| 527 | 3232 | 2440 | 27 | 7 |
| 521 | 3200 | 4024 | 27 | 1 |
| 517 | 3168 | 1496 | 26 | 17 |
| 516 | 3168 | 3552 | 26 | 16 |
| 512 | 3136 | 1024 | 26 | 12 |
| 511 | 3136 | 3080 | 26 | 11 |
| 506 | 3104 | 2608 | 26 | 6 |
| 501 | 3072 | 2136 | 26 | 1 |
| 496 | 3040 | 1664 | 25 | 16 |
| 495 | 3040 | 3720 | 25 | 15 |
| 491 | 3008 | 1192 | 25 | 11 |
| 490 | 3008 | 3248 | 25 | 10 |
| 485 | 2976 | 2776 | 25 | 5 |
| 480 | 2944 | 2304 | 24 | |
| 475 | 2912 | 1832 | 24 | 15 |
| 474 | 2912 | 3888 | 24 | 14 |
| 470 | 2880 | 1360 | 24 | 10 |
| 469 | 2880 | 3416 | 24 | 9 |
| 465 | 2848 | 888 | 24 | 5 |
| 464 | 2848 | 2944 | 24 | 4 |
| 459 | 2816 | 2472 | 23 | 19 |
| 454 | 2784 | 2000 | 23 | 14 |
| 453 | 2784 | 4056 | 23 | 13 |
| 449 | 2752 | 1528 | 23 | 9 |
| 448 | 2752 | 3584 | 23 | 8 |
| 444 | 2720 | 1056 | 23 | 4 |
| 443 | 2720 | 3112 | 23 | 3 |
| 438 | 2688 | 2640 | 22 | 18 |
| 428 | 2624 | 1696 | 22 | 8 |
| 427 | 2624 | 3752 | 22 | 7 |
| 423 | 2592 | 1224 | 22 | 3 |
| 422 | 2592 | 3280 | 22 | 2 |
| 418 | 2560 | 752 | 21 | 18 |
| 417 | 2560 | 2808 | 21 | 17 |
| 412 | 2528 | 2336 | 21 | 12 |
| 407 | 2496 | 1864 | 21 | 7 |
| 406 | 2496 | 3920 | 21 | 6 |
| 402 | 2464 | 1392 | 21 | 2 |
| 401 | 2464 | 3448 | 21 | 1 |
| 397 | 2432 | 920 | 20 | 17 |
| 396 | 2432 | 2976 | 20 | 16 |
| 391 | 2400 | 2504 | 20 | 11 |
| 386 | 2368 | 2032 | 20 | 6 |
| 385 | 2368 | 4088 | 20 | 5 |
| 381 | 2336 | 1560 | 20 | 1 |
| 380 | 2336 | 3616 | 19 | |
| 376 | 2304 | 1088 | 19 | 16 |
| 375 | 2304 | 3144 | 19 | 15 |
| 371 | 2272 | 616 | 19 | 11 |
| 370 | 2272 | 2672 | 19 | 10 |
| 365 | 2240 | 2200 | 19 | 5 |
| 360 | 2208 | 1728 | 18 | |
| 359 | 2208 | 3784 | 18 | 19 |
| 355 | 2176 | 1256 | 18 | 15 |
| 354 | 2176 | 3312 | 18 | 14 |
| 350 | 2144 | 784 | 18 | 10 |

8. The method according to claim 5, wherein q=10280, and values of r, m, d_{CP}, p, and r₁ are any group in the following table:
| r | m | d_{CP} | p | r₁ |
|---|---|---|---|---|
| 113 | 3472 | 4952 | 29 | 1 |
| 112 | 3440 | 4480 | 28 | |
| 111 | 3408 | 4008 | 28 | 3 |
| 110 | 3376 | 3536 | 28 | 2 |
| 109 | 3344 | 3064 | 28 | 1 |
| 108 | 3312 | 2592 | 27 | |
| 107 | 3280 | 2120 | 27 | 3 |
| 106 | 3248 | 1648 | 27 | 2 |
| 105 | 3216 | 1176 | 27 | 1 |
| 102 | 3136 | 5136 | 26 | 2 |
| 101 | 3104 | 4664 | 26 | 1 |
| 100 | 3072 | 4192 | 25 | |
| 99 | 3040 | 3720 | 25 | 3 |
| 98 | 3008 | 3248 | 25 | 2 |
| 97 | 2976 | 2776 | 25 | 1 |
| 96 | 2944 | 2304 | 24 | |
| 95 | 2912 | 1832 | 24 | 3 |
| 94 | 2880 | 1360 | 24 | 2 |
| 93 | 2848 | 888 | 24 | 1 |
| 90 | 2768 | 4848 | 23 | 2 |
| 89 | 2736 | 4376 | 23 | 1 |
| 88 | 2704 | 3904 | 22 | |
| 87 | 2672 | 3432 | 22 | 3 |
| 86 | 2640 | 2960 | 22 | 2 |
| 85 | 2608 | 2488 | 22 | 1 |
| 84 | 2576 | 2016 | 21 | |
| 83 | 2544 | 1544 | 21 | 3 |
| 82 | 2512 | 1072 | 21 | 2 |
| 79 | 2432 | 5032 | 20 | 3 |
| 78 | 2400 | 4560 | 20 | 2 |
| 77 | 2368 | 4088 | 20 | 1 |
| 76 | 2336 | 3616 | 19 | |
| 75 | 2304 | 3144 | 19 | 3 |
| 74 | 2272 | 2672 | 19 | 2 |
| 73 | 2240 | 2200 | 19 | 1 |
| 72 | 2208 | 1728 | 18 | |
| 71 | 2176 | 1256 | 18 | 3 |
| 70 | 2144 | 784 | 18 | 2 |

9. The method according to claim 5, wherein m is an integer multiple of 32, q=10280, and values of r, m, d_{CP}, p, and r₁ are any group in the following table:
| r | m | d_{CP} | p | r₁ |
|---|---|---|---|---|
| 102 | 3136 | 5136 | 26 | 2 |
| 101 | 3104 | 4664 | 26 | 1 |
| 100 | 3072 | 4192 | 25 | |
| 99 | 3040 | 3720 | 25 | 3 |
| 98 | 3008 | 3248 | 25 | 2 |
| 97 | 2976 | 2776 | 25 | 1 |
| 96 | 2944 | 2304 | 24 | |
| 95 | 2912 | 1832 | 24 | 3 |
| 94 | 2880 | 1360 | 24 | 2 |
| 93 | 2848 | 888 | 24 | 1 |
| 79 | 2432 | 5032 | 20 | 3 |
| 78 | 2400 | 4560 | 20 | 2 |
| 77 | 2368 | 4088 | 20 | 1 |
| 76 | 2336 | 3616 | 19 | |
| 75 | 2304 | 3144 | 19 | 3 |
| 74 | 2272 | 2672 | 19 | 2 |
| 73 | 2240 | 2200 | 19 | 1 |
| 72 | 2208 | 1728 | 18 | |
| 71 | 2176 | 1256 | 18 | 3 |
| 70 | 2144 | 784 | 18 | 2 |

10. The method according to any one of claims 1 to 9, wherein the third bit subset comprises 1504 bits, the first bit subset comprises m-1504 bits, and the performing the probabilistic constellation shaping PCS processing on the first bit subset in the first bit set having the bit quantity of m to obtain the second bit subset comprises:
dividing the first bit subset into 16 sequences, wherein each sequence comprises (m-1504)/16 bits; and
performing PCS sub-processing on the 16 sequences respectively to obtain 16 output sequences corresponding to the 16 sequences, wherein each output sequence comprises 128 bits, and the 16 output sequences form the second bit subset; or
the performing the probabilistic constellation shaping PCS processing on the first bit subset in the first bit set having the bit quantity of m to obtain the second bit subset comprises:
dividing the first bit subset into 32 sequences, wherein each sequence comprises (m-1504)/32 bits; and
performing PCS sub-processing on the 32 sequences respectively to obtain 32 output sequences corresponding to the 32 sequences, wherein each output sequence comprises 64 bits, and the 32 output sequences form the second bit subset.

11. The method according to any one of claims 1 to 10, wherein after obtaining the second bit set, the method further comprises:
performing symbol mapping and polarization distribution on fourth bit data to obtain a dual-polarization symbol sequence, wherein the symbol mapping and the polarization distribution map 8 bits to one dual-polarization DP-16QAM symbol, and the fourth bit data comprises a plurality of second bit sets; and
performing digital signal processing DSP framing on the dual-polarization symbol sequence to obtain a DSP frame.

12. The method according to claim 11, wherein the performing the DSP framing on the dual-polarization symbol sequence comprises:
performing framing processing on every 172032 dual-polarization DP-16QAM symbols to obtain a DSP frame.

13. A data processing apparatus, comprising: a first processing unit, a scrambling unit, a probabilistic constellation shaping PCS unit, and a forward error correction FEC encoding and interleaving unit, wherein
the first processing unit is configured to obtain second bit data based on first bit data having a bit quantity of dᵢₙ, wherein the second bit data comprises dᵢₙ bits in the first bit data, d_{CRC} check bits, and/or d_{PAD} padding bits, d_{CRC} is an integer greater than or equal to 0, and d_{PAD} is an integer greater than or equal to 0;
the scrambling unit is configured to scramble the second bit data to obtain third bit data, wherein a bit quantity of the third bit data is d_{scr} = r × q + d_{CP}, and d_{CP} = d_{CRC} + d_{PAD};
the PCS unit is configured to perform probabilistic constellation shaping PCS processing on a first bit subset in a first bit set having a bit quantity of m to obtain a second bit subset, wherein the first bit set is obtained from the third bit data, m is an integer greater than 1, and d_{scr} is an integer multiple of m; and
the FEC encoding and interleaving unit is configured to perform FEC encoding and interleaving processing on the second bit subset and a third bit subset in the first bit set other than the first bit subset to obtain a second bit set, wherein values of dᵢₙ, m, and d_{CP} are any group in the following table:
| dᵢₙ | m | d_{CP} |
|---|---|---|
| 1186312 | 3536 | 1784 |
| 1184256 | 3536 | 3840 |
| 1182200 | 3520 | 520 |
| 1180144 | 3520 | 2576 |
| 1176032 | 3504 | 1312 |
| 1173976 | 3504 | 3368 |
| 1171920 | 3488 | 48 |
| 1169864 | 3488 | 2104 |
| 1165752 | 3472 | 840 |
| 1163696 | 3472 | 2896 |
| 1159584 | 3456 | 1632 |
| 1157528 | 3456 | 3688 |
| 1155472 | 3440 | 368 |
| 1153416 | 3440 | 2424 |
| 1149304 | 3424 | 1160 |
| 1147248 | 3424 | 3216 |
| 1143136 | 3408 | 1952 |
| 1141080 | 3408 | 4008 |
| 1139024 | 3392 | 688 |
| 1136968 | 3392 | 2744 |
| 1132856 | 3376 | 1480 |
| 1130800 | 3376 | 3536 |
| 1128744 | 3360 | 216 |
| 1122576 | 3344 | 1008 |
| 1120520 | 3344 | 3064 |
| 1116408 | 3328 | 1800 |
| 1114352 | 3328 | 3856 |
| 1112296 | 3312 | 536 |
| 1110240 | 3312 | 2592 |
| 1106128 | 3296 | 1328 |
| 1104072 | 3296 | 3384 |
| 1102016 | 3280 | 64 |
| 1099960 | 3280 | 2120 |
| 1095848 | 3264 | 856 |
| 1093792 | 3264 | 2912 |
| 1089680 | 3248 | 1648 |
| 1087624 | 3248 | 3704 |
| 1085568 | 3232 | 384 |
| 1083512 | 3232 | 2440 |
| 1079400 | 3216 | 1176 |
| 1077344 | 3216 | 3232 |
| 1071176 | 3200 | 4024 |
| 1069120 | 3184 | 704 |
| 1067064 | 3184 | 2760 |
| 1062952 | 3168 | 1496 |
| 1060896 | 3168 | 3552 |
| 1058840 | 3152 | 232 |
| 1056784 | 3152 | 2288 |
| 1052672 | 3136 | 1024 |
| 1050616 | 3136 | 3080 |
| 1046504 | 3120 | 1816 |
| 1044448 | 3120 | 3872 |
| 1042392 | 3104 | 552 |
| 1040336 | 3104 | 2608 |
| 1036224 | 3088 | 1344 |
| 1034168 | 3088 | 3400 |
| 1032112 | 3072 | 80 |
| 1030056 | 3072 | 2136 |
| 1025944 | 3056 | 872 |
| 1023888 | 3056 | 2928 |
| 1019776 | 3040 | 1664 |
| 1017720 | 3040 | 3720 |
| 1015664 | 3024 | 400 |
| 1013608 | 3024 | 2456 |
| 1009496 | 3008 | 1192 |
| 1007440 | 3008 | 3248 |
| 1003328 | 2992 | 1984 |
| 1001272 | 2992 | 4040 |
| 999216 | 2976 | 720 |
| 997160 | 2976 | 2776 |
| 993048 | 2960 | 1512 |
| 990992 | 2960 | 3568 |
| 988936 | 2944 | 248 |
| 986880 | 2944 | 2304 |
| 982768 | 2928 | 1040 |
| 980712 | 2928 | 3096 |
| 976600 | 2912 | 1832 |
| 974544 | 2912 | 3888 |
| 972488 | 2896 | 568 |
| 970432 | 2896 | 2624 |
| 966320 | 2880 | 1360 |
| 964264 | 2880 | 3416 |
| 962208 | 2864 | 96 |
| 960152 | 2864 | 2152 |
| 956040 | 2848 | 888 |
| 953984 | 2848 | 2944 |
| 949872 | 2832 | 1680 |
| 947816 | 2832 | 3736 |
| 945760 | 2816 | 416 |
| 943704 | 2816 | 2472 |
| 939592 | 2800 | 1208 |
| 937536 | 2800 | 3264 |
| 933424 | 2784 | 2000 |
| 931368 | 2784 | 4056 |
| 929312 | 2768 | 736 |
| 927256 | 2768 | 2792 |
| 923144 | 2752 | 1528 |
| 921088 | 2752 | 3584 |
| 919032 | 2736 | 264 |
| 916976 | 2736 | 2320 |
| 912864 | 2720 | 1056 |
| 910808 | 2720 | 3112 |
| 906696 | 2704 | 1848 |
| 904640 | 2704 | 3904 |
| 902584 | 2688 | 584 |
| 900528 | 2688 | 2640 |
| 896416 | 2672 | 1376 |
| 894360 | 2672 | 3432 |
| 892304 | 2656 | 112 |
| 886136 | 2640 | 904 |
| 884080 | 2640 | 2960 |
| 879968 | 2624 | 1696 |
| 877912 | 2624 | 3752 |
| 875856 | 2608 | 432 |
| 873800 | 2608 | 2488 |
| 869688 | 2592 | 1224 |
| 867632 | 2592 | 3280 |
| 863520 | 2576 | 2016 |
| 861464 | 2576 | 4072 |
| 859408 | 2560 | 752 |
| 857352 | 2560 | 2808 |
| 853240 | 2544 | 1544 |
| 851184 | 2544 | 3600 |
| 849128 | 2528 | 280 |
| 847072 | 2528 | 2336 |
| 842960 | 2512 | 1072 |
| 840904 | 2512 | 3128 |
| 836792 | 2496 | 1864 |
| 834736 | 2496 | 3920 |
| 832680 | 2480 | 600 |
| 830624 | 2480 | 2656 |
| 826512 | 2464 | 1392 |
| 824456 | 2464 | 3448 |
| 822400 | 2448 | 128 |
| 820344 | 2448 | 2184 |
| 816232 | 2432 | 920 |
| 814176 | 2432 | 2976 |
| 810064 | 2416 | 1712 |
| 808008 | 2416 | 3768 |
| 805952 | 2400 | 448 |
| 803896 | 2400 | 2504 |
| 799784 | 2384 | 1240 |
| 797728 | 2384 | 3296 |
| 793616 | 2368 | 2032 |
| 791560 | 2368 | 4088 |
| 789504 | 2352 | 768 |
| 787448 | 2352 | 2824 |
| 783336 | 2336 | 1560 |
| 781280 | 2336 | 3616 |
| 779224 | 2320 | 296 |
| 777168 | 2320 | 2352 |
| 773056 | 2304 | 1088 |
| 771000 | 2304 | 3144 |
| 766888 | 2288 | 1880 |
| 764832 | 2288 | 3936 |
| 762776 | 2272 | 616 |
| 760720 | 2272 | 2672 |
| 756608 | 2256 | 1408 |
| 754552 | 2256 | 3464 |
| 752496 | 2240 | 144 |
| 750440 | 2240 | 2200 |
| 746328 | 2224 | 936 |
| 744272 | 2224 | 2992 |
| 740160 | 2208 | 1728 |
| 738104 | 2208 | 3784 |
| 736048 | 2192 | 464 |
| 733992 | 2192 | 2520 |
| 729880 | 2176 | 1256 |
| 727824 | 2176 | 3312 |
| 723712 | 2160 | 2048 |
| 721656 | 2160 | 4104 |
| 719600 | 2144 | 784 |

14. The apparatus according to claim 13, wherein d_{scr} = 336 × m.

15. The apparatus according to claim 13 or 14, wherein a bit quantity of the first bit subset is an integer multiple of 16 or 32, the second bit subset comprises 2048 bits, the third bit subset comprises 1504 bits, and the second bit set comprises 4096 bits.

16. The apparatus according to any one of claims 13 to 15, wherein the first bit data comprises r rows and q columns of bits, dᵢₙ=r×q, r is an integer greater than 1, and q=2056 or 10280.

17. The apparatus according to claim 16, wherein the processing unit is specifically configured to:
perform a CRC-32 check on a total of r×q/p bits in every r/p rows of the first bit data, and add 32 check bits, wherein d_{CRC} = 32 × p, r is divisible by p, and p is an integer greater than 1; or
perform a CRC-32 check on a total of q × r₀ bits in every r₀ rows in first r₀ × (p - 1) rows of the first bit data to add 32 check bits, and perform a CRC-32 check on a total of q × r₁ bits in last r₁ rows of the first bit data to add 32 check bits, wherein d_{CRC} = 32 × p, r is not divisible by p, p is an integer greater than 1, r₀ × (p - 1) + r₁ = r, and the integer r₀ is greater than the integer r₁.

18. The apparatus according to claim 17, wherein q=2056, and values of r, m, d_{CP}, p, and r₁ are any group in the following table:
| r | m | d_{CP} | p | r₁ |
|---|---|---|---|---|
| 577 | 3536 | 1784 | 29 | 17 |
| 576 | 3536 | 3840 | 29 | 16 |
| 574 | 3520 | 2576 | 29 | 14 |
| 572 | 3504 | 1312 | 29 | 12 |
| 571 | 3504 | 3368 | 29 | 11 |
| 569 | 3488 | 2104 | 29 | 9 |
| 566 | 3472 | 2896 | 29 | 6 |
| 564 | 3456 | 1632 | 29 | 4 |
| 563 | 3456 | 3688 | 29 | 3 |
| 561 | 3440 | 2424 | 29 | 1 |
| 559 | 3424 | 1160 | 28 | 19 |
| 558 | 3424 | 3216 | 28 | 18 |
| 556 | 3408 | 1952 | 28 | 16 |
| 555 | 3408 | 4008 | 28 | 15 |
| 553 | 3392 | 2744 | 28 | 13 |
| 551 | 3376 | 1480 | 28 | 11 |
| 550 | 3376 | 3536 | 28 | 10 |
| 546 | 3344 | 1008 | 28 | 6 |
| 545 | 3344 | 3064 | 28 | 5 |
| 543 | 3328 | 1800 | 28 | 3 |
| 542 | 3328 | 3856 | 28 | 2 |
| 540 | 3312 | 2592 | 27 | |
| 538 | 3296 | 1328 | 27 | 18 |
| 537 | 3296 | 3384 | 27 | 17 |
| 535 | 3280 | 2120 | 27 | 15 |
| 532 | 3264 | 2912 | 27 | 12 |
| 530 | 3248 | 1648 | 27 | 10 |
| 529 | 3248 | 3704 | 27 | 9 |
| 527 | 3232 | 2440 | 27 | 7 |
| 525 | 3216 | 1176 | 27 | 5 |
| 524 | 3216 | 3232 | 27 | 4 |
| 521 | 3200 | 4024 | 27 | 1 |
| 519 | 3184 | 2760 | 26 | 19 |
| 517 | 3168 | 1496 | 26 | 17 |
| 516 | 3168 | 3552 | 26 | 16 |
| 514 | 3152 | 2288 | 26 | 14 |
| 512 | 3136 | 1024 | 26 | 12 |
| 511 | 3136 | 3080 | 26 | 11 |
| 509 | 3120 | 1816 | 26 | 9 |
| 508 | 3120 | 3872 | 26 | 8 |
| 506 | 3104 | 2608 | 26 | 6 |
| 504 | 3088 | 1344 | 26 | 4 |
| 503 | 3088 | 3400 | 26 | 3 |
| 501 | 3072 | 2136 | 26 | 1 |
| 499 | 3056 | 872 | 25 | 19 |
| 498 | 3056 | 2928 | 25 | 18 |
| 496 | 3040 | 1664 | 25 | 16 |
| 495 | 3040 | 3720 | 25 | 15 |
| 493 | 3024 | 2456 | 25 | 13 |
| 491 | 3008 | 1192 | 25 | 11 |
| 490 | 3008 | 3248 | 25 | 10 |
| 488 | 2992 | 1984 | 25 | 8 |
| 487 | 2992 | 4040 | 25 | 7 |
| 485 | 2976 | 2776 | 25 | 5 |
| 483 | 2960 | 1512 | 25 | 3 |
| 482 | 2960 | 3568 | 25 | 2 |
| 480 | 2944 | 2304 | 24 | |
| 478 | 2928 | 1040 | 24 | 18 |
| 477 | 2928 | 3096 | 24 | 17 |
| 475 | 2912 | 1832 | 24 | 15 |
| 474 | 2912 | 3888 | 24 | 14 |
| 472 | 2896 | 2624 | 24 | 12 |
| 470 | 2880 | 1360 | 24 | 10 |
| 469 | 2880 | 3416 | 24 | 9 |
| 467 | 2864 | 2152 | 24 | 7 |
| 465 | 2848 | 888 | 24 | 5 |
| 464 | 2848 | 2944 | 24 | 4 |
| 462 | 2832 | 1680 | 24 | 2 |
| 461 | 2832 | 3736 | 24 | 1 |
| 459 | 2816 | 2472 | 23 | 19 |
| 457 | 2800 | 1208 | 23 | 17 |
| 456 | 2800 | 3264 | 23 | 16 |
| 454 | 2784 | 2000 | 23 | 14 |
| 453 | 2784 | 4056 | 23 | 13 |
| 452 | 2768 | 736 | 23 | 12 |
| 451 | 2768 | 2792 | 23 | 11 |
| 449 | 2752 | 1528 | 23 | 9 |
| 448 | 2752 | 3584 | 23 | 8 |
| 446 | 2736 | 2320 | 23 | 6 |
| 444 | 2720 | 1056 | 23 | 4 |
| 443 | 2720 | 3112 | 23 | 3 |
| 441 | 2704 | 1848 | 23 | 1 |
| 440 | 2704 | 3904 | 22 | |
| 438 | 2688 | 2640 | 22 | 18 |
| 436 | 2672 | 1376 | 22 | 16 |
| 435 | 2672 | 3432 | 22 | 15 |
| 431 | 2640 | 904 | 22 | 11 |
| 430 | 2640 | 2960 | 22 | 10 |
| 428 | 2624 | 1696 | 22 | 8 |
| 427 | 2624 | 3752 | 22 | 7 |
| 425 | 2608 | 2488 | 22 | 5 |
| 423 | 2592 | 1224 | 22 | 3 |
| 422 | 2592 | 3280 | 22 | 2 |
| 420 | 2576 | 2016 | 21 | |
| 419 | 2576 | 4072 | 21 | 19 |
| 418 | 2560 | 752 | 21 | 18 |
| 417 | 2560 | 2808 | 21 | 17 |
| 415 | 2544 | 1544 | 21 | 15 |
| 414 | 2544 | 3600 | 21 | 14 |
| 412 | 2528 | 2336 | 21 | 12 |
| 410 | 2512 | 1072 | 21 | 10 |
| 409 | 2512 | 3128 | 21 | 9 |
| 407 | 2496 | 1864 | 21 | 7 |
| 406 | 2496 | 3920 | 21 | 6 |
| 404 | 2480 | 2656 | 21 | 4 |
| 402 | 2464 | 1392 | 21 | 2 |
| 401 | 2464 | 3448 | 21 | 1 |
| 399 | 2448 | 2184 | 20 | 19 |
| 397 | 2432 | 920 | 20 | 17 |
| 396 | 2432 | 2976 | 20 | 16 |
| 394 | 2416 | 1712 | 20 | 14 |
| 393 | 2416 | 3768 | 20 | 13 |
| 391 | 2400 | 2504 | 20 | 11 |
| 389 | 2384 | 1240 | 20 | 9 |
| 388 | 2384 | 3296 | 20 | 8 |
| 386 | 2368 | 2032 | 20 | 6 |
| 385 | 2368 | 4088 | 20 | 5 |
| 384 | 2352 | 768 | 20 | 4 |
| 383 | 2352 | 2824 | 20 | 3 |
| 381 | 2336 | 1560 | 20 | 1 |
| 380 | 2336 | 3616 | 19 | |
| 378 | 2320 | 2352 | 19 | 18 |
| 376 | 2304 | 1088 | 19 | 16 |
| 375 | 2304 | 3144 | 19 | 15 |
| 373 | 2288 | 1880 | 19 | 13 |
| 372 | 2288 | 3936 | 19 | 12 |
| 371 | 2272 | 616 | 19 | 11 |
| 370 | 2272 | 2672 | 19 | 10 |
| 368 | 2256 | 1408 | 19 | 8 |
| 367 | 2256 | 3464 | 19 | 7 |
| 365 | 2240 | 2200 | 19 | 5 |
| 363 | 2224 | 936 | 19 | 3 |
| 362 | 2224 | 2992 | 19 | 2 |
| 360 | 2208 | 1728 | 18 | |
| 359 | 2208 | 3784 | 18 | 19 |
| 357 | 2192 | 2520 | 18 | 17 |
| 355 | 2176 | 1256 | 18 | 15 |
| 354 | 2176 | 3312 | 18 | 14 |
| 352 | 2160 | 2048 | 18 | 12 |
| 351 | 2160 | 4104 | 18 | 11 |
| 350 | 2144 | 784 | 18 | 10 |

19. The apparatus according to claim 17, wherein m is an integer multiple of 32, q=2056, and values of r, m, d_{CP}, p, and r₁ are any group in the following table:
| r | m | d_{CP} | p | r₁ |
|---|---|---|---|---|
| 574 | 3520 | 2576 | 29 | 14 |
| 569 | 3488 | 2104 | 29 | 9 |
| 564 | 3456 | 1632 | 29 | 4 |
| 563 | 3456 | 3688 | 29 | 3 |
| 559 | 3424 | 1160 | 28 | 19 |
| 558 | 3424 | 3216 | 28 | 18 |
| 553 | 3392 | 2744 | 28 | 13 |
| 543 | 3328 | 1800 | 28 | 3 |
| 542 | 3328 | 3856 | 28 | 2 |
| 538 | 3296 | 1328 | 27 | 18 |
| 537 | 3296 | 3384 | 27 | 17 |
| 532 | 3264 | 2912 | 27 | 12 |
| 527 | 3232 | 2440 | 27 | 7 |
| 521 | 3200 | 4024 | 27 | 1 |
| 517 | 3168 | 1496 | 26 | 17 |
| 516 | 3168 | 3552 | 26 | 16 |
| 512 | 3136 | 1024 | 26 | 12 |
| 511 | 3136 | 3080 | 26 | 11 |
| 506 | 3104 | 2608 | 26 | 6 |
| 501 | 3072 | 2136 | 26 | 1 |
| 496 | 3040 | 1664 | 25 | 16 |
| 495 | 3040 | 3720 | 25 | 15 |
| 491 | 3008 | 1192 | 25 | 11 |
| 490 | 3008 | 3248 | 25 | 10 |
| 485 | 2976 | 2776 | 25 | 5 |
| 480 | 2944 | 2304 | 24 | |
| 475 | 2912 | 1832 | 24 | 15 |
| 474 | 2912 | 3888 | 24 | 14 |
| 470 | 2880 | 1360 | 24 | 10 |
| 469 | 2880 | 3416 | 24 | 9 |
| 465 | 2848 | 888 | 24 | 5 |
| 464 | 2848 | 2944 | 24 | 4 |
| 459 | 2816 | 2472 | 23 | 19 |
| 454 | 2784 | 2000 | 23 | 14 |
| 453 | 2784 | 4056 | 23 | 13 |
| 449 | 2752 | 1528 | 23 | 9 |
| 448 | 2752 | 3584 | 23 | 8 |
| 444 | 2720 | 1056 | 23 | 4 |
| 443 | 2720 | 3112 | 23 | 3 |
| 438 | 2688 | 2640 | 22 | 18 |
| 428 | 2624 | 1696 | 22 | 8 |
| 427 | 2624 | 3752 | 22 | 7 |
| 423 | 2592 | 1224 | 22 | 3 |
| 422 | 2592 | 3280 | 22 | 2 |
| 418 | 2560 | 752 | 21 | 18 |
| 417 | 2560 | 2808 | 21 | 17 |
| 412 | 2528 | 2336 | 21 | 12 |
| 407 | 2496 | 1864 | 21 | 7 |
| 406 | 2496 | 3920 | 21 | 6 |
| 402 | 2464 | 1392 | 21 | 2 |
| 401 | 2464 | 3448 | 21 | 1 |
| 397 | 2432 | 920 | 20 | 17 |
| 396 | 2432 | 2976 | 20 | 16 |
| 391 | 2400 | 2504 | 20 | 11 |
| 386 | 2368 | 2032 | 20 | 6 |
| 385 | 2368 | 4088 | 20 | 5 |
| 381 | 2336 | 1560 | 20 | 1 |
| 380 | 2336 | 3616 | 19 | |
| 376 | 2304 | 1088 | 19 | 16 |
| 375 | 2304 | 3144 | 19 | 15 |
| 371 | 2272 | 616 | 19 | 11 |
| 370 | 2272 | 2672 | 19 | 10 |
| 365 | 2240 | 2200 | 19 | 5 |
| 360 | 2208 | 1728 | 18 | |
| 359 | 2208 | 3784 | 18 | 19 |
| 355 | 2176 | 1256 | 18 | 15 |
| 354 | 2176 | 3312 | 18 | 14 |
| 350 | 2144 | 784 | 18 | 10 |

20. The apparatus according to claim 17, wherein q=10280, and values of r, m, d_{CP}, p, and r₁ are any group in the following table:
| r | m | d_{CP} | p | r₁ |
|---|---|---|---|---|
| 113 | 3472 | 4952 | 29 | 1 |
| 112 | 3440 | 4480 | 28 | |
| 111 | 3408 | 4008 | 28 | 3 |
| 110 | 3376 | 3536 | 28 | 2 |
| 109 | 3344 | 3064 | 28 | 1 |
| 108 | 3312 | 2592 | 27 | |
| 107 | 3280 | 2120 | 27 | 3 |
| 106 | 3248 | 1648 | 27 | 2 |
| 105 | 3216 | 1176 | 27 | 1 |
| 102 | 3136 | 5136 | 26 | 2 |
| 101 | 3104 | 4664 | 26 | 1 |
| 100 | 3072 | 4192 | 25 | |
| 99 | 3040 | 3720 | 25 | 3 |
| 98 | 3008 | 3248 | 25 | 2 |
| 97 | 2976 | 2776 | 25 | 1 |
| 96 | 2944 | 2304 | 24 | |
| 95 | 2912 | 1832 | 24 | 3 |
| 94 | 2880 | 1360 | 24 | 2 |
| 93 | 2848 | 888 | 24 | 1 |
| 90 | 2768 | 4848 | 23 | 2 |
| 89 | 2736 | 4376 | 23 | 1 |
| 88 | 2704 | 3904 | 22 | |
| 87 | 2672 | 3432 | 22 | 3 |
| 86 | 2640 | 2960 | 22 | 2 |
| 85 | 2608 | 2488 | 22 | 1 |
| 84 | 2576 | 2016 | 21 | |
| 83 | 2544 | 1544 | 21 | 3 |
| 82 | 2512 | 1072 | 21 | 2 |
| 79 | 2432 | 5032 | 20 | 3 |
| 78 | 2400 | 4560 | 20 | 2 |
| 77 | 2368 | 4088 | 20 | 1 |
| 76 | 2336 | 3616 | 19 | |
| 75 | 2304 | 3144 | 19 | 3 |
| 74 | 2272 | 2672 | 19 | 2 |
| 73 | 2240 | 2200 | 19 | 1 |
| 72 | 2208 | 1728 | 18 | |
| 71 | 2176 | 1256 | 18 | 3 |
| 70 | 2144 | 784 | 18 | 2 |

21. The apparatus according to claim 17, wherein m is an integer multiple of 32, q=10280, and values of r, m, d_{CP}, p, and r₁ are any group in the following table:
| r | m | d_{CP} | p | r₁ |
|---|---|---|---|---|
| 102 | 3136 | 5136 | 26 | 2 |
| 101 | 3104 | 4664 | 26 | 1 |
| 100 | 3072 | 4192 | 25 | |
| 99 | 3040 | 3720 | 25 | 3 |
| 98 | 3008 | 3248 | 25 | 2 |
| 97 | 2976 | 2776 | 25 | 1 |
| 96 | 2944 | 2304 | 24 | |
| 95 | 2912 | 1832 | 24 | 3 |
| 94 | 2880 | 1360 | 24 | 2 |
| 93 | 2848 | 888 | 24 | 1 |
| 79 | 2432 | 5032 | 20 | 3 |
| 78 | 2400 | 4560 | 20 | 2 |
| 77 | 2368 | 4088 | 20 | 1 |
| 76 | 2336 | 3616 | 19 | |
| 75 | 2304 | 3144 | 19 | 3 |
| 74 | 2272 | 2672 | 19 | 2 |
| 73 | 2240 | 2200 | 19 | 1 |
| 72 | 2208 | 1728 | 18 | |
| 71 | 2176 | 1256 | 18 | 3 |
| 70 | 2144 | 784 | 18 | 2 |

22. The apparatus according to any one of claims 13 to 21, wherein the third bit subset comprises 1504 bits, the first bit subset comprises m-1504 bits, and the PCS unit is configured to:
divide the first bit subset into 16 sequences, wherein each sequence comprises (m-1504)/16 bits; and
perform PCS sub-processing on the 16 sequences respectively to obtain 16 output sequences corresponding to the 16 sequences, wherein each output sequence comprises 128 bits, and the 16 output sequences form the second bit subset; or
the PCS unit is configured to:
divide the first bit subset into 32 sequences, wherein each sequence comprises (m-1504)/32 bits; and
perform PCS sub-processing on the 32 sequences respectively to obtain 32 output sequences corresponding to the 32 sequences, wherein each output sequence comprises 64 bits, and the 32 output sequences form the second bit subset.

23. The apparatus according to any one of claims 13 to 22, wherein the data processing apparatus further comprises a second processing unit and a digital signal processing DSP framing unit, wherein
the second processing unit is configured to perform symbol mapping and polarization distribution on fourth bit data to obtain a dual-polarization symbol sequence, wherein the symbol mapping and the polarization distribution map 8 bits to one dual-polarization DP-16QAM symbol, and the fourth bit data comprises a plurality of second bit sets; and
the DSP framing unit is configured to perform DSP framing on the dual-polarization symbol sequence to obtain a DSP frame.

24. The apparatus according to claim 23, wherein the DSP framing unit is configured to perform framing processing on every 172032 dual-polarization DP-16QAM symbols to obtain a DSP frame.

25. A chip, wherein the chip comprises a processor, and the processor is configured to perform the method according to any one of claims 1 to 12.

26. An optical module, wherein the optical module comprises a processor and an interface, and the processor is configured to: perform the method according to any one of claims 1 to 12, and send a signal through the interface.

27. The optical module according to claim 26, wherein the processor is configured to: perform data processing on a second bit set to obtain a DSP frame, and send the DSP frame through the interface.

28. The optical module according to claim 26, wherein the optical module further comprises a modulator, the processor is configured to perform data processing on a second bit set to obtain a DSP frame, and the modulator is configured to: perform electrical-to-optical conversion based on the DSP frame to obtain an optical signal, and send the optical signal through the interface.

29. A sending device, wherein the sending device comprises a host side device and the optical module according to any one of claims 26 to 28, and the optical module is configured to: generate an optical signal based on data from the host side device, and send the optical signal.

30. A communication system, comprising the sending device according to claim 29 and a receiving device, wherein the sending device is configured to send an optical signal to the receiving device.
